(19) **Europäisches Patentamt**

**European Patent Office**

**Office européen des brevets**

(11) **EP 1 304 012 B1**

(12) **FASCICULE DE BREVET EUROPEEN**

(45) Date de publication et mention
de la délivrance du brevet:
**19.07.2006 Bulletin 2006/29**

(51) Int Cl.:
*H04Q 7/38* (2006.01)     *H04Q 7/32* (2006.01)

(21) Numéro de dépôt: **00993765.7**

(86) Numéro de dépôt international:
**PCT/FR2000/003704**

(22) Date de dépôt: **27.12.2000**

(87) Numéro de publication internationale:
**WO 2001/050802 (12.07.2001 Gazette 2001/28)**

(54) **PROCEDE D'UTILISATION MULTIPLE D'UN RADIOTELEPHONE, ET SYSTEME, RADIOTELEPHONE, MODULE D'IDENTIFICATION D'ABONNE ET DISPOSITIF DE DETECTION DE PRESENCE CORRESPONDANTS**

VERFAHREN ZUM MEHRFACHEN NUTZEN EINES FUNKTELEPHONS, EIN FUNKTELEFONSYSTEM, ENTSPRECHENDES NUTZERKENNMODUL UND ANWESENHEITSERKENNUNGSGERÄT

METHOD FOR MULTIPLE USE OF A RADIOTELEPHONE, AND RADIOTELEPHONE SYSTEM, CORRESPONDING SUBSCRIBER IDENTIFICATION MODULE AND PRESENCE DETECTING DEVICE

(84) Etats contractants désignés:
**AT BE CH CY DE DK ES FI FR GB GR IE IT LI LU MC NL PT SE TR**

(30) Priorité: **06.01.2000 FR 0000208**
          **26.05.2000 FR 0006866**
          **01.08.2000 FR 0010173**

(43) Date de publication de la demande:
**23.04.2003 Bulletin 2003/17**

(73) Titulaire: **Société Française du Radiotéléphone-SFR**
**75008 Paris (FR)**

(72) Inventeur: **NOBLINS, Gérard**
**F-92400 Courbevoie (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
**EP-A- 1 081 975**          **DE-A- 19 800 967**
**DE-A- 19 914 254**          **DE-C- 19 731 461**
**FR-A- 2 693 863**          **US-A- 5 950 125**

**Description**

0) Avant-propos

Cet avant-propos a pour vocation d'exposer le cheminement de pensée ayant conduit l'inventeur à imaginer les différents procédés revendiqués dans cette demande de brevet. Il est volontairement réducteur de différentes options et variantes au profit, nous l'espérons, de la clarté du discours.

0.1) Une présence sur le marché de l'accès

Les opérateurs historiques, comme France Télécom ou BT, ont développé au cours du siècle passé un réseau filaire très dense permettant d'atteindre chaque foyer et chaque entreprise. Ce réseau terminal est appelé réseau d'accès local ou encore boucle locale. Il est essentiellement constitué de paires de cuivres de 0,5 à 3 kilomètres par abonné. Le coût d'un tel réseau est tel qu'il est impossible à un opérateur nouvel entrant d'investir pour entrer en compétition avec l'opérateur historique sur l'accès local, sauf dans certaines zones très denses en entreprises comme le quartier de La Défense près de Paris. Les opérateurs historiques risquent donc d'être durablement en situation de monopole de fait sur la boucle locale.

Pour remédier à cette situation, les organismes de régulation du marché des télécommunications, comme l'ART en France, envisagent de permettre à des opérateurs nouveaux entrants d'accéder, en location, aux paires de cuivre possédées par l'opérateur historique. Cette location s'appelle le dégroupage, terme qui exprime le fait de partager le réseau de l'opérateur historique en différents composants, chacun pouvant être individuellement loué. Le dégroupage porte donc sur la location de la paire cuivrée.

Le dégroupage n'est pas pour les opérateurs alternatifs une panacée, car pour accéder côté réseau à la paire de cuivre, il faut développer une architecture encore très capillaire. Ainsi pour couvrir la France en utilisant le dégroupage, un opérateur alternatif devrait déployer plus de 10 000 points de présence, ce qui est très coûteux et requiert beaucoup de temps.

Or depuis quelques années de nouvelles infrastructures ont été déployées, fondées sur les réseaux mobiles. Leur couverture leur permet d'atteindre la plupart des foyers et des entreprises. D'où l'idée d'utiliser ces infrastructures cellulaires (GSM, UMTS, etc.) pour offrir aux clients un accès local en substitution de l'accès filaire. La présente invention s'inscrit dans ce contexte.

0.2) Une différence de tarification fixe et mobile

Il existe cependant une difficulté. Les tarifications des services mobiles et des services fixes sont et seront durablement différentes, les premières étant nettement plus élevées que les secondes du fait des investissements importants nécessaires à la construction des réseaux mobiles, GSM d'abord et UMTS ensuite. La solution la plus simple est de réaliser un équipement spécifiquement conçu pour le foyer, c'est le concept de station domestique. Ce procédé est cher parce qu'il requiert un équipement GSM supplémentaire et peu ergonomique car il n'offre pas la continuité d'usage avec le terminal en mobilité. D'où l'idée d'utiliser un unique et même mobile pour les deux usages, en lieu fixe et en mobilité.

Il convient donc pour ce mobile, de pouvoir tarifer différemment les communications considérées comme ressortant de la fonction d'opérateur de boucle locale car issues d'un lieu fixe de celles ressortant de la fonction d'opérateur mobile. En d'autres termes, il faut distinguer les communications depuis et vers un foyer de celles réalisées en situation de mobilité.

0.3) Un fonctionnement fixe et mobile du terminal mobile

D'où l'idée d'un équipement complémentaire, à faible coût et distribué avec le mobile, situé au foyer ou en entreprise, appelé ci-après dispositif de détection de présence. Il permet au mobile, par un dialogue approprié, de reconnaître ce dispositif, d'en déduire le lieu où il se trouve et de changer d'état pour passer en mode local. Ce changement d'état peut prendre différentes modalités décrites dans la présente invention. Une des modalités essentielles est le changement d'identifiant de l'abonné (IMSI pour le GSM) au sein du module d'identification SIM, couplé à un changement de numéro téléphonique passant d'un numéro mobile MSISDN en 06 09 68 à un numéro fixe aussi appelé numéro géographique RTC en 01 42 24 ....

Dans la suite de cette introduction, nous utiliserons le vocabulaire GSM pour simplifier l'exposé. Le corps des revendications est naturellement plus large.

Il convient d'appréhender la portée de ce changement de numéro. Un numéro mobile MSISDN est par définition indépendant d'un lieu donné. A l'inverse, un numéro géographique porte en lui un lieu, une adresse et correspondait jusqu'à récemment à l'extrémité d'une ligne de cuivre. En outre les appels depuis ou vers un numéro mobile ressortent d'une réglementation et de licences différentes de celles des appels réalisés depuis un numéro géographique, notamment en matière de conditions et de tarifs d'interconnexion. En changeant d'IMSI et de type de numéro, le mobile change de réglementation et prend ainsi les attributs d'un terminal fixe ressortant du métier d'opérateur local. L'invention comprend également un changement d'IMSI avec changement de numéro MSISDN sans changement de type de numéro.

Une des conséquences techniques de cette approche par changement d'IMSI et de type de numéro est l'invariance du réseau et des systèmes d'information (SI) au procédé. En effet ceux-ci ne voient successivement que deux terminaux virtuels différents associés à des offres distinctes, l'une fixe et l'autre mobile. Aucune modification structurelle du réseau et des SI n'est requise. Aucune signalisation de localisation n'est nécessaire. Le procédé peut être mis en oeuvre en quelques semaines. Il est également compatible avec le partage, par les deux terminaux virtuels, de services communs notamment la messagerie vocale.

### 0.4) Le dispositif local et son dialogue direct avec une SIM à deux IMSI et deux types de numéros

Une des modalités principales du procédé comprend donc un équipement en lieu fixe, un dialogue entre cet équipement et le mobile et une fonctionnalité de changement d'IMSI localisée au sein de l'unique SIM du mobile. La mise en oeuvre la plus naturelle du dialogue est réalisée par contact entre le dispositif de détection de présence et le terminal mobile. Le mobile est donc en contact, en général posé sur le dispositif de détection de présence, qui peut également servir de socle chargeur. Dès le contact, il bascule en mode fixe, répondant à un numéro géographique.

Un tel usage n'est pas très ergonomique car il est souhaitable que l'utilisateur puisse prendre le mobile en main et l'utiliser de façon habituelle. D'où l'idée de mettre en oeuvre une temporisation qui permet de désolidariser le mobile du dispositif pendant un certain temps, défini par le service marketing de l'opérateur, tout en conservant le mobile dans le mode fixe.

Ce procédé présente cependant deux inconvénients, le premier est de devoir reposer le mobile sur le dispositif au bout d'un certain temps pour conserver le mode fixe. Le second est la spécificité du contact physique entre le mobile et le dispositif de détection de présence, variable avec chaque fournisseur de mobile. Il faut donc développer autant de dispositifs que de types de mobiles.

### 0.5) Un dialogue sans contact direct entre SIM et Dispositif de détection de présence

D'où l'idée de développer un dialogue direct SIM - Dispositif, indépendant du terminal et de sa connectique. Diverses modalités de mise en oeuvre de ce dialogue direct font partie de l'invention notamment d'une part les échanges radio en mode « sans contact » analogues à ceux utilisés pour les lecteurs de badge et d'autre part les échanges radio à moyenne distance. Ces deux procédés supposent l'intégration d'un composant supplémentaire dans la SIM, réalisable avec la technologie actuelle.

Une autre voie est d'utiliser les moyens standardisés, notamment Bluetooth, de dialogue entre les mobiles et leur environnement local, quitte à modifier la norme en cours d'évolution pour y ajouter des profils spécifiques à cet usage. Une dernière voie est d'émuler au sein du dispositif de détection de présence une partie des comportements radio d'une station de base (BTS) permettant au mobile de reconnaître une « pseudo » cellule associée à son domicile.

### 0.6) L'inamovibilité et la mobilité limitée du dispositif de détection de présence

Il faut enfin s'assurer du caractère indéplaçable du dispositif de détection de présence, une fois installé en un lieu. La nature exacte du caractère indéplaçable peut être modulée selon les besoins marketing. Il est souhaitable de pouvoir déplacer le dispositif au sein d'un appartement. Un déplacement local, limité à quelques mètres doit donc pouvoir être toléré. En outre, tout déplacement plus important doit pouvoir être détecté et selon les besoins marketing, accepté ou bloqué.

Le procédé traite aussi du caractère acceptable de certains déplacements importants, par exemple pour les congés ou un séjour dans une maison de campagne. Le nombre maximal de déplacements importants N est défini par le marketing. L'essentiel pour le procédé est de pouvoir détecter ces déplacements.

Le mécanisme anti-déplacement repose sur plusieurs approches technologiques distinctes. La première est de faire fonctionner le dispositif de détection de présence que lorsqu'il est branché au réseau électrique ou téléphonique selon les cas. La seconde approche consiste à utiliser un dispositif inertiel, de type « tilt » détectant un déplacement important. La troisième consiste à utiliser des informations fournies par le réseau mobile, notamment le comptage des cellules traversées.

L'usage concomitant de ces techniques permet de détecter de façon quasi certaine un déplacement du dispositif de détection de présence. Il sera difficile à un fraudeur de le déplacer en simulant une alimentation électrique, en empêchant le dispositif inertiel de fonctionner et en limitant le nombre de cellules perçues par le mobile. Ces trois mécanismes sont réalisables avec la technologie actuelle et à faible coût.

Le procédé repose sur un principe de localisation relative et est ainsi insensible aux reconfigurations du réseau mobile, assez fréquentes. A l'initialisation, le dispositif est attaché à un lieu et il ne peut être déplacé sans une nouvelle initialisation. Il peut fonctionner sans localisation absolue c'est-à-dire sans mettre en jeu des échanges permanents avec le réseau et sans des calculs temps réel de localisation absolue et précise du mobile. C'est un avantage important du procédé en regard des autres modes de localisation actuellement développés notamment d'une part le GPS qui nécessite des terminaux spécifiques, requiert de nombreux calculs et ne fonctionne pas à l'intérieur des bâtiments et d'autre part la localisation fondée sur les coordonnées géographiques des stations de base (BTS) peu précise en région très dense ou très peu dense et très sensible à toute reconfiguration du réseau, notamment l'ajout de nouvelles stations de base.

### 1) Domaine de l'invention

Le domaine de l'invention est celui des systèmes de radiocommunication. Plus précisément, l'invention concerne l'utilisation des stations mobiles au sein de tels systèmes. Dans la suite de la description, les stations mobiles sont aussi appelées radiotéléphones, ou plus simplement stations.

L'invention s'applique à tout type de système de radiocommunication, notamment, mais non exclusivement, selon le standard GSM (pour "Global System for Mobile communications" en anglais), DCS 1800 (pour "Digital Cellular System 1800 MHz" en anglais), PCS 1900 (pour "Personal Communication System" en anglais), DECT (pour "Digital European Cordless Telecommunications") en anglais, ou encore UMTS (pour "Universal Mobile Telecommunication System" en anglais).

De façon classique, dans la plupart des systèmes de radiocommunication, un radiotéléphone (ou MS, pour "Mobile Station" selon la terminologie GSM) comprend un terminal (ou ME, pour "Mobile Equipment" selon la terminologie GSM) coopérant avec un module d'identification d'abonné (ou carte SIM, pour "Subscriber Identity Module" selon la terminologie GSM, ou encore DAM, pour "DECT Authentication Module" selon la terminologie DECT). De façon alternative, le radiotéléphone est parfois composé du seul terminal, et ne comprend donc pas de module d'identification d'abonné. D'une façon générale, la présente invention s'applique quel que soit le type de radiotéléphone (avec ou sans module d'identification d'abonné).

Classiquement, on distingue les deux types de téléphonie suivants : la téléphonie fixe, sur le réseau téléphonique commuté publique (RTC), et la téléphonie mobile, sur les réseaux de radiocommunication (par exemple cellulaire). Ainsi, concernant la téléphonie mobile, il y a actuellement en France trois opérateurs de radiocommunication cellulaire (SFR, France Telecom et Bouygues Telecom) possédant chacun un réseau de type GSM.

### 2) Etat de la technique

En général, l'usager dispose de plusieurs postes téléphoniques, à savoir au moins un poste fixe (filaire ou sans fil), pour accéder au RTC, et au moins un poste mobile (ou radiotéléphone, ou station), pour accéder à un réseau de radiocommunication. Chaque type de poste (fixe ou mobile) est associé à des services, des droits et un mode de facturation distincts. Notamment, la facturation est actuellement généralement plus élevée sur le réseau de radiocommunication que sur le RTC. L'usager est donc incité à utiliser en priorité un poste fixe (à son domicile, sur son lieu de travail, etc) et à limiter l'utilisation d'un poste mobile aux seuls cas de déplacement géographique de l'usager.

Cette multiplication du nombre de postes téléphoniques est un inconvénient majeur, de moins en moins accepté par les usagers.

Pour pallier cet inconvénient majeur, une première solution connue a été adoptée par certains usagers, qui ont décidé de se passer de l'accès au RTC. Ils n'utilisent donc qu'un seul poste téléphonique (à savoir un poste mobile), quel que soit l'endroit où ils se trouvent. Le problème de cette première solution connue est que les usagers ne bénéficient alors jamais de certains avantages (tarifaires notamment) qu'offre le RTC par rapport au réseau de radiocommunication.

Une seconde solution connue consiste à fournir à l'usager un poste téléphonique bi-mode, pouvant fonctionner soit comme un poste fixe sans fil, lorsqu'il coopère avec une base reliée au RTC, soit comme un poste mobile, lorsqu'il ne coopère pas avec la base. L'inconvénient de cette seconde solution connue est la complexité, le coût élevé du poste téléphonique bi-mode et l'usage de deux réseaux différents, le réseau radiotéléphonique et le RTC. avec des services non intégrés. En effet, ce dernier intègre à la fois les composants d'un poste fixe sans fil (par exemple selon la norme DECT (Digital European Cordless Telecommunications) et ceux d'un poste mobile (par exemple selon la norme GSM).

On connaît également, à travers le document de brevet DE 197 31 461 (SIEMENS), un procédé ayant pour objet la tarification spécifique des appels sortants d'un mobile en fonction de la présence du mobile dans une zone radio définie par des données issues du réseau radio, essentiellement la cellule ou des ensembles de cellules. Or la notion de cellule, et a fortiori celle d'agrégat de cellules, est trop grande et sa portée est trop variable. A un endroit donné, un mobile n'est pas dans une cellule donnée, mais capte plusieurs cellules (entre 1 et 20) et se cale sur la cellule disponible la plus puissante. De plus, la portée des cellules n'est pas stable dans le temps. En un lieu donné, un mobile peut se connecter un jour avec une cellule, et ne pas même la voir le lendemain. Par ailleurs, ce document ne prévoit pas pour le mobile plusieurs états de fonctionnement différents, dépendant chacun d'un paramètre d'état distinct. Il ne prévoit donc pas un basculement d'état, mais seulement un passage à un tarif correspondant à la zone courante, à chaque fois que le mobile change de zone. Enfin, ce document met en évidence la nécessité d'un échange, constitutif du fonctionnement, entre le réseau et le mobile afin que ceux-ci partagent les mêmes informations de zone.

3) Objectifs de l'invention

L'invention a notamment pour objectif de pallier ces différents inconvénients de l'état de la technique.

Plus précisément, l'un des objectifs de la présente invention est de fournir une technique permettant à un usager d'utiliser à tout instant, et quel que soit le lieu où il se trouve, le même radiotéléphone.

L'invention a également pour objectif de fournir une telle technique permettant à un opérateur d'un réseau de radiocommunication d'appliquer différentes tarifications, de fournir différents services, d'accorder différents droits, etc, selon l'endroit d'où appelle l'usager avec son radiotéléphone.

Un autre objectif de l'invention est de fournir une telle technique qui soit simple à mettre en oeuvre et peu coûteuse.

Un objectif complémentaire de l'invention est de fournir une telle technique qui ne nécessite que de faibles modifications des matériels existants.

4) Résumé des caractéristiques essentielles de l'invention

Ces différents objectifs, ainsi que d'autres qui apparaîtront par la suite, sont atteints selon l'invention à l'aide d'un procédé permettant un usage multiple d'un radiotéléphone, aussi appelé station, du type compris dans un système de radiocommunication. Selon la présente invention, ladite station peut prendre au moins les deux états de fonctionnement suivants, définis chacun par au moins un paramètre d'état distinct : un état dit "station mobile", associé à une situation de mobilité géographique de ladite station, et un état dit "station fixe", associé à une situation de fixité géographique de ladite station à l'intérieur d'un lieu fixe prédéterminé, étroitement délimité spatialement. Ledit procédé comprend: - au moins une étape de basculement d'état de ladite station, de façon automatique et/ou sur commande d'un usager, en fonction de la position géographique de ladite station ; - au moins une étape de comparaison de la position de ladite station par rapport audit lieu fixe prédéterminé, de façon à déclencher ou valider ladite au moins une étape de basculement d'état, si ladite station passe effectivement de l'intérieur vers l'extérieur dudit lieu fixe prédéterminé, ou inversement.

Le principe général de l'invention consiste donc à prévoir (au moins) deux états de fonctionnement - à savoir les états "station mobile" et "station fixe" - d'une même station (ou radiotéléphone), ainsi qu'un mécanisme de basculement entre ces deux états. L'état "station mobile", qui permet une utilisation de la station en comportement nomade, correspond à l'état habituellement permanent de tout radiotéléphone. La station bascule de l'état "station mobile" vers l'état "station fixe" lorsqu'elle entre dans un périmètre très localisé, correspondant essentiellement à un lieu d'habitudes sédentaires de l'usager.

Le lieu fixe prédéterminé est avantageusement constitué par un espace d'environ 50 m, et préférentiellement de moins de 20 m. Il appartient préférentiellement au groupe comprenant : des positions géographiques précises, des lieux d'habitation domestiques, des lieux de travail, des lieux de présence temporaire, des résidences secondaires, des commerces de détails, etc. Il est clair cependant que d'autres types d'utilisations "sédentaires" de la station à l'état de "station fixe" peuvent être envisagés, sans sortir du cadre de la présente invention.

Au vu de ces délimitations quantitative et qualitative respectivement du lieu fixe prédéterminé, on comprend, par analogie, que la situation de fixité géographique de la station à l'intérieur du lieu fixe prédéterminé est comparable à la situation de fixité géographique d'un poste téléphonique fixe (relié au RTC). En effet, ce dernier ne peut lui aussi être déplacé qu'à l'intérieur d'un "lieu fixe prédéterminé", étroitement délimité spatialement par la longueur du câble reliant le poste fixe à une prise téléphonique (dans le cas d'un poste fixe filaire) ou par la portée de la liaison entre le poste fixe et la base (dans le cas d'un poste fixe sans fil).

Il est important de noter que le lieu fixe prédéterminé n'est pas une cellule géographique supplémentaire du réseau de radiocommunication. En outre, dans le cadre de la présente invention, la station fonctionne toujours, quel que soit son état courant (mobile ou fixe), au sein d'un système de téléphonie mobile (c'est-à-dire uniquement sur un réseau de radiocommunication, et jamais sur le RTC). La présente invention ne vise donc en aucune façon à fournir un mobile bi-mode, fonctionnant soit sur un réseau de radiocommunication, soit sur le RTC.

L'intérêt majeur de la présente invention est que chaque état de fonctionnement peut être associé à un certain nombre d'attributs qui lui sont propres. Afin de faciliter l'utilisation de la station dans ses différents états, on peut prévoir des attributs communs aux deux états de fonctionnement. Une liste non-exhaustive d'attributs est donnée dans la suite de la description.

La présente invention présente pour l'opérateur, les avantages suivants :

- des revenus supplémentaires associés à la réduction de l'attrition ("churn") et à la cannibalisation du trafic fixe par des opérateurs de téléphonie fixe ;
- une distinction maintenue entre tarification mobile et fixe, permettant de maintenir plus élevés les tarifs entrants et sortants en mobilité ;
- un positionnement sur l'accès et les revenus associés, en concurrence avec les opérateurs filaires historiques ;
- un très fort argument commercial, lié à un guichet unique fixe et mobile ;
- un coût de production faible par l'absence d'impact réseau majeur.

L'impact sur le réseau de radiocommunication (GSM, UMTS ou autre) et les systèmes d'information, hors la tarification du service, est quasiment nul. Seuls les modules d'identification d'abonnés doivent être programmés de façon spécifique. Les modifications sont suffisamment limitées pour envisager un déploiement sur la plupart des stations mobiles vendues.

Lors de l'étape de comparaison de la position de la station par rapport au lieu fixe prédéterminé, on effectue une opération de détection de présence de la station à l'intérieur du lieu fixe prédéterminé.

Dans un mode de réalisation préférentiel, cette opération de détection de présence est réalisée par mise en contact et/ou quasi-contact de ladite station avec au moins un dispositif de détection de présence de ladite station à l'intérieur dudit lieu fixe prédéterminé. La position géographique et l'étendue dudit lieu fixe prédéterminé sont définies respectivement par la position géographique dudit au moins un dispositif de détection de présence et la portée dudit contact et/ou quasi-contact entre ledit au moins un dispositif de détection de présence et ladite station.

Par "contact" entre la station et le dispositif de détection de présence, on entend un contact physique, de type électrique, électronique, mécanique (ou une combinaison de plusieurs de ces types). Par "quasi-contact", on entend tous types de connexion de proximité, sans contact physique.

Avantageusement (dans le cas où ladite station comprend un terminal et un module d'identification d'abonné), pour mettre en oeuvre au moins en partie ladite étape de basculement d'état, ledit terminal et/ou ledit module d'identification d'abonné comprend une fonctionnalité de sélection de l'un desdits deux paramètres d'état distincts, de façon à définir un état de fonctionnement courant, parmi lesdits états "station mobile" et "station fixe".

De cette façon, c'est dans la station, et préférentiellement dans le module d'identification d'abonné, qu'est effectuée l'étape de basculement d'état. Il est cependant que la présente invention englobe également le cas où l'étape de basculement d'état est effectuée (en temps réel ou différé) dans un équipement approprié du réseau de radiocommunication.

La station peut avantageusement comprendre une fonctionnalité de renvoi d'appels entrants, consistant à renvoyer, vers la station dans son état de fonctionnement courant, des appels entrants destinés à ladite station lorsqu'elle se trouve dans un desdits états de fonctionnement qui n'est pas ledit état de fonctionnement courant. Cette fonctionnalité permet d'établir, de façon transparente pour les appelants, une passerelle entre la station dans l'état "station mobile" et la station dans l'état "station fixe".

Dans un mode de réalisation avantageux de l'invention, ladite station ne passe pas directement de l'état "station fixe" à l'état "station mobile", mais passe par un état intermédiaire, dit état "station fixe logique", dans lequel ladite station continue de fonctionner, jusqu'à la réalisation d'au moins un événement prédéterminé, comme dans ledit état "station fixe", bien que des conditions de basculement de l'état "station fixe" vers l'état "station mobile" soient vérifiées.

Ainsi, l'état "station fixe logique", qui est un troisième état de fonctionnement, est une rémanence temporaire de l'état "station fixe". Il est particulièrement intéressant dans le cas où la détection de présence de la station (permettant le basculement dans l'état "station fixe") est assurée par une mise en contact physique et/ou quasi-contact courte distance. En effet, dans ce cas, l'état "station fixe logique" permet un usage ergonomique et "sans fil" de la station lorsqu'elle se trouve à l'intérieur du lieu fixe prédéterminé, bien qu'elle fonctionne avec tous les attributs de l'état "station fixe" (notamment par exemple un mode de facturation moins coûteux).

Dans un mode de réalisation particulier de l'invention, ledit état "station mobile" est désactivé et remplacé par un état "station hors service", de façon que ladite station peut prendre soit ledit état "station fixe", soit ledit état "station hors service".

Dans ce cas, de façon préférentielle, ledit groupe de couples de paramètres d'état distincts comprend en outre les couples suivants :

- un numéro mobile et un paramètre d'état "hors service" ;
- un numéro fixe et un paramètre d'état "hors service" ;
- un IMSI et un paramètre d'état "hors service".

Préférentiellement (dans le cas où ladite station comprend un terminal et un module d'identification d'abonné), ladite mise en contact et/ou quasi-contact de ladite station avec ledit dispositif de détection de présence est réalisée par une mise en contact et/ou quasi-contact dudit module d'identification d'abonné avec ledit dispositif de détection de présence, de façon à permettre un dialogue entre ledit dispositif de détection de présence, ledit module d'identification d'abonné et ledit terminal.

De cette façon, le terminal n'a pas à être modifié puisqu'il n'intervient pas dans la mise en contact et/ou quasi-contact entre la station et le dispositif de détection de présence.

Avantageusement, ledit dialogue entre ledit terminal, ledit module d'identification d'abonné et ledit dispositif de détection de présence permet d'effectuer ladite opération de détection de présence de ladite station à l'intérieur dudit lieu fixe prédéterminé et en outre au moins une fonction supplémentaire.

Il est important de noter que la ou les fonctions supplémentaires peuvent être indépendantes du terminal, puisque le module d'identification d'abonné peut dialoguer directement avec le dispositif de détection de présence (grâce à la mise en contact et/ou quasi-contact). De nombreuses fonctions supplémentaires, quel qu'en soit l'objet, peuvent être envisagées sans sortir du cadre de l'invention, telles que notamment, mais non exclusivement, des fonctions d'identification, d'authentification, de paiement, de rechargement de répertoire carte SIM depuis un micro-ordinateur connecté au dispositif de détection de présence, etc.

Dans un mode de réalisation particulier, le procédé comprend une étape de fixation irréversible dudit dispositif de détection de présence sur un support immobilier et inamovible, de façon à interdire tout déplacement dudit dispositif de détection de présence.

De cette façon, on évite que le dispositif de détection de présence soit "embarqué" et déplacé librement avec la station, et donc qu'un usager maintienne frauduleusement l'état "station fixe". On rappelle en effet que c'est le dispositif de détection de présence, par sa présence même, qui définit la position géographique du lieu fixe prédéterminé. En outre, c'est la portée du contact et/ou quasi-contact entre ce dispositif et la station qui définit l'étendue du lieu fixe prédéterminé. Par conséquent, si un fraudeur pouvait déplacer librement le dispositif de détection de présence, tout en maintenant la mise en contact et/ou quasi-contact de ce dernier avec la station, alors il déplacerait également le lieu fixe prédéterminé, ce qui bien sûr n'est pas acceptable.

Selon une variante avantageuse, le procédé selon l'invention comprend une étape de limitation des déplacements dudit dispositif de détection de présence, comprenant elle-même les étapes suivantes :

- initialisation dudit dispositif de détection de présence ;
- comptage du nombre N de déplacement(s) dudit dispositif de détection de présence, dudit lieu fixe prédéterminé vers un autre lieu fixe prédéterminé, par un usager ;
- lorsque ledit nombre N de déplacement(s) devient supérieur à un nombre $N_{max}$ maximal de déplacement(s) prédéterminé ou défini de façon adaptative, avec $N_{max} \geq 0$, déclenchement d'une procédure interdisant le fonctionnement dans ledit état "station fixe" et/ou envoyant une alarme à un système de gestion et/ou informant l'usager dudit dépassement.

Là encore, il s'agit d'éviter que le dispositif de détection de présence soit "embarqué" et déplacé librement avec la station. Il est à noter que c'est seulement dans le cas où $N_{max} = 0$ que l'on interdit tout déplacement du dispositif de détection de présence. Dans les autres cas, c'est-à-dire si $N_{max} \geq 1$, le dispositif de détection de présence peut être déplacé (une ou plusieurs fois) d'un lieu fixe à un autre. Une fois ce(s) déplacement(s) effectué(s), il est clair que le dispositif de détection de présence doit rester résident au nouvel endroit où il vient d'être placé et ne doit pas être "embarqué" et déplacé librement avec la station.

Plusieurs variantes de réalisation de cette étape de limitation des déplacements du dispositif de détection de présence sont décrites en détail dans la suite de la description. Il est clair que plusieurs de ces variantes peuvent être utilisées de façon cumulées, de façon à réduire le risque de fraude.

Dans un mode de réalisation particulier de l'invention, après ladite mise en contact et/ou quasi-contact de ladite station avec ledit dispositif de détection de présence, ledit procédé comprend les étapes suivantes :

- désactivation d'au moins une fonctionnalité (haut-parleur, microphone, moyens de réception des appel, ...) de ladite station, et
- couplage, via ledit dispositif de détection de présence, de l'usage de ladite station avec l'usage d'un équipement fixe offrant au moins ladite au moins une fonctionnalité désactivée,

de sorte que dans ledit état "station fixe", ladite station ne puisse être utilisée qu'avec ledit équipement fixe.

Ainsi, dans l'état "station fixe", on désactive au moins partiellement la station afin d'imposer l'utilisation d'un équipement fixe. Cette technique permet donc d'éviter que le dispositif de détection de présence soit "embarqué" et déplacé librement avec la station, et donc qu'un usager maintienne frauduleusement l'état "station fixe". Elle peut donc être utilisée seule ou en combinaison avec une (ou plusieurs) des variantes de réalisation de la technique précitée (étape de limitation des déplacements du dispositif de détection de présence) visant le même objectif.

Dans le cas où un branchement sur le réseau téléphonique ou le réseau électrique est utilisé pour détecter les déplacements, de façon avantageuse, une seconde temporisation permet le maintien du fonctionnement dudit dispositif de détection de présence, pendant une seconde durée prédéterminée après qu'il a été débranché d'un réseau électrique et/ou d'un réseau téléphonique, de façon à autoriser des interruptions de branchement d'une durée inférieure ou égale à ladite seconde durée. Ceci permet notamment de prendre en compte des ruptures d'alimentation (pannes de courant).

Avantageusement, ledit dispositif de détection de présence assure en outre une fonction de socle chargeur, permettant de recharger une batterie comprise dans ladite station, lorsque ladite station est mise en contact et/ou quasi-contact avec ledit dispositif de détection de présence.

Dans un mode de réalisation avantageux de l'invention, ledit au moins un dispositif de détection de présence peut être mis en contact et/ou quasi-contact, éventuellement de façon simultanée, avec au moins deux stations, de façon à permettre la détection de la présence de chacune desdites au moins deux stations à l'intérieur dudit lieu fixe prédéterminé. Dans ce cas, préférentiellement, ledit lieu fixe prédéterminé est constitué par un espace de quelques centaines de mètres.

Ce dispositif commun de détection de présence est par exemple utilisé par plusieurs membres d'un même foyer. Ainsi, lorsqu'ils rentrent chez eux, ces derniers mettent chacun leur station en contact et/ou quasi-contact avec le même dispositif de détection de présence.

Encore une autre application de ce dispositif commun de détection de présence consiste à l'utiliser comme une balise de localisation, destinée à coopérer (par mise en quasi-contact avec une portée préférentiellement de quelques centaines de mètres) avec une pluralité de stations. Le lieu fixe est par exemple un campus universitaire et la pluralité de stations est détenue par des étudiants et des professeurs présents sur ce campus.

Préférentiellement, ledit au moins un dispositif de détection de présence et ladite station mettent en oeuvre des mécanismes d'identification et/ou d'authentification unilatéraux ou mutuels. De cette façon, on réduit les risques de fraude.

Dans un mode de réalisation particulier de l'invention, après la mise en contact et/ou quasi-contact de la station avec le dispositif de détection de présence, ledit procédé comprend une étape de téléchargement depuis le dispositif de détection de présence vers la station, de façon sécurisée, d'un identifiant réseau temporaire de la station, et éventuellement d'au moins un attribut associé, de façon que la station fonctionne, uniquement durant le temps de ladite mise en contact et/ou quasi-contact, dans ledit état "station fixe" et avec l'identifiant réseau temporaire téléchargé, et éventuellement ledit au moins un attribut associé.

Ainsi, l'usager présent dans un lieu fixe utilise de façon temporaire un identifiant réseau qui lui est affecté, via un téléchargement, par le tenancier de ce lieu fixe.

Dans un mode de réalisation avantageux de l'invention, durant leur mise en contact et/ou quasi-contact, la station et le dispositif de détection de présence constituent ensemble un relais, pour au moins un équipement doté d'une fonction téléphonique et connecté audit dispositif de détection de présence, vers le réseau de radiocommunication auquel est reliée la station.

Le ou les équipements avec fonction téléphonique bénéficiant de ce relais vers le réseau de radiocommunication sont par exemple des postes téléphoniques, des répondeurs, des répondeurs-enregistreurs, des PC, etc. Ils sont connectés au dispositif de détection de présence soit par câble (technologie filaire classique), soit par voie radio (technologie sans fil, selon la norme DECT par exemple). Un même dispositif de détection de présence peut être pourvu de plusieurs types d'interfaces, de façon à pouvoir être connecté à différents types d'équipements et selon différentes natures de connexions.

L'invention concerne également un système permettant un usage multiple d'un radiotéléphone, ainsi que plusieurs éléments pris indépendamment (un radiotéléphone, un module d'identification d'abonné et un dispositif de détection de présence), en ce qu'ils comprennent des moyens spécifiques permettant la mise en oeuvre du procédé précité.

5) Liste des figures

D'autres caractéristiques et avantages de l'invention apparaîtront à la lecture de la description suivante de plusieurs modes de réalisation préférentiels de l'invention, donnés à titre d'exemples indicatifs et non limitatifs, et des dessins annexés, dans lesquels :

- la figure 1 présente un schéma simplifié partiel d'un système de radiocommunication au sein duquel peut être mis en oeuvre le procédé selon la présente invention ;
- la figure 2 illustre un mode de réalisation particulier de l'opération de détection de présence de la station à l'intérieur du lieu fixe prédéterminé, basé sur l'utilisation d'un dispositif de détection de présence ;
- les figures 3 et 4 présentent chacune un diagramme d'états de la station, dans un premier et un second mode de réalisation de l'invention respectivement ;

- les figures 5, 6 et 7 illustrent trois variantes du dispositif de détection de présence apparaissant sur la figure 2 ;
- les figures 8 et 9 illustrent chacune un mode de réalisation particulier d'une mise en quasi-contact d'un dispositif de détection de présence avec un module d'identification d'abonné ;
- la figure 10 illustre la mise en oeuvre d'une fonction supplémentaire à travers un dialogue entre module d'identification d'abonné et dispositif de détection de présence ;
- la figure 11 présente un organigramme simplifié d'un mode de réalisation particulier d'une étape de limitation des déplacements du dispositif de détection de présence ;
- la figure 12 illustre un mode de réalisation particulier d'une désactivation de fonctionnalité(s) de la station, afin de forcer l'utilisation d'un équipement fixe, connecté au dispositif de détection de présence ;
- la figure 13 illustre une variante de réalisation de l'invention, dans laquelle plusieurs stations peuvent être mises simultanément en contact et/ou quasi-contact avec un même dispositif de détection de présence ;
- les figures 14 et 15 illustrent chacune une variante de réalisation de l'immobilisation du dispositif de détection de présence ;
- la figure 16 présente un diagramme d'état du dispositif de détection de présence dans le cas où la variante de réalisation illustrée sur la figure 15 est mise en oeuvre avec une pile amovible.

6) Description de modes de réalisation particuliers de l'invention

6.1) Rappel du contexte

L'invention concerne donc un procédé et un système permettant un usage multiple d'un radiotéléphone au sein d'un réseau de radiocommunication. Dans ce qui suit, le radiotéléphone est aussi appelé "station" (à ne pas confondre avec une "station de base (BTS)", telle que décrite ci-après).

Dans la suite de la description, on suppose que la station comprend un terminal coopérant avec un module d'identification d'abonné, dans la suite de la description, le module d'identification d'abonné est appelé carte SIM (terminologie GSM), sans toutefois que cela signifie que l'invention est limitée à ce type particulier de module d'identification d'abonné.

Il est clair par ailleurs que l'invention s'applique également à une station ne comprenant pas de module d'identification d'abonné. Le terminal assure dans ce cas les fonctionnalités qui, dans la suite de la description, sont décrites comme étant assurées par le module d'identification d'abonné.

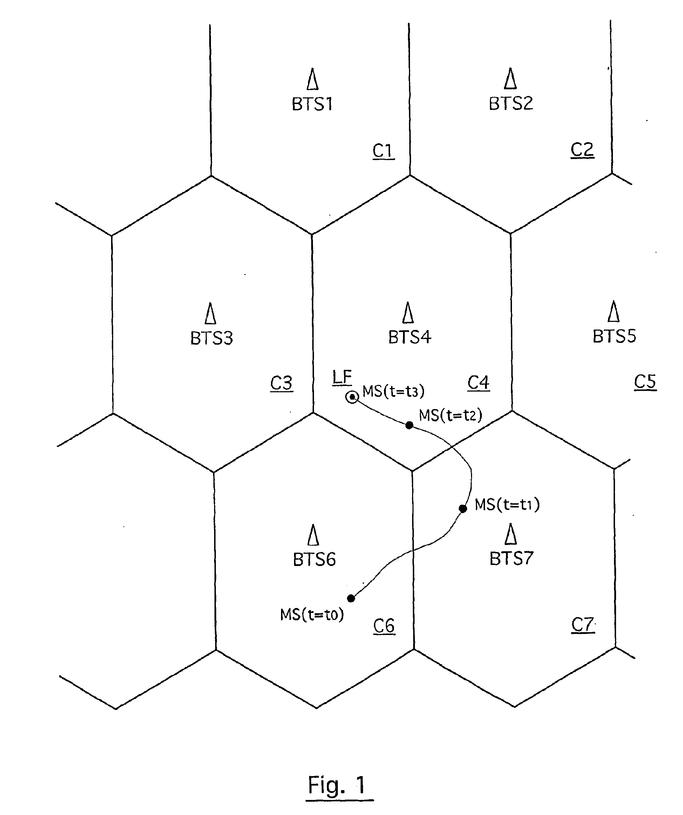

De façon classique, dans un système de radiocommunication (selon le standard GSM par exemple), chaque abonné est pourvu d'une station, dite station mobile, lui permettant d'émettre ou de recevoir des appels tout en se déplaçant dans une espace géographique prédéterminé. Comme illustré sur le schéma simplifié de la figure 1, cet espace d'évolution des stations mobiles est décomposé en un réseau de cellules géographiques adjacentes C1, C2, C3, etc. A chaque cellule est associée une station de base émettrice/réceptrice distincte (ou BTS dans le standard GSM), BTS1, BTS2, BTS3, etc.

Il est à noter que le schéma 1 est simplifié car en réalité les cellules géographiques se chevauchent. Un endroit est donc couvert par plusieurs cellules (typiquement 6 à 8 à Paris), et l'une d'entre elles, dite cellule principale, traite la plupart des appels. Si cette cellule principale est saturée, la station mobile "accroche" une cellule voisine. Ainsi, dans l'exemple illustré sur la figure 1, la station mobile MS accroche la cellule C6 à l'instant $t_0$, puis accroche successivement les cellules C7 (à l'instant $t_1$) et C4 (à l'instant $t_2$).

Les stations de base sont reliées à des contrôleurs de stations de base (ou BSC dans le standard GSM), eux-mêmes reliés à des commutateurs du service mobile (ou MSC dans le standard GSM), permettant l'interconnexion du système de radiocommunication avec le réseau téléphonique commuté public (RTCP). Le système de radiocommunication est parfois aussi appelé réseau de radiocommunication, par abus de langage.

De façon classique, une station (ou radiotéléphone) fonctionne donc toujours dans le même état, que l'on peut qualifier d'état "station mobile", puisqu'il est associé à une situation de mobilité géographique de la station au sein du réseau de cellules géographiques.

6.2) Concept général de l'invention : double état "station fixe" et "station mobile"

Dans un premier mode de réalisation de la présente invention, la station peut en outre prendre un autre état, à savoir l'état "station fixe". Chaque état ("station mobile" ou "station fixe") est défini par un (ou plusieurs) paramètre(s) d'état distinct(s).

L'état "station fixe", qui n'existe pas dans les systèmes de radiocommunication actuels, est associé à une situation de fixité géographique de la station à l'intérieur d'un lieu fixe prédéterminé.

Pour gérer l'état de fonctionnement de la station, le procédé selon l'invention comprend :

- au moins une étape de basculement d'état de la station, de façon automatique et/ou sur commande d'un usager, en fonction de la position géographique de ladite station ;
- au moins une étape de comparaison de la position de la station par rapport au lieu fixe prédéterminé, de façon à déclencher ou valider, en temps réel ou a posteriori, l'étape de basculement d'état, si la station passe effectivement de l'intérieur vers l'extérieur dudit lieu fixe prédéterminé, ou inversement.

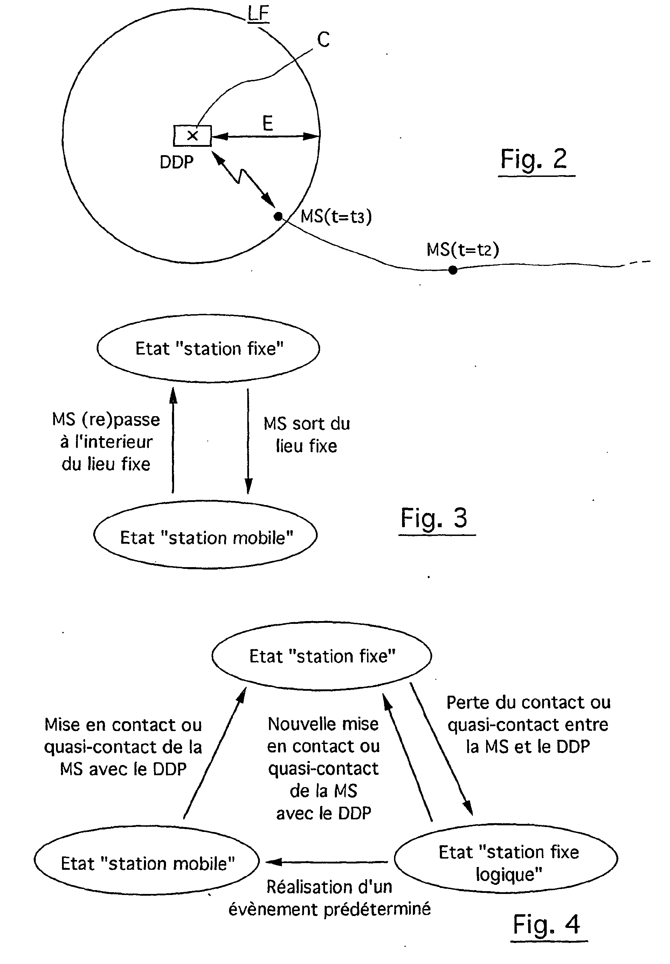

Un diagramme d'états de la station, correspondant à ce premier mode de réalisation de l'invention, est présenté sur la figure 3. La station MS bascule de l'état "station mobile" vers l'état "station fixe" si elle (re)passe à l'intérieur du lieu fixe LF. Inversement, elle bascule de l'état "station fixe" vers l'état "station mobile" si elle sort du lieu fixe.

6.3) Attributs des états

On associe chaque état de fonctionnement à un certain nombre d'attributs qui lui sont propres. Optionnellement, on peut prévoir des attributs communs aux deux états de fonctionnement. D'une façon générale, toutes les combinaisons possibles d'attributs propres et communs peuvent être envisagées, notamment à partir des attributs suivants (liste non-exhaustive) :

- des modes de facturation pour les appels entrants ;
- des modes de facturation pour les appels sortants ;
- des numéros de téléphone ;
- des droits à l'itinérance ;
- des droits aux appels internationaux ;
- des fonctionnalités et/ou services à valeur ajoutée (annuaire, services de contenu WAP, etc) ;
- des fonctionnalités et/ou services d'accès à Internet via le réseau de radiocommunication auquel est reliée la station ;
- des fonctionnalités et/ou services d'accès à des services de données et/ou de télécopie ;
- des fonctionnalités et/ou services de messagerie vocale ;
- des fonctionnalités et/ou services de renvoi ;
- des fonctionnalités et/ou services de répertoire ;
- des fonctionnalités et/ou services d'annuaires ;
- etc.

On peut par exemple confier à un service marketing de l'opérateur du réseau de radiocommunication le soin de choisir quels attributs doivent être propres à chaque état, et quels sont ceux qui doivent être communs aux deux états. Ce choix peut par exemple consister à affecter à l'état "station fixe" les mêmes attributs que ceux affectés de façon classique par l'opérateur du RTC à un poste téléphonique fixe (filaire ou sans fil) relié au RTC. Ainsi, dans ce cas particulier, l'usager bénéficie, lorsqu'il utilise la station dans l'état "station fixe", de tous les avantages (tarifaires notamment) qu'offre habituellement le RTC par rapport au réseau de radiocommunication. Grâce à l'invention, l'usager n'a donc plus de raison de cumuler un poste téléphonique fixe et un poste téléphonique mobile (radiotéléphone), et peut se contenter du seul radiotéléphone. En d'autres termes, l'invention permet une continuité d'usage de la station dans le lieu fixe prédéterminé (par exemple le foyer) comme en mobilité. Plus généralement, l'opérateur du réseau de radiocommunication peut choisir de multiples façons les attributs propres à chaque état, éventuellement selon des besoins exprimés par l'usager.

6.4) Exemple de politique de facturation fonction des états de fonctionnement

Le tableau ci-dessous donne un exemple de politique de facturation, fonction des états de fonctionnement et des types d'appels (entrants ou sortants).

| | appel entrant vers numéro mobile | appel entrant vers numéro fixe | appel sortant depuis numéro mobile | appel sortant depuis numéro fixe |
|---|---|---|---|---|
| état "station fixe" | renvoi gratuit sur numéro fixe | tarification fixe payée par l'appelant | sans objet (appel bloqué par la station) | tarification fixe payée par l'appelant |
| état "station mobile" | tarification mobile | renvoi optionnel à la charge de l'appelé | tarification mobile | sans objet (appel bloqué par la station) |

6.5) L'étape de basculement d'état

L'étape de basculement d'état est fondée sur un changement de paramètres dans la carte SIM et/ou dans le terminal, grâce à la mise en oeuvre par celle-ci et/ou celui-ci d'une fonctionnalité de sélection de l'un des deux paramètres d'état distincts. Le paramètre d'état sélectionné (état "station mobile" ou état "station fixe") constituant le paramètre de fonctionnement courant.

6.6) Le lieu fixe prédéterminé

Le lieu fixe prédéterminé est étroitement délimité spatialement. Il est par exemple constitué par un espace d'environ 50 m, et préférentiellement de moins de 20 m (voire quelques centimètres). Il s'agit par exemple d'une position géographique précise, d'un lieu d'habitation domestique, d'un lieu de travail, d'un lieu de présence temporaire, d'une résidence secondaire, d'un commerce de détails, etc. Dans l'exemple illustré sur la figure 1, on suppose qu'à l'instant $t_3$, la station passe à l'intérieur du lieu fixe prédéterminé LF, et bascule de l'état "station mobile" vers l'état "station fixe", tout en continuant à être rattachée à la cellule référencée C4, par l'intermédiaire de la station de base référencée BTS4.

6.7) Les étapes de comparaison de positions et de basculement d'état

D'une façon générale, le déclenchement de l'étape de basculement peut être automatique (grâce à des moyens de déclenchement appropriés compris dans la station ou dans un équipement du réseau de radiocommunication) et/ou sur commande d'un usager (grâce à des moyens de commande appropriés compris dans la station).
La ou les étapes de comparaison peu(ven)t être effectuée(s) avant ou après la ou les étapes de basculement.

6.8) Mode de réalisation n°1 : utilisation d'un dispositif de détection de présence

On présente maintenant deux principaux modes de réalisation de l'étape de comparaison de position, et plus précisément d'une opération de détection de la présence de la station MS à l'intérieur du lieu fixe LF.
Dans le premier mode de réalisation de l'étape de comparaison de position, illustré sur la figure 2, on utilise (au moins) un dispositif de détection de présence DDP et on considère que la station est présente à l'intérieur du lieu fixe si on détecte une mise en contact et/ou quasi-contact de la station avec le dispositif de détection de présence. Le fonctionnement de la station dans l'état "station fixe" peut donc être conditionné soit par sa mise en contact avec le dispositif de détection de présence, soit par sa mise en quasi-contact avec ce dispositif, ou encore par sa mise en contact et sa mise en quasi-contact, simultanément, avec ce dispositif. La position géographique C et l'étendue E du lieu fixe prédéterminé sont définies respectivement par la position géographique du dispositif de détection de présence et la portée du contact et/ou quasi-contact entre le dispositif de détection de présence et la station. Notamment, le lieu fixe est limité à un point (ou position géographique précise) dans le cas d'un contact dont la portée est nulle par définition. C'est donc uniquement dans le cas d'une mise en quasi-contact, de portée supérieure à zéro par définition, que le lieu fixe possède une étendue E non nulle.
Par "contact" entre la station et le dispositif de détection de présence, on entend un contact physique, par exemple de type électrique, électronique, mécanique, ... (ou une combinaison de plusieurs de ces types).
La notion de "quasi-contact" entre la station et le dispositif de détection de présence recouvre tous les types de connexion de proximité, sans contact physique. Il s'agit préférentiellement d'un quasi-contact courte distance (0,1 cm à 2 m environ) et/ou moyenne distance (0,1 cm à 50 m environ) par ondes électromagnétiques de toute nature (y compris optique), ou encore d'un quasi-contact courte distance (0,5 cm à 2 m) et/ou moyenne distance (0,1 cm à 50 m environ) par ondes sonores ou ultrasonores. Plusieurs techniques préférentielles de mise en oeuvre de ce quasi-contact sont décrites en détail dans la suite de la description ("Contactless", "tags", "infrarouge", "Bluetooth", "réseaux locaux sans fil").
D'une façon générale, le dispositif de détection de présence peut être mis en contact et/ou quasi-contact avec n'importe quel(s) élément(s) de la station, à savoir notamment soit uniquement la carte SIM, soit uniquement le terminal, soit les deux (carte SIM et terminal).
A travers cette mise en contact et/ou quasi-contact, le dispositif de détection de présence et la station mettent en oeuvre des mécanismes d'identification et/ou d'authentification unilatéraux ou mutuels, de façon à éviter des fraudes.
Dans l'exemple illustré sur la figure 2, la station est mise en contact et/ou quasi-contact avec un seul dispositif de détection de présence. Il est clair que l'invention concerne également le cas où la détection de la présence de la station dans le lieu fixe prédéterminé est conditionnée par la mise en contact et/ou quasi-contact de la station simultanément avec plusieurs dispositifs de détection de présence. Par exemple, on peut exiger, simultanément ou non, une mise en contact avec un premier dispositif de détection de présence et une mise en quasi-contact avec un second dispositif de détection de présence.

6.9) Mode de réalisation n°2 : calculs basés sur des informations de localisation

Dans le second mode de réalisation, de l'étape de comparaison de position, on détecte la présence de la station en communication avec le détecteur de position à l'intérieur du lieu fixe par calculs liés à :

- des informations de localisation issues du système de radiocommunication, telles que par exemple des informations de cellule, éventuellement pondérées par au moins un paramètre technique (tel que l'intensité du signal reçu de chaque cellule et/ou l'information d'avance temporelle ("Timing Advance") et/ou...) ; et/ou
- des informations de localisation issues d'un système externe de localisation, telles que par exemple des informations GPS.

Ces calculs peuvent être de type absolu ou différentiel (vis-à-vis de la position du lieu fixe prédéterminé, définie lors d'une phase d'initialisation). Ils sont effectués par le terminal et/ou la carte SIM et/ou un serveur (ou autre équipement) du réseau de radiocommunication.

6.10) Combinaison des modes de réalisation n°1 et 2

On peut avantageusement combiner les premier et second modes de réalisation décrits ci-dessus. Cette combinaison consiste par exemple à effectuer la détection de présence selon les deux techniques précitées, puis à ne retenir que le résultat dont la probabilité d'erreur est jugée la plus faible. On peut aussi décider de prendre une décision en tenant compte des résultats, éventuellement pondérés, des deux techniques précitées. Par exemple, la station est repérée de façon absolue par le dispositif de détection de présence et de façon approchée par le système de localisation (système de radiocommunication et/ou GPS ou autre), et le basculement est lié à une localisation positive (c'est-à-dire à l'intérieur du lieu fixe) des deux façons. Encore une autre alternative est de prendre une décision en temps réel, basée sur le résultat de l'une des techniques, puis de valider cette décision, en temps différé, au vu du résultat de l'autre technique. De nombreuses autres combinaisons peuvent bien sûr être envisagées, sans sortir du cadre de la présente invention.

6.11) Les paramètres d'état

On discute maintenant de façon détaillée les paramètres d'état définissant les états "station mobile" et "station fixe". On distingue ci-après deux cas, selon que les paramètres d'état sont ou non des identifiants réseau de la station.

6.11.1) Cas n° 1 : les paramètres d'état sont des identifiants réseau

Dans le premier cas, les deux paramètres d'état distincts, définissant chacun l'un des états de fonctionnement, sont des identifiants réseau de la station. Ils forment donc implicitement paramètres de transmission d'état vers le réseau de radiocommunication. En d'autres termes, chacun des états de fonctionnement est défini dans la station par un identifiant réseau particulier. Lors des échanges entre la station et le réseau de radiocommunication, l'identifiant réseau définissant l'état courant est utilisé (c'est la fonction première d'un tel identifiant réseau), ce qui permet au réseau de radiocommunication de connaître (en temps réel ou différé) l'état de fonctionnement courant de la station.
Les identifiants réseau suivants peuvent notamment être utilisés : IMSI, numéros mobiles (MSISDN), numéros fixes, paramètres d'état "hors service", ... On rappelle que l'IMSI et le MSISDN sont les deux identifiants réseau fondamentaux de tout abonné mobile. L'IMSI ("International Mobile Station Identity") est l'"identité internationale de l'abonné mobile". Le MSISDN ("Mobile Station Integrated Service Data Network"), qui est aussi appelé numéro mobile, est le "numéro RNIS (Réseau Numérique à Intégration de Service) de l'abonné mobile". On entend par numéro fixe un numéro téléphonique attribué généralement par un opérateur à une station non mobile. Les numéros fixes sont de deux types : les numéros téléphoniques géographiques associés à un lieu donné (numéros standard affectés par les opérateurs aux particuliers et aux entreprises, par exemple 01 71 xx xx xx) et les numéros téléphoniques non-géographiques (numéros affectés par les opérateurs traditionnels aux entreprises et parfois aux particuliers, pour les numéros verts ou spéciaux, par exemple 0824 xx xx xx). La notion de paramètre d'état "hors service" est discutée en détail par la suite. Elle s'applique notamment dans le cas où l'état "station mobile" est remplacé par un état "station hors service".

6.11.2) Cas n°2 : les paramètres d'état ne sont pas des identifiants réseau

Dans le second cas, les deux paramètres d'état distincts, définissant chacun l'un des états de fonctionnement, sont des paramètres d'état internes à la station. Ce ne sont donc pas des identifiants réseau de la station. Or, il est impératif que le réseau de radiocommunication connaisse, en temps réel ou différé, l'état de fonctionnement de la station.

Pour répondre à cet impératif, la station transmet des paramètres de transmission d'état vers le réseau de radiocommunication. En d'autres termes, dans ce second cas, le paramètre d'état utilisé dans la station pour définir l'état de fonctionnement courant est interne à la station. Ce n'est pas le même que celui (paramètre de transmission d'état) utilisé pour faire connaître au réseau de radiocommunication cet état de fonctionnement courant. Les paramètres de transmission d'état sont par exemple transmis par modification du numéro appelé, par exemple en ajoutant un préfixe prédéterminé spécifique. On peut également utiliser une sous -adresse du numéro appelant, ou encore un champ inutilisé du protocole de communication et/ou de signalisation entre la station et le réseau de radiocommunication.

### 6.11.3) Exemples de couples de paramètres d'état

Dans le premier comme dans le second cas, lors d'un appel sortant, le réseau transmet de façon transparente, au sein de la signalisation, le nouvel état de la station. Aucun système temps réel et centralisé de gestion de la localisation n'est requis.

En résumé, on peut notamment envisager les couples suivants de paramètres d'état :

- deux IMSI ;
- deux MSISDN ;
- deux numéros fixes ;
- un MSISDN et un numéro fixe ;
- un MSISDN et un paramètre d'état "hors service" ;
- un numéro fixe et un paramètre d'état "hors service" ;
- un IMSI et un paramètre d'état "hors service" ;
- deux paramètres d'état internes à la station.

Cette liste est nullement exhaustive, et d'autres couples de paramètres d'état peuvent être envisagés sans sortir du cadre de la présente invention.

### 6.12) Fonctionnalité de renvoi d'appels entrants

Optionnellement, la station comprend une fonctionnalité de renvoi d'appels entrants, consistant à renvoyer, vers la station dans son état de fonctionnement courant (par exemple l'état "station mobile"), des appels entrants destinés à la station lorsqu'elle se trouve dans un état de fonctionnement (état "station fixe" dans l'exemple précité) qui n'est pas l'état de fonctionnement courant. Cette fonctionnalité de renvoi d'appels s'applique donc lorsque la demande d'établissement d'un appel entrant fait explicitement référence à l'un des états de fonctionnement de la station. C'est par exemple le cas si chaque état possède un numéro de téléphone propre et si la demande d'établissement d'un appel entrant précise l'un de ces numéros de téléphone. On peut proposer à l'usager le choix d'activer ou non cette fonctionnalité de renvoi d'appels, ou encore l'implémenter de façon permanente. On, peut également prévoir une activation sélective de cette fonctionnalité, par exemple pour certains appels entrants seulement.

### 6.13) Remplacement de l'état "station mobile" par un état "station hors service"

Dans une variante du premier mode de réalisation décrit ci-dessus, l'état "station mobile" est désactivé et remplacé par un état "station hors service". Les deux états que la station peut prendre sont donc les suivants : état "station fixe" et état "station hors service". En conséquence, la station ne peut émettre ou recevoir des appels (ou communications) que si elle se trouve dans l'état "station fixe" (ou encore dans l'état "station fixe logique" si la station peut prendre ce troisième état ; voir discussion ci-dessous). Ceci revient à fournir à l'usager une station destinée uniquement à une utilisation sédentaire (définie par l'ensemble des attributs associés à l'état "station fixe"), bien que fonctionnant sur un réseau de radiocommunication (et jamais sur le RTC).

### 6.14) Troisième état : "station fixe logique"

Dans un second mode de réalisation de la présente invention, la station peut prendre, outre les états "station mobile" et "station fixe" décrits ci-dessus, encore un autre état, à savoir l'état "station fixe logique". Ceci permet un usage "sans fil" de la station dans l'état "station fixe logique".

Un diagramme d'états de la station, décrivant ce second mode de réalisation de l'invention, est présenté sur la figure 4. Sans que cela soit restrictif, le cas illustré correspond à l'utilisation d'un dispositif de détection de présence pour détecter la présence de la station à l'intérieur du lieu fixe.

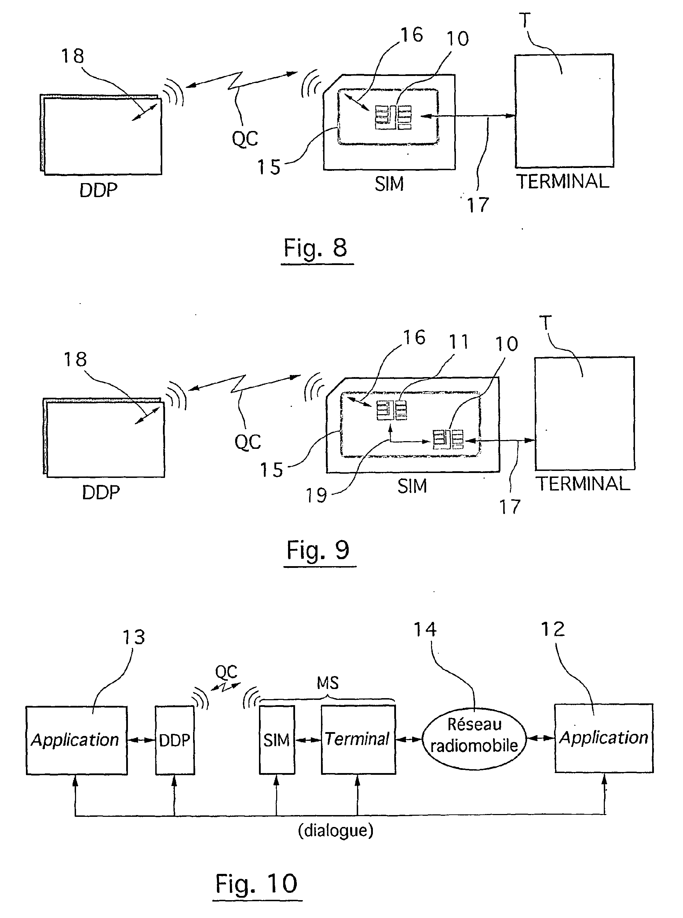

La station MS bascule de l'état "station mobile" vers l'état "station fixe" si elle est mise en contact ou quasi-contact avec le dispositif de détection de présence (entrée dans le lieu fixe LF). En revanche, contrairement au premier mode de réalisation (cf. fig.8), elle ne bascule pas directement de l'état "station fixe" vers l'état "station mobile", quand elle perd le contact ou quasi-contact avec le dispositif de détection de présence (sortie du lieu fixe). En effet, elle bascule vers l'état "station fixe logique", qui est une rémanence temporaire de l'état "station fixe" (en ce sens que la station continue à fonctionner dans l'état "station fixe" malgré que les conditions de basculement de l'état "station fixe" vers l'état "station mobile" sont vérifiées). C'est seulement lorsqu'un événement prédéterminé se réalise que la station bascule de l'état "station fixe logique" vers l'état "station mobile". En outre, si la station est remise en contact ou quasi-contact avec le dispositif de détection de présence (nouvelle entrée dans le lieu fixe) alors qu'elle se trouve dans l'état "station fixe logique", elle bascule vers l'état "station fixe".

On présente maintenant plusieurs variantes de l'événement prédéterminé mettant fin à l'état "station fixe logique" et provoquant le basculement vers l'état "station mobile".

<u>6.14.1) Première variante de l'événement mettant fin à l'état "station fixe logique"</u>

Dans une première variante, l'événement prédéterminé est l'échéance d'une temporisation. Dans le cas du premier mode de réalisation précité de l'étape de comparaison de position (utilisation d'un dispositif de détection de présence), cette temporisation est armée s'il y a cessation du contact et/ou quasi-contact entre la station et le dispositif de détection de présence. Dans le cas du second mode de réalisation précité de l'étape de comparaison de position (calculs liés à des informations de localisation issues du système de radiocommunication et/ou d'un système externe de localisation), cette temporisation est armée si ces informations de localisation changent ou si elles sont perdues. Optionnellement, si des communications sont établies ou reçues après que la temporisation est armée, la durée initiale de la temporisation peut être prolongée de la durée de ces communications. De cette façon, on autorise qu'une communication en cours, établie avec la station dans l'état "station fixe", aille à son terme avant d'effectuer le basculement vers l'état "station mobile".

<u>6.14.2) Seconde variante de l'événement mettant fin à l'état "station fixe logique"</u>

Dans une seconde variante, l'événement prédéterminé est la réalisation d'un événement réseau, au sein du réseau de radiocommunication. Différents événements réseaux peuvent être envisagés pour mettre en oeuvre cette fonctionnalité. Il peut notamment s'agir d'une mise à jour de localisation périodiques ("periodic location update"), d'un transfert intercellulaire ("handover"), d'un changement de cellule de rattachement, d'un changement de position relative, d'une perte d'un lien avec une ou plusieurs cellules du voisinage, etc.

<u>6.14.3) Troisième variante de l'événement mettant fin à l'état "station fixe logique"</u>

Dans une troisième variante, l'événement prédéterminé est une action volontaire d'un usager de la station.

<u>6.14.4) Quatrième variante de l'événement mettant fin à l'état "station fixe logique"</u>

Dans une quatrième variante, l'événement prédéterminé est un changement de position relative de la station, estimé de façon différentielle par comparaison entre la position actuelle de la station et sa ou ses dernière(s) position(s) en contact et/ou quasi-contact avec le dispositif de détection de présence.

La comparaison de positions peut notamment être réalisée par calcul de la position actuelle de la station dans l'espace des cellules géographiques C1, C2, ... perçues par la station, puis comparaison avec la (ou les) dernière(s) position(s) perçue(s) par la station lorsque cette dernière était en contact et/ou quasi-contact avec le dispositif de détection de présence. Le calcul de chaque position P ("actuelle" ou "dernière") s'exprime sous la forme : $P = \lambda\, C1 + \mu\, C2 + ... + \nu\, CN$, avec $\lambda$, ($\mu$, ..., $\nu$ des coefficients de pondération représentant soit l'intensité d'un signal reçu par la station, soit une fonction de cette intensité, soit un décalage temporel de propagation de signal jusqu'à la station, soit une fonction du décalage temporel, soit une fonction combinaison d'au moins deux de ces méthodes de représentation.

De façon alternative, la comparaison de positions est effectuée par détermination du déplacement de la station, à l'aide d'un dispositif intégré dans la station. Ce dispositif intégré est préférentiellement dans la carte SIM et comprend :

- un capteur de position et/ou de déplacement et/ou de vitesse et/ou d'accélération et/ou au moins un inclinomètre,
- une puce (ou "unité de calcul et de mémorisation"), distincte ou non de la puce standard de la carte SIM, et
- dans le cas où il y a deux puces distinctes, un canal de communication entre celles-ci.

On présente maintenant, en relation avec les figures 4 à 16, diverses caractéristiques liées au premier mode de réalisation précité de l'étape de comparaison de position, basé sur l'utilisation d'un dispositif de détection de présence.

6.151 Dispositif de détection de présence et éventuels postes téléphoniques associés

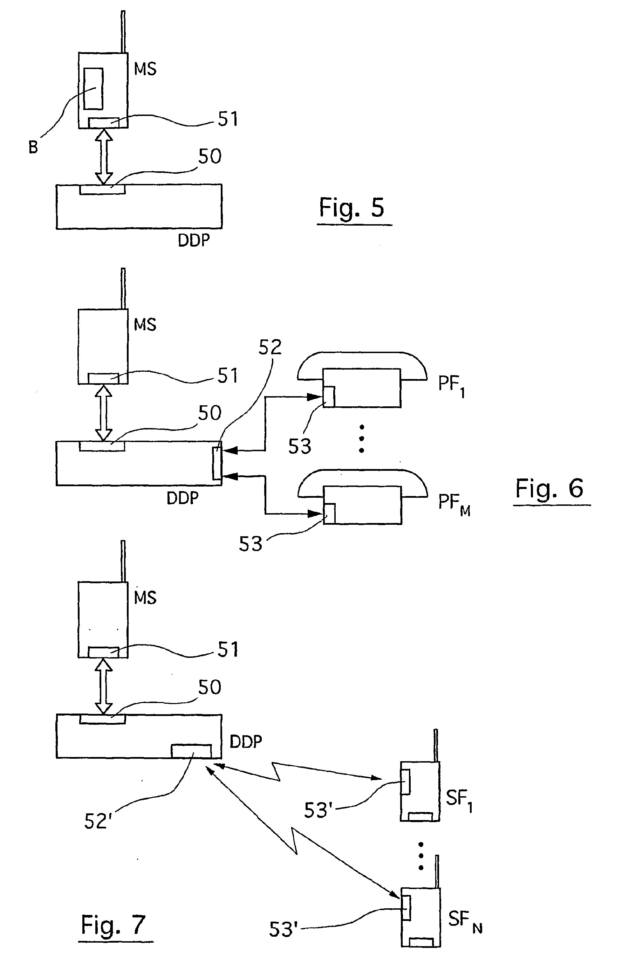

Les figures 5, 6 et 7 illustrent trois variantes du dispositif de détection de présence DDP apparaissant sur la figure 2.

Dans la première variante, le dispositif de détection de présence DDP comprend un seul type de moyens d'interface 50, destinés à coopérer avec des moyens d'interface 51 compris dans la station MS, lors de la mise en contact et/ou quasi-contact de la station MS avec le dispositif de détection de présence DDP. En d'autres termes, dans l'état "station fixe" ou "station fixe logique", seule la station peut être utilisée pour communiquer via le réseau de radiocommunication.

Dans la seconde variante, le dispositif de détection de présence DDP comprend en outre un second type de moyens d'interface 52, coopérant avec des moyens d'interface filaire 53 compris dans un ou plusieurs poste(s) téléphonique(s) filaire(s) $PF_1$ à $PF_M$. Ainsi, lors de la mise en contact et/ou quasi-contact de la station avec le dispositif de détection de présence, il est possible d'utiliser, outre la station, ce(s) poste(s) filaire(s).

La troisième variante se distingue de la seconde variante uniquement en ce que le second type de moyens d'interface 52' compris dans le dispositif de détection de présence DDP sont de type sans fil (par exemple selon la norme DECT), au lieu de filaire. Ils coopèrent donc avec des moyens d'interface sans fil 53' compris dans un ou plusieurs poste(s) téléphonique(s) sans fil $SF_1$ à $SF_N$.

En d'autres termes, dans les seconde et troisième variantes, la station MS et le dispositif de détection de présence DDP constituent ensemble, durant leur mise en contact et/ou quasi-contact, un relais vers le réseau de radiocommunication pour au moins un poste téléphonique (filaire ou sans fil) connecté au dispositif de détection de présence. Il est clair que l'un des postes téléphoniques filaires ou sans fil peut être remplacé par un répondeur (ou tout autre équipement dont le raccordement au réseau de radiocommunication présente un intérêt). Il est clair également qu'un même dispositif de détection de présence peut être connecté d'une part à au moins un poste téléphonique filaire et au moins un poste téléphonique sans fil (combinaison des seconde et troisième variantes).

6.16) Fonction socle chargeur du dispositif de détection de présence

Optionnellement, le dispositif de détection de présence DDP assure en outre une fonction de socle chargeur, permettant de recharger une batterie B comprise dans la station (comme illustré par exemple sur la figure 5), lorsque la station est mise en contact et/ou quasi-contact avec le dispositif de détection de présence.

6.17) Quasi-contact entre carte SIM et dispositif de détection de présence

On décrit maintenant, en relation avec les figures 8 et 9, deux variantes de la configuration selon laquelle la carte SIM est mise en quasi-contact QC avec le dispositif de détection de présence DDP.

De façon classique, la carte SIM comprend une (première) puce 10. Par puce, on entend toute unité de calcul et/ou de mémorisation, analogique ou numérique, et intégrée ou accolée à la carte SIM.

Dans la première variante (cf. fig.10), cette (première) puce 10 inclut des moyens de mise en oeuvre du quasi-contact QC, constituant une interface 16 d'émission/réception de la carte SIM vers/depuis le dispositif de détection de présence DDP. De façon classique, la carte SIM comprend également une interface 17 de dialogue avec le terminal T. Le dispositif de détection de présence comprend lui aussi des moyens de mise en oeuvre du quasi-contact QC, constituant une interface 18 d'émission/réception du dispositif de détection de présence DDP vers/depuis la carte SIM. On utilise par exemple des fréquences de 13,56 MHz ou 433 MHz (ou autre) sur les interfaces d'émission/réception référencées 16 et 18.

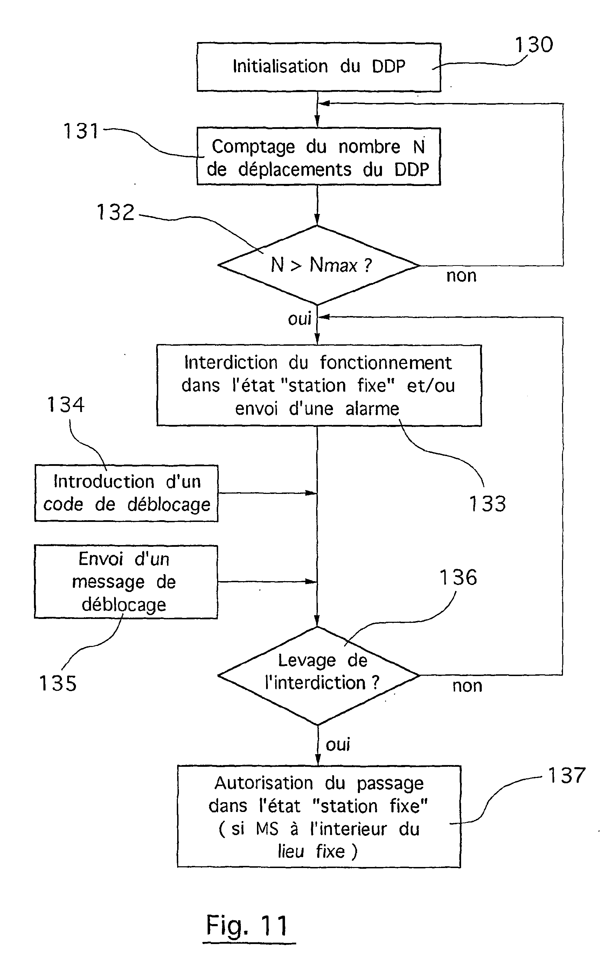

Dans la seconde variante (cf. fig.11), la carte SIM comprend en outre une seconde puce 11 et c'est dans cette dernière que sont inclus les moyens de mise en oeuvre du quasi-contact QC. Les première et seconde puces 10, 11 peuvent être simultanément et/ou alternativement actives et dialoguer ensemble. Elles sont incluses soit dans un même support, soit sur des supports différents. Dans tous les cas, elles sont reliées par un canal de communication (câble, nappe, etc), constituant une interface 19 de dialogue entre puces 10, 11. Deux types d'alimentation de la seconde puce 11 peuvent être envisagés. Soit celle-ci est alimentée par le terminal (comme l'est classiquement la première puce 10), et constitue une étiquette active ("active tag"). Soit elle tire son énergie d'un signal provenant du dispositif de détection de présence, et plus précisément d'un signal émis par un coupleur fixe sans contact situé dans le dispositif de détection de présence. La portée du quasi-contact est plus grande dans le cas d'une alimentation par le terminal.

Quelle que soit la puce dans laquelle ils sont compris, les moyens de mise en oeuvre du quasi-contact QC comprennent une bobine antenne 15 et fonctionnent par exemple selon l'une des technologies "Contactless" et "Tag", décrites ci-après.

6.18) Fonction supplémentaire à travers un dialogue entre carte SIM et dispositif de détection de présence

Leur mise en contact et/ou quasi-contact permet à la carte SIM et au dispositif de détection de présence de dialoguer ensemble, de façon uni ou bi-directionnelle. Ce dialogue direct leur permet d'effectuer l'opération de détection de présence de la station à l'intérieur du lieu fixe prédéterminé. Par extension, on peut considérer qu'il s'agit aussi d'un dialogue entre le terminal et le dispositif de détection de présence, puisque, de façon classique, la carte SIM peut dialoguer avec le terminal.

Optionnellement, ce dialogue entre le dispositif de détection de présence, la carte SIM et le terminal permet en outre d'effectuer une ou plusieurs fonctions supplémentaires. Ce sont par exemple des fonctions d'identification de la carte SIM par le dispositif de détection de présence, et/ou vice-versa, ou encore des fonctions d'authentification du module d'identification d'abonné par le dispositif de détection de présence, et/ou vice-versa. En outre, le dialogue peut être crypté. Plus généralement, comme illustré sur la figure 10, on peut envisager tout type de fonction d'échange de données, quel qu'en soit l'objet (identification, authentification, paiement, chargement d'un répertoire, ...), entre :

- d'une part le terminal et/ou la carte SIM et/ou au moins un équipement ou au moins une application informatique 12 situé sur et/ou en amont du réseau de radiocommunication 14 auquel accède la station MS,
- et d'autre part le dispositif de détection de présence DDP et/ou au moins un équipement ou au moins une application informatique 13 situé en aval du dispositif de détection de présence.

6.19) Options technologiques de réalisation du quasi-contact entre station et dispositif de détection de présence

On présente maintenant successivement différentes options technologiques de réalisation du quasi-contact entre la station et le dispositif de détection de présence. Ces options technologiques s'appliquent préférentiellement, mais non exclusivement, au cas particulier dans lequel c'est la carte SIM qui est mise en quasi-contact QC avec le dispositif de détection de présence (voir notamment les deux variantes décrites ci-dessus, en relation avec les figures 8 et 10).

6.19.1) Première option technologique de réalisation du quasi-contact

Selon une première option technologique, la mise en quasi-contact est réalisée selon la technique des procédés "Contactless" fondés sur une adaptation (notamment au format et aux contraintes des cartes micro SIM, par exemple) des normes ISO 14443 et 15693. Ceci permet un quasi-contact courte distance (0,1 cm à 2 m environ) par ondes électromagnétiques.

6.19.2) Seconde option technologique de réalisation du quasi-contact

Selon une seconde option technologique, la mise en quasi-contact est réalisée selon la technique des procédés à base d'étiquettes ("Tags") actives et/ou passives. Ceci permet un quasi-contact courte distance (0,1 cm à 2 m environ) et/ou moyenne distance (0,1 cm à 50 m environ) par ondes électromagnétiques.

6.19.3) Troisième option technologique de réalisation du quasi-contact

Selon une troisième option technologique, la mise en quasi-contact est réalisée selon la technique des communications via infrarouges (IrDa) . Ceci permet un quasi-contact moyenne distance (0,1 cm à 50 m environ) par ondes électromagnétiques.

6.19.4) Quatrième option technologique de réalisation du quasi-contact

Selon une quatrième option technologique, la mise en quasi-contact est réalisée selon la technique des communications du type "Bluetooth" (selon notamment la spécification version 1.0B "Core and profile" du 1er décembre 1999). Ceci permet un quasi-contact moyenne distance (0,1 cm à 50 m environ) par ondes électromagnétiques.

On rappelle que la technique "Bluetooth" vise à permettre tout type d'échanges radio domestiques, grâce à un échange d'informations entre deux puces comprises dans deux équipements dits "équipements Bluetooth". Chacune des deux puces est capable d'émettre et de recevoir des données par onde radio à ultra-haute fréquence, dans un rayon de 10 mètres ou plus.

Il est proposé d'enrichir la norme et les profils Bluetooth, en cours d'évolution, d'un mécanisme permettant à deux processus (ou applications), l'un sur la carte SIM et l'autre sur le dispositif de détection de présence (ce dernier constitue un "équipement Bluetooth" au sens précité), d'échanger des messages asynchrones, c'est-à-dire déclenchés à l'initiative de l'un ou l'autre des deux processus. En d'autres termes, les communications du type "Bluetooth", permettant la mise en quasi-contact précitée, sont mises en oeuvre par échanges de messages asynchrones entre les deux processus précités.

Le processus exécuté par la carte SIM s'appuie par exemple sur les deux messages asynchrones suivants, d'envoi et de réception, respectivement, de données vers le dispositif de détection de présence (ce dispositif est noté "Bluetooth" dans les noms de messages) :

- SIM_send_to_Bluetooth (@adresse de l'application Bluetooth, @données) ;
- SIM_receive_from_Bluetooth (@adresse de l'application Bluetooth, @ données).

Le processus exécuté par le dispositif de détection de présence s'appuie par exemple sur les deux messages asynchrones, d'envoi et de réception, respectivement, de données vers le module d'identification d'abonné:

- Bluetooth_send_to_SIM (@adresse de l'application SIM, @données) ;
- Bluetooth_receive_from_SIM (@adresse de l'application SIM, @données).

Il est à noter que ce mécanisme d'échange de messages asynchrones peut être étendu à tout type d'interface entre la carte SIM et des équipements locaux, via les interfaces série (ports AT) des terminaux.

En effet, les normes GSM actuelles ne permettent pas un échange entre deux processus asynchrones, l'un opérant sur la SIM et l'autre opérant sur un équipement (TE, en anglais "Terminal Equipment", au sens GSM) connecté au port série du mobile. Comme précédemment, de nouveaux messages SIM_send_to_AT, SIM_receive_from_AT, AT_send_to_SIM, AT_received from_SIM, couplant, d'une part, l'interface "SIM toolkit" entre la SIM et le terminal mobile avec, d'autre part, l'interface série AT entre le terminal et un équipement externe (TE), permettraient de réaliser un tel objectif.

6.19.5) Cinquième option technologique de réalisation du quasi-contact

Selon une cinquième option technologique, la mise en quasi-contact est réalisée selon la technique des communications via des réseaux locaux sans fils (conformes notamment aux spécifications ETSI 300 328 et 300 826). Ceci permet un quasi-contact moyenne distance (0,1 cm à 50 m environ) par ondes électromagnétiques.

6.19.6) Sixième option technologique de réalisation du quasi-contact

Selon une sixième option technologique, la mise en quasi-contact est réalisée selon la technique des communications par liaisons électromagnétiques dans la bande des 400 MHz ou des 900 MHz. Ceci permet un quasi-contact moyenne distance par ondes électromagnétiques.

6.19.7) Septième option technologique de réalisation du quasi-contact

Selon une septième option technologique, le dispositif de détection de présence possède une fonction simplifiée d'émulation de station de base, et est associé à une pseudo-cellule géographique possédant un identifiant. La mise en quasi-contact est réalisée lorsque la carte SIM (ou plus généralement la station) reconnaît l'identifiant de la pseudo-cellule géographique. Cette reconnaissance se base par exemple sur les mécanismes standard de l'application SIM ToolKit. Par ailleurs, l'identifiant de la pseudo-cellule géographique peut être émis crypté par la pseudo-station de base qu'émule le dispositif de détection de présence.

6.20) Interdiction des déplacements du dispositif de détection de présence

Afin d'interdire tout déplacement du dispositif de détection de présence, on peut fixer de façon irréversible le dispositif de détection de présence sur un support immobilier et inamovible. Ce support immobilier est par exemple un mur du hall d'entrée de la maison de l'usager, si le lieu fixe prédéterminé est le lieu d'habitation de cet usager.

6.21) Limitation des déplacements du dispositif de détection de présence

Selon une alternative, on n'autorise qu'un nombre maximal $N_{max}$ de déplacement(s) du dispositif de détection de présence, d'un lieu fixe vers un autre.

La figure 11 présente un organigramme simplifié d'un mode de réalisation particulier d'une telle limitation des déplacements du dispositif de détection de présence. Les étapes en sont les suivantes :

- initialisation 130 du dispositif de détection de présence DDP ;
- comptage 131 du nombre N de déplacement(s) du dispositif de détection de présence, d'un lieu fixe prédéterminé vers un autre ;
- comparaison 132 du nombre N de déplacement(s) à un nombre $N_{max}$ maximal de déplacement(s) ;
- si $N > N_{max}$, déclenchement d'une procédure 133 interdisant le fonctionnement dans l'état "station fixe" et/ou envoyant une alarme à un système de gestion et/ou informant l'usager du dépassement ;
- sinon ($N \leq N_{max}$,), on revient à l'étape 131 de comptage.

D'une façon générale, le nombre maximal $N_{max}$ est prédéterminé ou défini de façon adaptative. Il est supérieur ou égal à zéro. Lorsqu'il est égal à zéro, ceci revient à interdire tout déplacement du dispositif de détection de présence d'un lieu fixe vers un autre, sans toutefois (contrairement au mode de réalisation précédent) le fixer de façon irréversible sur un support immobilier et inamovible.

Il est à noter que des déplacements limités ("micro-déplacements") sont autorisés dès lors qu'il ne constituent pas un déplacement d'un lieu fixe vers un autre. Par déplacements limités, on entend par exemple des déplacements au sein d'un lieu étroitement délimité (appartement, maison, ...). La limite entre "déplacement d'un lieu fixe vers un autre" et "déplacement limité" peut être définie selon plusieurs critères, tels que par exemple un seuil représentatif d'une distance maximale déterminée (voir exemples détaillés ci-dessous).

L'étape 130 d'initialisation est effectuée de façon périodique, et/ou sur réception d'un message (par exemple un message court SMS) provenant du réseau de radiocommunication, et/ou selon une stratégie d'initialisation prédéterminée, et/ou après chaque (re)branchement du dispositif de détection de présence sur le réseau électrique et/ou sur le réseau téléphonique commuté, etc.

La procédure 133 interdisant le fonctionnement dans l'état "station fixe" consiste par exemple en un blocage du dispositif de détection de présence ou de la station. Ce blocage est par exemple réalisé par désactivation logicielle d'une puce, comprise dans le dispositif de détection de présence ou accessoirement dans la carte SIM, faisant suite à un changement d'état de cette puce ou d'une mémoire permanente à laquelle est connectée cette puce (voir annexe).

De façon alternative, la procédure 133 interdisant le fonctionnement dans l'état "station fixe" peut aussi consister à mettre en oeuvre une première temporisation, interdisant le passage de la station vers l'état "station fixe", pendant une première durée prédéterminée après détection du fait que le nombre N de déplacement(s) est devenu supérieur au nombre $N_{max}$ maximal de déplacement(s).

Cette première temporisation est par exemple mise en oeuvre dans le dispositif de détection de présence. Ceci revient à bloquer le dispositif de détection de présence pendant la durée de la première temporisation. Ainsi, on évite le fonctionnement de la station dans l'état "station fixe", mais pas dans l'état "station mobile".

La durée de la première temporisation est par exemple d'environ 24 heures. De nombreuses autres valeurs de cette durée peuvent bien sûr être envisagées sans sortir du cadre de la présente invention. Cette première durée peut notamment être infinie (dans ce cas, le blocage est définitif).

En outre, la durée de la première temporisation peut être adaptable dynamiquement. Elle est par exemple augmentée (par exemple de 24 heures) après chaque déplacement du dispositif de détection de présence, de façon notamment à limiter encore les éventuelles fraudes.

Optionnellement, et comme illustré sur la figure 11, on peut autoriser une levée 137 de l'interdiction du fonctionnement de la station dans l'état "station fixe". Cette levée de l'interdiction est par exemple conditionnée (136) par l'introduction 134 par l'usager d'un code de déblocage dans la station et/ou dans le dispositif de détection de présence. Ce code de déblocage peut varier à chaque déblocage et se conformer soit à un algorithme prédéfini, soit à une liste prédéfinie de valeurs de codes de déblocage. L'algorithme et/ou la liste sont différent(s) pour chaque dispositif de détection de présence. La levée de l'interdiction peut aussi être conditionnée (136) par l'envoi 135, par le réseau de radiocommunication, d'un message (par exemple un message court SMS) vers la station et/ou vers le dispositif de détection de présence, via la station. Il est clair que d'autres opérations de levée de l'interdiction peuvent être envisagées sans sortir du cadre de la présente invention.

6.21.1) Première variante de l'étape de comptage des déplacements du dispositif de détection de présence

Selon une première variante, l'étape 131 de comptage du nombre N de déplacements consiste à compter, après un branchement initial et une initialisation associée, le nombre de rebranchement du dispositif de détection de présence sur un réseau électrique et/ou sur un réseau téléphonique (par exemple le RTC). En d'autres termes, on considère que chaque rebranchement est une indication d'un déplacement du dispositif de détection de présence.

On notera que prendre $N_{max}$ égal à zéro revient à contrôler la permanence du branchement initial du dispositif de détection de présence sur le réseau électrique et/ou sur le réseau téléphonique.

Dans ce cas, la première temporisation précitée est armée à chaque fois que le dispositif de détection de présence est branché ou rebranché sur le réseau électrique et/ou sur le réseau téléphonique. On évite ainsi que le dispositif de détection de présence soit débranché puis rebranché trop fréquemment. On discute dans la suite de la description de l'interaction de cette première temporisation avec une seconde temporisation, autorisant les brèves interruptions de branchement.

6.21.2) Seconde variante de l'étape de comptage des déplacements du dispositif de détection de présence

Selon une seconde variante, l'étape 131 de comptage du nombre N de déplacements consiste à compter le nombre de fois où la distance parcourue par le dispositif de détection de présence, depuis une initialisation donnée, dépasse une distance maximale.

Le dispositif de détection de présence dispose dans ce cas de moyens d'estimation de la distance qu'il a parcourue, comprenant notamment par exemple :

- au moins un capteur de déplacement et/ou de vitesse et/ou d'accélération et/ou au moins un inclinomètre, permettant de générer des évènements élémentaires ;
- des moyens de calcul (par exemple une puce) d'une distance estimée, par une fonction (par exemple une somme ou une intégration) de ces évènements élémentaires.

A chaque fois que la valeur de cette fonction d'évènements élémentaires dépasse un seuil déterminé, on incrémente d'une unité le nombre de dépassement de la distance maximale (et donc le nombre N de déplacements du dispositif de détection de présence).

Le seuil déterminé est représentatif de la distance maximale précitée. Il est ajusté de façon telle qu'il permette des déplacements limités au sein du lieu, par exemple au sein d'un appartement. Il peut en outre être téléchargé dans le dispositif de détection de présence, par l'envoi depuis le réseau de radiocommunication d'un message (SMS par exemple) transitant par la station.

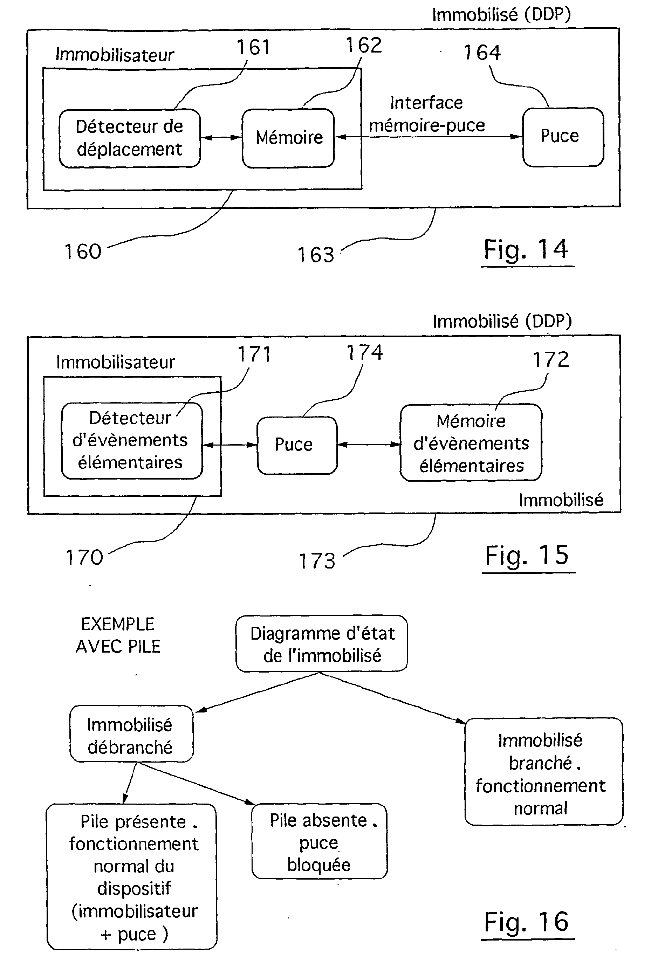

On présente de façon détaillée, en annexe et en relation avec les figures 14 à 16, deux exemples de mise en oeuvre de cette seconde variante de l'étape de comptage du nombre N de déplacements du dispositif de détection de présence, et de la procédure interdisant le fonctionnement dans l'état "station fixe".

6.21.3) Troisième variante de l'étape de comptage des déplacements du dispositif de détection de présence

Selon une troisième variante, le dispositif de détection de présence est raccordé au RTC afin d'assurer sa localisation. L'étape 131 de comptage du nombre N de déplacements consiste à compter le nombre d'identifiants de ligne fixe distincts utilisés par le dispositif de détection de présence lors des initialisations successives.

Ceci suppose qu'à chaque initialisation du dispositif de détection de présence, celui-ci communique son identifiant de ligne fixe (CLI, pour "Calling Line Identifier"), via le réseau téléphonique commuté (RTC), à un équipement de comptage. L'équipement de comptage est par exemple un premier serveur, ou bien la station. Cette dernière reçoit l'identifiant de ligne fixe directement ou via un second serveur.

Optionnellement, à chaque initialisation du dispositif de détection de présence, ce dernier communique en outre son identifiant de dispositif (ID) à la station, via leur mise en contact et/ou quasi-contact. La station mémorise l'association entre l'identifiant de ligne fixe (CLI) et l'identifiant de dispositif (ID). On décrit maintenant le fonctionnement après une initialisation donnée du dispositif de détection de présence. A chaque mise en contact et/ou quasi-contact de la station avec le dispositif de détection de présence, ce dernier envoie son identifiant de dispositif (ID') à la station. Cette dernière vérifie qu'il est identique à l'identifiant de dispositif (ID) préalablement mémorisé (et associé à l'identifiant de ligne fixe) lors de l'initialisation donnée. La station n'est autorisée à fonctionner dans l'état "station fixe" (ou "station fixe logique") que s'il y a identité entre les deux identifiants de dispositif (ID et ID').

6.21.4) Quatrième variante de l'étape de comptage des déplacements du dispositif de détection de présence

On suppose qu'à chaque initialisation du dispositif de détection de présence, la station détecte et mémorise sa position dans l'espace des cellules qu'elle perçoit. Cette position constitue, tant qu'une nouvelle initialisation n'a pas eu lieu, la "dernière position mémorisée de la station".

En fonctionnement après une initialisation donnée, la station détecte, après chaque mise en contact et/ou quasi-contact avec le dispositif de détection de présence, sa position actuelle (dans l'espace des cellules qu'elle perçoit à ce nouvel instant). Puis, la station calcule la distance entre sa position actuelle et sa dernière position mémorisée.

Selon une quatrième variante, l'étape 131 de comptage du nombre N de déplacements consiste à compter le nombre de fois où la distance calculée dépasse une distance maximale.

Il est à noter que, dans le calcul de distance qui précède, la dernière position mémorisée peut être remplacée par le barycentre (ou toute autre fonction) d'au moins certaines dernières positions précédemment détectées et mémorisées.

### 6.21.5) Cinquième variante de l'étape de comptage des déplacements du dispositif de détection de présence

Selon une cinquième variante, l'étape 131 de comptage du nombre N de déplacements consiste à incrémenter d'une unité le nombre N de déplacement(s) du dispositif de détection de présence si le nombre cumulé d'identifiants distincts de cellules perçues et/ou utilisées par la station pendant les contacts et/ou quasi-contacts successifs dépasse un seuil déterminé.

Ceci suppose que durant les contacts et/ou quasi-contacts successifs du dispositif de détection de présence avec la station, cette dernière détecte les identifiant des cellules qu'elle perçoit et/ou utilise pour des appels. Les moyens de détection de ces identifiants de cellule sont bien connus en eux-mêmes et ne seront donc pas décrits en détail ici.

Le seuil est un nombre maximal d'identifiants distincts. Il peut être téléchargé dans le dispositif de détection de présence, par l'envoi depuis le réseau de radiocommunication d'un message (SMS par exemple) transitant par la station.

### 6.21.6) Sixième variante de l'étape de comptage des déplacements du dispositif de détection de présence

Selon une sixième variante, l'étape 131 de comptage du nombre N de déplacements consiste à incrémenter d'une unité le nombre N de déplacement(s) du dispositif de détection de présence si les identifiant des cellules perçues et/ou utilisées par la station pendant les contacts et/ou quasi-contacts successifs n'appartiennent pas à une liste déterminée de cellules autorisées.

Ceci suppose que durant les contacts et/ou quasi-contacts successifs du dispositif de détection de présence avec la station, cette dernière détecte les identifiant des cellules qu'elle perçoit et/ou utilise pour des appels.

### 6.22) Désactivation partielle de la station dans l'état "station fixe"

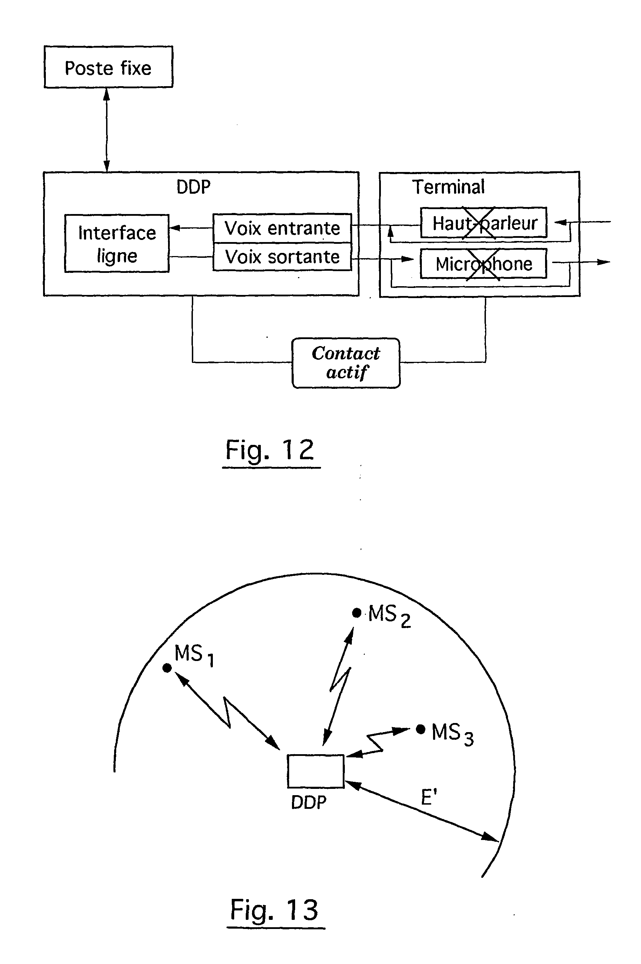

On décrit maintenant, en relation avec la figure 12, un autre mode de réalisation particulier de l'invention, visant lui aussi à éviter le déplacement du dispositif de détection de présence.

Durant chaque mise en contact et/ou quasi-contact de la station avec le dispositif de détection de présence, on désactive une ou plusieurs fonctionnalité(s) de la station. On désactive par exemple le haut-parleur, le microphone et les moyens de réception des appels. En outre, on couple, via le dispositif de détection de présence, l'usage de la station avec l'usage d'un équipement fixe. Cet équipement fixe (par exemple un poste téléphonique relié au RTC) est connecté au dispositif de détection de présence et offre notamment la ou les fonctionnalité(s) désactivée(s) sur la station.

Ainsi, durant chaque mise en contact et/ou quasi-contact de la station avec le dispositif de détection de présence, on oblige l'usager à utiliser l'équipement fixe et on empêche donc que l'usager déplace avec lui le dispositif de détection de présence.

### 6.23) Autorisation d'interruptions de branchement du dispositif de détection de présence

Optionnellement, une seconde temporisation est mise en oeuvre dans le dispositif de détection de présence afin de permettre le maintien du fonctionnement de celui-ci pendant une seconde durée prédéterminée après qu'il a été débranché d'un réseau électrique et/ou d'un réseau téléphonique. De cette façon, on autorise des interruptions de branchement, volontaires (par exemple déplacement du dispositif de détection de présence d'un lieu fixe vers un autre) ou non (par exemple panne), d'une durée inférieure ou égale à la seconde durée.

Ces interruptions de branchement de durée limitée étant autorisées, elles ne sont pas suivies d'une réinitialisation du dispositif de détection de présence. En conséquence, si le rebranchement du dispositif de détection de présence a lieu avant l'écoulement complet de la seconde durée de la seconde temporisation, la première temporisation décrite plus haut (visant à empêcher le passage dans l'état "station fixe") n'est exceptionnellement pas armée.

La durée de la seconde temporisation est par exemple d'environ 15 minutes. De nombreuses autres valeurs de cette durée peuvent bien sûr être envisagées sans sortir du cadre de la présente invention.

### 6.24) Dispositif de détection de présence commun à plusieurs stations

Dans un mode de réalisation particulier de l'invention, illustré sur la figure 13, le (ou chaque) dispositif de détection de présence DDP peut être mis en contact et/ou quasi-contact, éventuellement de façon simultanée, avec plusieurs stations $MS_1, MS_2, MS_3, ...$ Ainsi, un même dispositif de détection de présence permet de détecter la présence de chacune des stations à l'intérieur du lieu fixe prédéterminé. Chacune des stations prend, en fonction de sa position, l'un des états "station fixe" et "station mobile" (et éventuellement l'état "station fixe logique"), conformément aux explications données ci-dessus.

Deux sous-variantes de ce mode de réalisation particulier sont proposées.

Dans la première sous-variante, le lieu fixe prédéterminé est tel que décrit ci-dessus. Il s'agit donc d'un espace d'environ 50 m, et préférentiellement de moins de 20 m (voire quelques centimètres). Ceci permet par exemple à plusieurs membres d'une même famille d'utiliser chacun leur station à états de fonctionnement multiples.

Dans la seconde sous-variante, le lieu fixe prédéterminé est plus vaste et est constitué par un espace de quelques centaines de mètres (étendue E' sur la figure 13). Ce lieu fixe d'étendue E' est par exemple un campus ou une usine, et la pluralité de stations, qui fonctionnent dans l'état "station fixe" lorsqu'elles se trouvent dans cet espace, sont par exemple en possession d'étudiants ou d'employés respectivement. Il est clair que de nombreuses autres applications de cette seconde sous-variante peuvent être envisagées sans sortir du cadre de la présente invention.

6.25) Téléchargement depuis le dispositif de détection de présence vers la station d'un identifiant réseau temporaire

Optionnellement, la présente invention inclut une étape de téléchargement, depuis le dispositif de détection de présence vers la station (et préférentiellement la carte SIM), d'un identifiant réseau temporaire de la station, et éventuellement d'au moins un attribut associé. Ce téléchargement est effectué après la mise en contact et/ou quasi-contact de la station avec le dispositif de détection de présence. En outre, il peut être effectué de façon sécurisée, si l'on souhaite réduire les risques de fraude.

Ainsi, uniquement durant le temps de la mise en contact et/ou quasi-contact de la station avec le dispositif de détection de présence, la station fonctionne dans l'état "station fixe" et avec l'identifiant réseau temporaire téléchargé, et éventuellement avec le(s) attribut(s) associé(s) également téléchargé(s).

Ainsi, un tenancier d'un lieu fixe prédéterminé (un hypermarché, par exemple) peut gérer une pluralité d'identifiants réseau temporaires, qu'ils affecte parmi les clients présents dans ce lieu fixe. Ceci permet par exemple au tenancier du lieu fixe de prendre en charge, partiellement ou en totalité, des appels établis par des stations présentes dans ce lieu fixe. Par exemple, pendant qu'ils effectuent leurs achats dans un supermarché, des clients peuvent se voir offrir des communications par le gérant de ce supermarché (ou par des sociétés dont les produits sont commercialisés). On suppose ici que les clients disposent d'une station capable de se mettre en contact et/ou quasi-contact avec le dispositif de détection de présence situé dans le supermarché.

Les attributs associés à l'identifiant réseau temporaire, qu'ils soient ou non également téléchargés, permettent par exemple de limiter le nombre et/ou la durée et/ou la destination des appels pouvant être établis avec l'identifiant réseau temporaire.

7) Procédé, système, radiotéléphone, module d'identification d'abonné et dispositif de détection de présence

A la lecture de ce qui précède, on comprend que l'invention concerne un système et un procédé permettant un usage multiple d'un radiotéléphone. Certaines caractéristiques du système, qui ne sont pas décrites explicitement ci-dessus, peuvent aisément être déduites des caractéristiques correspondantes de procédé.

On comprend également que l'invention concerne également les éléments suivants pris indépendamment : un radiotéléphone, un module d'identification d'abonné (ou carte SIM) et un dispositif de détection de présence. Les moyens spécifiques de chacun de ces éléments sont décrits ci-dessus, ou peuvent aisément être déduits des caractéristiques correspondantes de procédé.

**ANNEXE : Exemple de mécanisme de limitation des déplacements du dispositif de détection de présence**

Dans la présente annexe, on entend par "immobilisé" le dispositif de détection de présence (ou tout autre appareil électronique) dont on souhaite limiter les déplacements. On entend par "immobilisateur" l'ensemble des moyens permettant la limitation des déplacements de l'immobilisé. L'immobilisateur est fixé à l'immobilisé par tout moyen adapté. On suppose que l'immobilisé comprend notamment une puce électronique (ou tout autre composant électronique). Selon une variante, la puce électronique discutée par la suite est comprise dans l'immobilisateur. La limitation des déplacements de l'immobilisé est telle que, si l'immobilisateur perçoit un déplacement important (dont l'ampleur est essentiellement paramétrable), il mémorise un évènement de dépassement. Cet évènement, utilisé le moment venu par l'immobilisé, entraînera un arrêt du service fourni par l'immobilisé. Deux options de réalisation sont maintenant décrites en détail.

**I - Option n°1 : Détecteur de déplacement**

A) Caractéristiques fonctionnelles de l'immobilisateur

Il est de petite taille (1-20 cm). L'ensemble constitué de l'immobilisateur et de la puce électronique de l'immobilisé est inviolable. Toute attaque physique engendre un blocage de l'immobilisé. L'immobilisateur est un produit de faible coût : quelques dizaines de francs. Comme illustré sur la figure 14, l'immobilisateur 160 comprend notamment au moins un détecteur (ou capteur) 161 de déplacement connecté à une mémoire 162. Il réalise les fonctionnalités suivantes :

- détection d'un déplacement de plus de X mètres (par exemple X > 100), X étant paramétrable ;
- fonctionnement autonome, c'est-à-dire de mémorisation permanente du dépassement du seuil, indépendamment de l'alimentation électrique de l'immobilisé 163 ;
- communication avec la puce électronique 164 de l'immobilisé ;
- réinitialisation de la mémoire 162 à l'aide d'un code mécanique ou électronique.
  Le code est a priori inconnu de l'utilisateur. Il est renouvelé pour chaque réinitialisation en se conformant soit à un algorithme, soit à une liste prédéfinie de valeurs, la liste étant différente pour chaque immobilisé ;
- gestion en option de plus de deux seuils (e. g. S1 : alerte utilisateur et S2 : blocage de l'immobilisé) ;
- reprogrammation optionnelle de(s) seuil(s) de déclenchement.

B) Fonctionnement de l'immobilisateur

L'immobilisateur se conforme au fonctionnement décrit ci-après. Utilisé pour la première fois par l'utilisateur, il est initialisé à l'aide du code mécanique ou électronique. Il enregistre ensuite le déplacement de l'immobilisé. Lorsqu'un seuil pré-programmé est franchi, la mémoire permanente 162 change d'état. L'information présente dans la mémoire 162 est accessible à la puce électronique 164 de l'immobilisé. La ré-initialisation de l'état de la mémoire 162 est réalisable soit à travers la puce électronique 164 (code électronique), soit via une action physique de l'utilisateur (code mécanique).

C) L'interface Mémoire - Puce électronique

C.1) Option 1 : restreinte

| Commande | Paramètres | Sens |
|---|---|---|
| Reset (Code) | [C1,... ,Cn] | Puce → Mémoire |
| Event (Threshold) | [S1,S2] | Mémoire → Puce |
| Ack reset | | Mémoire → Puce |
| Ack event | | Puce → Mémoire |
| Note : S1 : Avertissement de l'utilisateur ; S2 : Blocage de l'immobilisé. | | |

C.2) Option 2 : complète

| Commande | Paramètres | Sens |
|---|---|---|
| Reset (Code) | [C1,...,Cn] | Puce → Mémoire |
| Set treshold (S1,S2) | en mètres | Puce → Mémoire |
| Event (Treshold) | [S1,S2] | Mémoire → Puce |
| Ack reset | | Mémoire → Puce |
| Ack set treshold | | Mémoire → Puce |

(suite)

| Commande | Paramètres | Sens |
|---|---|---|
| Ack event | | Puce → Mémoire |

D) Mise en oeuvre

Les caractéristiques décrites ci-dessus sont par exemple réalisables à l'aide :

- d'un accéléromètre un, deux ou trois axes 161 ;
- d'une mémoire 162 inscriptible, car permettant d'enregistrer un dépassement de seuil, et permanente, car conservant sa valeur hors alimentation électrique ;
- d'un calcul analogue ou équivalent à une double intégration, afin d'obtenir une estimation de déplacement sur la base d'une accélération ;
- d'une auto-alimentation, par exemple produite par capture de l'énergie cinétique.

Le procédé ci-dessus requiert un dispositif auto alimenté. L'option 2 décrite ci-après concerne un immobilisé répondant au même but mais alimenté par pile ou batteries.

**II - Option n°2 : Détecteur d'évènements élémentaires**

A) Caractéristiques de l'immobilisateur

Comme illustré sur la figure 15, l'immobilisateur 170 comprend notamment au moins un détecteur (ou capteur) 171 de déplacement connecté à la puce électronique 174 de l'immobilisé 173, qui elle-même est connectée à une mémoire 172. Selon une variante, on utilise une puce électronique propre à l'immobilisateur. L'immobilisateur 170 fournit les fonctionnalités suivantes :

- détection d'évènements élémentaires permettant, après calculs, de mesurer une distance parcourue ;
- communication de tout évènement élémentaire à la puce électronique 174;
- alimentation permanente de la puce électronique 174 via une source d'électricité de type pile ou batterie. Même débranché du secteur, l'immobilisé enregistrera les évènements élémentaires ;
- réinitialisation de la mémoire de la puce électronique à l'aide d'un code mécanique ou électronique. Le code est inconnu a priori de l'utilisateur. Un code différent est transmis à chaque réinitialisation. La production de codes se conforme soit à un algorithme, soit à une liste prédéfinie de valeurs, la liste étant différente pour chaque immobilisé ;
- gestion en option de plus de deux seuils de déclenchement (e. g. S1 : alerte utilisateur et S2 : blocage de l'immobilisé) ;
- reprogrammation en option de(s) seuil(s) de déclenchement.

B) Fonctionnement de l'immobilisateur

L'immobilisateur se conforme au fonctionnement décrit ci-après. Utilisé pour la première fois par l'utilisateur, la mémoire de la puce électronique 174 est initialisée à l'aide du code mécanique ou électronique. L'immobilisateur détecte les évènements élémentaires et les communique à la puce électronique 174. La puce électronique 174 enregistre (dans la mémoire 172) et traite les évènements élémentaires. Lorsque l'un des seuils préprogrammés est franchi, la puce électronique 174 change d'état et soit envoie une alarme soit bloque l'immobilisé. La réinitialisation de l'état de la mémoire 172 est réalisable soit à travers la puce électronique (code électronique) soit via une action physique de l'utilisateur sur par exemple un interrupteur à 0-7 valeurs (code mécanique). Une perte totale d'alimentation de la puce électronique engendre un blocage de l'immobilisé.

C) Une source d'électricité permanente

La source interne et permanente d'électricité permet à la puce électronique de mémoriser les évènements élémentaires, lorsque l'immobilisé est débranché du secteur. Deux options sont possibles :

- intégration d'une batterie rechargeable et non accessible ;
- intégration d'une pile d'accès difficile et de durée de vie maximale.

C.1) Batterie rechargeable et non accessible

Une telle batterie présente les caractéristiques suivantes :

- capacité à se recharger lorsque l'immobilisé est branché au secteur;
- inviolable et scellée an sein du dispositif constitué de la puce électronique et de l'immobilisateur ;
- autonomie de plus d'un mois ;
- durée de vie supérieure à 3 ans.

C.2) Pile d'accès difficile et de durée de vie maximale.

La pile présente les caractéristiques suivantes :

- durée de vie maximale ;
- accès difficile pour éviter les erreurs de manipulation.

Cette solution présente un risque de fraude. Si la pile est retirée, l'immobilisateur ne peut plus enregistrer les évènements et n'immobilise donc plus l'immobilisé. Pour pallier ce risque, la puce électronique se bloque lors de toute interruption d'alimentation de la puce électronique. La figure 16 présente un diagramme d'état de l'immobilisé, dans le cas d'utilisation d'une pile amovible.

D) Mise en oeuvre

Les caractéristiques décrites ci-dessus sont par exemple réalisables à l'aide de :

- un accéléromètre un, deux ou trois axes 171 ;
- une mémoire 172, inscriptible, car permettant d'enregistrer un dépassement de seuil, et permanente, c'est-à-dire conservant sa valeur hors alimentation électrique ;
- un calcul analogue ou équivalent à une double intégration, réalisé par la puce électronique 174, afin d'obtenir une estimation de déplacement sur la base d'une accélération ;
- une pile ou d'une batterie (non représentée) alimentant la puce électronique.

**Revendications**

1.  Procédé permettant un usage multiple d'un radiotéléphone dans un même réseau de radiocommunication, ledit radiotéléphone étant aussi appelé station (MS) et étant du type compris dans un système de radiocommunication, **caractérisé en ce que** ladite station peut prendre au moins les deux états de fonctionnement suivants, définis chacun par au moins un paramètre d'état distinct, lesdits paramètres d'état distincts, définissant chacun l'un desdits états de fonctionnement, étant des identifiants réseau de ladite station et formant implicitement paramètres de transmission d'état vers un réseau de radiocommunication dudit système de radiocommunication :

    - un état dit "station mobile", associé à une situation de mobilité géographique de ladite station ;
    - un état dit "station fixe", associé à une situation de fixité géographique de ladite station à l'intérieur d'un lieu fixe prédéterminé (LF), étroitement délimité spatialement ;

    la station fonctionnant, quel que soit son état, au sein dudit réseau de radiocommunication,
    et **en ce que** ledit procédé comprend :

    - au moins une étape de basculement d'état de ladite station, de façon automatique et/ou sur commande d'un usager, en fonction de la position géographique de ladite station ;
    - au moins une étape de comparaison de la position de ladite station par rapport audit lieu fixe prédéterminé, de façon à déclencher ou valider ladite au moins une étape de basculement d'état, si ladite station passe effectivement de l'intérieur vers l'extérieur dudit lieu fixe prédéterminé, ou inversement, ladite étape de comparaison de la position de ladite station par rapport audit lieu fixe prédéterminé comprend une opération de détection de présence de ladite station à l'intérieur dudit lieu fixe prédéterminé, par mise en communication, selon une technique de communication avec contact et ayant donc une portée nulle ou sans contact et ayant une portée inférieure à environ 50 m,de ladite station avec au moins un dispositif de détection de présence (DDP) de ladite station (MS) à l'intérieur dudit lieu fixe prédéterminé (LF), alors que la position géographique (C) et l'étendue (E) dudit lieu fixe prédéterminé (LF) sont définies respectivement par :

- la position géographique dudit au moins un dispositif de détection de présence et
- la portée de ladite technique de communication entre ledit au moins un dispositif de détection de présence et ladite station,

tandis que ladite station comprend un terminal et un module d'identification d'abonné de telle manière que ladite mise en communication de ladite station avec ledit dispositif de détection de présence soit réalisée par une mise en communication dudit module d'identification d'abonné avec ledit dispositif de détection de présence, de façon à permettre un dialogue entre ledit dispositif de détection de présence, ledit module d'identification d'abonné et ledit terminal.

**2.** Procédé selon la revendication 1, **caractérisé en ce que** ledit lieu fixe prédéterminé appartient au groupe comprenant :

* dans le cas où ladite technique de communication entre ledit au moins un dispositif de détection de présence et ladite station est du type avec contact :

- des positions géographiques précises ;

* dans le cas où ladite technique de communication entre ledit au moins un dispositif de détection de présence et ladite station est du type sans contact :

- des lieux d'habitation domestiques ;
- des lieux de travail ;
- des lieux de présence temporaire ;
- des résidences secondaires ;
- des commerces de détails.

**3.** Procédé selon l'une quelconque des revendications 1 et 2, **caractérisé en ce que** lesdits deux paramètres d'état distincts, définissant chacun l'un desdits états de fonctionnement, sont des paramètres d'état internes à ladite station et ne sont donc pas des identifiants réseau de ladite station,
et **en ce que** ladite station transmet des paramètres de transmission d'état vers un réseau de radiocommunication dudit système de radiocommunication, de façon que ledit réseau de radiocommunication connaisse l'état de fonctionnement de ladite station.

**4.** Procédé selon l'une quelconque des revendications 1 à 3, **caractérisé en ce que** lesdits identifiants réseau de ladite station appartiennent au groupe comprenant :

- des IMSI :
- des numéros mobiles (MSISDN);
- des numéros fixes ;
- des paramètres d'état "hors service".

**5.** Procédé selon l'une quelconque des revendications 1 à 4, **caractérisé en ce que** lesdits deux paramètres d'état distincts, définissant chacun l'un desdits états de fonctionnement, forment un couple appartenant au groupe comprenant :

- deux IMSI distincts ;
- deux numéros mobiles distincts ;
- un numéro fixe et un numéro mobile ;
- deux numéros fixes distincts ;
- deux paramètres d'état internes à ladite station.

**6.** Procédé selon l'une quelconque des revendications 1 à 5, ladite station comprenant un terminal et un module d'identification d'abonné, **caractérisé en ce que** pour mettre en oeuvre au moins en partie ladite étape de basculement d'état, ledit terminal et/ou ledit module d'identification d'abonné comprend une fonctionnalité de sélection de l'un desdits deux paramètres d'état distincts, de façon à définir un état de fonctionnement courant, parmi lesdits états "station mobile" et "station fixe".

7. Procédé selon l'une quelconque des revendications 1 à 6, **caractérisé en ce que** ladite station comprend une fonctionnalité de renvoi d'appels entrants, consistant à renvoyer, vers la station dans son état de fonctionnement courant, des appels entrants destinés à ladite station lorsqu'elle se trouve dans un desdits états de fonctionnement qui n'est pas ledit état de fonctionnement courant.

8. Procédé selon l'une quelconque des revendications 1 à 7, **caractérisé en ce que** chacun desdits états "station fixe" et "station mobile" possède, outre ledit au moins un paramètre d'état distinct, au moins un attribut propre.

9. Procédé selon l'une quelconque des revendications 1 à 8, **caractérisé en ce que** lesdits états "station fixe" et "station mobile" possèdent au moins un attribut commun.

10. Procédé selon l'une quelconque des revendications 8 et 9, **caractérisé en ce que** ledit au moins un attribut propre et ledit au moins un attribut commun appartiennent au groupe comprenant :

   - des modes de facturation pour les appels entrants ;
   - des modes de facturation pour les appels sortants ;
   - des numéros de téléphone ;
   - des droits à l'itinérance ;
   - des droits aux appels internationaux ;
   - des fonctionnalités et/ou services à valeur ajoutée (annuaire, services de contenu WAP, etc) ;
   - des fonctionnalités et/ou services d'accès à Internet via le réseau de radiocommunication auquel est reliée la station ;
   - des fonctionnalités et/ou services d'accès à des services de données et/ou de télécopie ;
   - des fonctionnalités et/ou services de messagerie vocale :
   - des fonctionnalités et/ou services de renvoi ;
   - des fonctionnalités et/ou services de répertoire ;
   - des fonctionnalités et/ou services d'annuaires.

11. Procédé selon l'une quelconque des revendications 1 à 10, **caractérisé en ce que** ladite station ne passe pas directement de l'état "station fixe" à l'état "station mobile", mais passe par un état intermédiaire, dit état "station fixe logique", dans lequel ladite station continue de fonctionner, jusqu'à la réalisation d'au moins un événement prédéterminé, comme dans ledit état "station fixe", bien que des conditions de basculement de l'état "station fixe" vers l'état "station mobile" soient vérifiées.

12. Procédé selon la revendication 11, **caractérisé en ce que** ledit au moins un événement prédéterminé est l'échéance d'une temporisation armée :

   - lors d'une cessation de ladite mise en communication de la station avec le dispositif de détection de présence ; et/ou
   - lors d'un changement ou une perte desdites informations de localisation issues dudit système de radiocommunication et/ou dudit système externe de localisation.

13. Procédé selon la revendication 12, **caractérisé en ce que** ladite temporisation possède une durée initiale qui est prolongée de la durée d'éventuelle(s) communication(s) établie(s) ou reçue(s) par ladite station pendant ladite durée initiale.

14. Procédé selon la revendication 11, **caractérisé en ce que** ledit au moins un événement prédéterminé est la réalisation d'un événement réseau.

15. Procédé selon la revendication 14, **caractérisé en ce que** ledit événement réseau appartient au groupe comprenant :

   - des mises à jour de localisation périodiques ("periodic location update") ;
   - des "handover" ;
   - des changements de cellule de rattachement ;
   - des changements de position relative ;

- des pertes d'un lien avec une ou plusieurs cellules du voisinage.

**16.** Procédé selon la revendication 11, **caractérisé en ce que** ledit au moins un événement prédéterminé est une action volontaire d'un usager.

**17.** Procédé selon la revendication 11, **caractérisé en ce que** ledit événement est un changement de position relative de ladite station, estimé de façon différentielle par comparaison entre la position actuelle de ladite station et sa ou ses dernière(s) position(s) en communication avec ledit dispositif de détection de présence.

**18.** Procédé selon la revendication 17, **caractérisé en ce que** ladite comparaison entre la position actuelle de la station et la ou les dernière(s) position(s) en communication avec ledit dispositif de détection de présence est estimée en calculant la position P de ladite station dans l'espace des cellules C1, C2, ..., CN perçues par ladite station, le calcul de ladite position P s'exprimant sous la forme :

$$P = \lambda\, C1 + \mu\, C2 + \ldots + \nu\, CN$$

où les poids $\lambda$, $\mu$, ..., $\nu$ représentent soit l'intensité d'un signal reçu par ladite station, soit une fonction de ladite intensité, soit un décalage temporel de propagation de signal jusqu'à ladite station, soit une fonction dudit décalage temporel, soit une fonction combinaison d'au moins deux de ces méthodes de représentation.

**19.** Procédé selon la revendication 17, **caractérisé en ce que** ladite comparaison entre la position actuelle de la station et la ou les dernière(s) position(s) en communication avec ledit dispositif de détection de présence est estimée en déterminant le déplacement de ladite station à l'aide d'un dispositif intégré dans ladite station, et préférentiellement dans un module d'identification compris dans ladite station, ledit dispositif intégré comprenant :

- un capteur de position et/ou de déplacement et/ou de vitesse et/ou d'accélération et/ou an moins un inclinomètre,
- une unité de calcul et de mémorisation, distincte ou non de l'unité de calcul et de mémorisation standard du module d'identification et,
- dans le cas où il y a deux unités de calcul et de mémorisation distinctes, un canal de communication entre lesdites deux unités de calcul et de mémorisation distinctes.

**20.** Procédé selon l'une quelconque des revendications 1 à 19, **caractérisé en ce que** ledit état "station mobile" est désactivé et remplacé par un état "station hors service", de façon que ladite station peut prendre soit ledit état "station fixe", soit ledit état "station hors service".

**21.** Procédé selon les revendications 5 et 20, **caractérisé en ce que** ledit groupe de couples de paramètres d'état distincts comprend en outre les couples suivants :

- un numéro mobile et un paramètre d'état "hors service" ;
- un numéro fixe et un paramètre d'état "hors service" ;
- un IMSI et un paramètre d'état "hors service".

**22.** Procédé selon l'une quelconque des revendications 1 à 21, **caractérisé en ce que** ledit module d'identification d'abonné et ledit dispositif de détection de présence sont mis en communication selon une technique de communication sans contact et ayant une portée inférieure à environ 50 m.

**23.** Procédé selon la revendication 22, ledit module d'identification d'abonné comprenant de façon classique une première puce, **caractérisé en ce que** ledit module d'identification d'abonné comprend en outre une seconde puce incluant des moyens de mise en oeuvre de ladite technique de communication sans contact,
**en ce que** lesdites première et seconde puces peuvent être simultanément et/ou alternativement actives et dialoguer ensemble,
et **en ce que** lesdites première et seconde puces sont incluses dans un même support ou incluses sur des supports différents mais reliées par un canal de communication.

**24.** Procédé selon la revendication 23, **caractérisé en ce que** lesdites première et seconde puces sont alimentées par ledit terminal.

**25.** Procédé selon la revendication 23, **caractérisé en ce que** ladite seconde puce tire son énergie d'un signal provenant dudit dispositif de détection de présence.

**26.** Procédé selon la revendication 22, ledit module d'identification d'abonné comprenant de façon classique une puce, **caractérisé en ce que** ladite puce inclut des moyens de mise en oeuvre de ladite technique de communication sans contact

**27.** Procédé selon l'une quelconque des revendications 1 à 26, **caractérisé en ce que** ledit dialogue entre ledit terminal, ledit module d'identification d'abonné et ledit dispositif de détection de présence permet d'effectuer :

- ladite opération de détection de présence de ladite station à l'intérieur dudit lieu fixe prédéterminé ;
- et en outre au moins une fonction supplémentaire.

**28.** Procédé selon la revendication 27, **caractérisé en ce que** ladite au moins une fonction supplémentaire appartient au groupe comprenant:

- des fonctions d'identification dudit module d'identification d'abonné par ledit dispositif de détection de présence, et/ou vice-versa ;
- des fonctions d'authentification dudit module d'identification d'abonné par ledit dispositif de détection de présence, et/ou vice-versa ;
- des fonctions d'échanges de données, quel qu'en soit l'objet, entre :

  * d'une part ledit terminal et/ou ledit module d'identification d'abonné et/ou au moins un équipement ou une application informatique situé sur et/ou en amont du réseau de radiocommunication auquel accède ladite station,
  * et d'autre part ledit dispositif de détection de présence et/ou au moins un équipement ou au moins une application informatique situé en aval dudit dispositif de détection de présence.

**29.** Procédé selon l'une quelconque des revendications 1 à 21, 27 et 28, **caractérisé en ce que** ladite technique de communication avec contact appartient au groupe comprenant :

- les techniques de communication avec contact électrique ;
- les techniques de communication avec contact électronique ;
- les techniques de communication avec contact mécanique ;
- une combinaison d'au moins deux types de technique de communication avec contact précités.

**30.** Procédé selon l'une quelconque des revendications 1 à 28, **caractérisé en ce que** ladite technique de communication sans contact appartient au groupe comprenant :

- les techniques de communication sans contact courte distance, de 0,1 cm à 2 m environ, et moyenne distance, de 0,1 cm à 50 m environ, par ondes électromagnétiques de toute nature ;
- les techniques de communication sans contact courte distance, de 0,5 cm à 2 m environ, et moyenne distance, de 0,1 cm à 50 m environ, par ondes sonores ou ultrasonores.

**31.** Procédé selon l'une quelconque des revendications 1 à 28, **caractérisé en ce que** ladite technique de communication sans contact est réalisée selon la technique des procédés "Contactless" fondés sur une adaptation des normes ISO 14443 et 15693, permettant une communication sans contact courte distance par ondes électromagnétiques.

**32.** Procédé selon l'une quelconque des revendications 1 à 28, **caractérisé en ce que** ladite technique de communication sans contact est réalisée selon la technique des procédés à base d'étiquettes actives et/ou passives, permettant une communication sans contact courte et/ou moyenne distance par ondes électromagnétiques.

**33.** Procédé selon l'une quelconque des revendications 1 à 28, **caractérisé en ce que** ladite technique de communication sans contact est réalisée selon la technique des communications via infrarouges, permettant une communication sans contact moyenne distance par ondes électromagnétiques.

34. Procédé selon l'une quelconque des revendications 1 à 28, **caractérisé en ce que** ladite technique de communication sans contact est réalisée selon la technique des communications du type "Bluetooth", permettant une communication sans contact moyenne distance par ondes électromagnétiques.

35. Procédé selon la revendication 34, **caractérisé en ce que** lesdites communications du type "Bluetooth" permettant ladite mise en communication sans contact sont mises en oeuvre par échanges de messages asynchrones entre deux applications exécutées l'une sur le module d'identification d'abonné et l'autre sur le dispositif de détection de présence, lesdits messages asynchrones étant déclenchés à l'initiative de l'une ou l'autre desdites applications, **en ce que** l'application exécutée par le module d'identification d'abonné s'appuie sur deux messages, d'envoi et de réception respectivement, de données vers le dispositif de détection de présence, et **en ce que** l'application exécutée par le dispositif de détection de présence s'appuie sur deux messages, d'envoi et de réception respectivement, de données vers le module d'identification d'abonné.

36. Procédé selon l'une quelconque des revendications 1 à 28, **caractérisé en ce que** ladite technique de communication sans contact est réalisée selon la technique des communications par liaisons électromagnétiques dans la bande des 400 MHz ou des 900 MHz, permettant une communication sans contact moyenne distance par ondes électromagnétiques.

37. Procédé selon l'une quelconque des revendications 1 à 28, **caractérisé en ce que** le dispositif de détection de présence possède une fonction simplifiée d'émulation de station de base, et est associé à une pseudo-cellule géographique possédant un identifiant, et **en ce que** ladite mise en communication sans contact est réalisée lorsque la station, préférentiellement le module d'identification d'abonné, reconnaît ledit identifiant de la pseudo-cellule géographique.

38. Procédé selon l'une quelconque des revendications 1 à 28, **caractérisé en ce que** ladite mise en communication sans contact est réalisée selon la technique des communications via des réseaux locaux sans fils, permettant une communication sans contact moyenne distance par ondes électromagnétiques.

39. Procédé selon l'une quelconque des revendications 1 à 38, **caractérisé en ce qu'**il comprend une étape de fixation irréversible dudit dispositif de détection de présence sur un support immobilier et inamovible, de façon à interdire tout déplacement dudit dispositif de détection de présence.

40. Procédé selon l'une quelconque des revendications 1 à 38, **caractérisé en ce qu'**il comprend une étape de limitation des déplacements dudit dispositif de détection de présence, comprenant elle-même les étapes suivantes :

   - initialisation dudit dispositif de détection de présence ;
   - comptage du nombre N de déplacement(s) dudit dispositif de détection de présence, dudit lieu fixe prédéterminé vers un autre lieu fixe prédéterminé, par un usager ;
   - lorsque ledit nombre N de déplacement(s) devient supérieur à un nombre $N_{max}$ maximal de déplacement(s) prédéterminé ou défini de façon adaptative, avec $N_{max} \geq 0$, déclenchement d'une procédure interdisant le fonctionnement dans ledit état "station fixe" et/ou envoyant une alarme à un système de gestion et/ou informant l'usager dudit dépassement.

41. Procédé selon la revendication 40, **caractérisé en ce que** ladite interdiction du fonctionnement de la station dans l'état "station fixe" peut être levée par au moins une des opérations appartenant au groupe comprenant :

   - introduction par l'usager d'un code de déblocage dans ladite station et/ou dans ledit dispositif de détection de présence ;
   - envoi, par le réseau de radiocommunication auquel accède la station, d'un message vers la station et/ou vers le dispositif de détection de présence, via la station.

42. Procédé selon la revendication 41, **caractérisé en ce que** ledit code de déblocage varie à chaque déblocage et se conforme soit à un algorithme prédéfini, soit à une liste prédéfinie de valeurs de codes de déblocage, ledit algorithme et/ou ladite liste étant différent(s) pour chaque dispositif de détection de présence.

43. Procédé selon l'une quelconque des revendications 40 à 42, **caractérisé en ce que** ladite procédure interdisant le fonctionnement dans ledit état "station fixe" consiste à mettre en oeuvre une première temporisation, interdisant le passage de la station vers l'état "station fixe", pendant une première durée prédéterminée après détection du fait que ledit nombre N de déplacement(s) est devenu supérieur audit nombre $N_{max}$ maximal de déplacement(s).

**44.** Procédé selon la revendication 43, **caractérisé en ce que** la première durée de ladite première temporisation est d'environ 24 heures.

**45.** Procédé selon l'une quelconque des revendications 40 à 44, **caractérisé en ce que** lesdites initialisations se produisent :

    - de façon périodique ;
    - et/ou sur réception d'un message provenant du réseau de radiocommunication auquel accède la station :
    - et/ou selon une stratégie d'initialisation prédéterminée ;
    - et/ou après chaque (re)branchement dudit dispositif de détection de présence sur le réseau électrique et/ou sur le réseau téléphonique commuté.

**46.** Procédé selon l'une quelconque des revendications 40 à 45, **caractérisé en ce que** ladite étape de comptage du nombre N de déplacements consiste à compter, après un branchement initial et une initialisation associée, le nombre de rebranchement dudit dispositif de détection de présence sur un réseau électrique et/ou sur un réseau téléphonique.

**47.** Procédé selon l'une quelconque des revendications 40 à 45, **caractérisé en ce que**, en fonctionnement après une initialisation donnée dudit dispositif de détection de présence, ledit dispositif de détection de présence estime la distance qu'il a parcourue depuis ladite initialisation donnée,
et **en ce que** ladite étape de comptage du nombre N de déplacement(s) dudit dispositif de détection de présence consiste en un comptage du nombre de fois où ladite distance estimée dépasse une distance maximale.

**48.** Procédé selon la revendication 47, **caractérisé en ce que** ladite estimation par le dispositif de détection de présence de la distance qu'il a parcourue est réalisée avec au moins un capteur de déplacement et/ou de vitesse et/ou d'accélération et/ou au moins un inclinomètre.

**49.** Procédé selon la revendication 48, **caractérisé en ce que** ladite estimation par le dispositif de détection de présence de la distance qu'il a parcourue est calculée par une fonction d'événements élémentaires générés par ledit au moins un capteur de déplacement et/ou de vitesse et/ou d'accélération et/ou ledit au moins un inclinomètre,
et **en ce que** l'on incrémente d'une unité le nombre de déplacement, si la valeur de ladite fonction d'évènements élémentaires dépasse un seuil déterminé.

**50.** Procédé selon ta revendication 49, **caractérisé en ce que** ledit seuil est téléchargé par l'envoi, par le réseau de radiocommunication auquel accède la station, d'un message vers le dispositif de détection de présence, via la station.

**51.** Procédé selon l'une quelconque des revendications 40 à 45, **caractérisé en ce que** ledit dispositif de détection de présence est branché au réseau téléphonique commuté
**en ce que**, à chaque initialisation dudit dispositif de détection de présence, ledit dispositif de détection de présence communique son identifiant de ligne fixe, via le réseau téléphonique commuté, soit à un premier serveur, soit à ladite station directement ou via un second serveur,
et **en ce que** ladite étape de comptage du nombre N de déplacement(s) dudit dispositif de détection de présence consiste en un comptage du nombre d'identifiants de ligne fixe distincts utilisés par ledit dispositif de détection de présence lors des initialisations successives.

**52.** Procédé selon la revendication 51, **caractérisé en ce que**, à chaque initialisation dudit dispositif de détection de présence, ledit dispositif de détection de présence communique en outre son identifiant de dispositif à ladite station, via ladite mise en communication, et ladite station mémorise l'association entre ledit identifiant de ligne fixe et ledit identifiant de dispositif,
et **en ce que**, en fonctionnement après une initialisation donnée dudit dispositif de détection de présence, la station reçoit dudit dispositif de détection de présence, à chaque mise en communication, ledit identifiant de dispositif, et vérifie qu'il est identique à l'identifiant de dispositif mémorisé et associé à l'identifiant de ligne fixe lors de ladite initialisation donnée.

**53.** Procédé selon l'une quelconque des revendications 40 à 45. **caractérisé en ce que**, à chaque initialisation dudit dispositif de détection de présence, ladite station repère et mémorise sa position dans l'espace des cellules qu'elle perçoit,

**en ce que**, en fonctionnement, la station calcule, après chaque mise en communication avec ledit dispositif de détection de présence, la distance entre sa position actuelle et soit sa dernière position mémorisée, soit le barycentre ou une autre fonction d'au moins certaines dernières positions précédemment détectées et mémorisées,

et **en ce que** ladite étape de comptage du nombre N de déplacement(s) dudit dispositif de détection de présence consiste en un comptage du nombre de fois où ladite distance dépasse une distance maximale.

**54.** Procédé selon l'une quelconque des revendications 40 à 45, **caractérisé en ce que**, durant les mises en communication successives dudit dispositif de détection de présence avec ladite station, ladite station détecte les identifiants des cellules perçues et/ou utilisées par la station pour des appels,

et **en ce que** ladite étape de comptage consiste à incrémenter d'une unité le nombre N de déplacement(s) dudit dispositif de détection de présence si le nombre cumulé d'identifiants distincts de cellules perçues et/ou utilisées par la station pendant lesdites mises en communication successives dépasse un seuil déterminé.

**55.** Procédé selon la revendication 54, **caractérisé en ce que** ledit seuil est téléchargé par l'envoi, par le réseau de radiocommunication auquel accède la station, d'un message vers le dispositif de détection de présence, via la station.

**56.** Procédé selon l'une quelconque des revendications 40 à 45, **caractérisé en ce que**, durant les mises en communication successives dudit dispositif de détection de présence avec ladite station, ladite station détecte les identifiant des cellules perçues et/ou utilisées par la station pour des appels,

et **en ce que** ladite étape de comptage consiste à incrémenter d'une unité le nombre N de déplacement(s) dudit dispositif de détection de présence si les identifiant des cellules perçues et/ou utilisées par la station pendant lesdites mises en communication successives n'appartiennent pas à une liste déterminée de cellules autorisées.

**57.** Procédé selon l'une quelconque des revendications 1 à 56, **caractérisé en ce que**, après ladite mise en communication de ladite station avec ledit dispositif de détection de présence, ledit procédé comprend les étapes suivantes :

- désactivation d'au moins une fonctionnalité de ladite station, et
- couplage, via ledit dispositif de détection de présence, de l'usage de ladite station avec l'usage d'un équipement fixe offrant au moins ladite au moins une fonctionnalité désactivée,

de sorte que dans ledit état "station fixe", ladite station ne puisse être utilisée qu'avec ledit équipement fixe.

**58.** Procédé selon la revendication 57, **caractérisé en ce que** ladite au moins une fonctionnalité désactivée de la station appartient au groupe comprenant : le haut-parleur, le microphone et les moyens de réception des appels.

**59.** Procédé selon l'une quelconque des revendications 1 à 58, **caractérisé en ce qu'**une seconde temporisation permet le maintien du fonctionnement dudit dispositif de détection de présence, pendant une seconde durée prédéterminée après qu'il a été débranché d'un réseau électrique et/ou d'un réseau téléphonique, de façon à autoriser des interruptions de branchement d'une durée inférieure ou égale à ladite seconde durée.

**60.** Procédé selon la revendication 59, **caractérisé en ce que** ladite seconde durée de ladite seconde temporisation est d'environ 15 minutes.

**61.** Procédé selon l'une quelconque des revendications 43 et 59, **caractérisé en ce qu'**au moins une desdites première et seconde durées est adaptable dynamiquement, en fonction d'au moins un paramètre d'adaptation prédéterminé.

**62.** Procédé selon l'une quelconque des revendications 43 et 59, **caractérisé en ce que** ladite première temporisation et/ou ladite seconde temporisation est(sont) mise(s) en oeuvre dans le dispositif de détection de présence.

**63.** Procédé selon l'une quelconque des revendications 1 à 62, **caractérisé en ce que** ledit dispositif de détection de présence assure en outre une fonction de socle chargeur, permettant de recharger une batterie comprise dans ladite station, lorsque ladite station est mise en communication avec ledit dispositif de détection de présence.

**64.** Procédé selon l'une quelconque des revendications 1 à 63, **caractérisé en ce que** ledit au moins un dispositif de détection de présence peut être mis en communication, éventuellement de façon simultanée, avec au moins deux stations, de façon à permettre la détection de la présence de chacune desdites au moins deux stations à l'intérieur dudit lieu fixe prédéterminé.

**65.** Procédé selon l'une quelconque des revendications 1 à 64, **caractérisé en ce que** ledit au moins un dispositif de détection de présence et ladite station mettent en oeuvre des mécanismes d'identification et/ou d'authentification unilatéraux ou mutuels.

**66.** Procédé selon l'une quelconque des revendications 1 à 65, **caractérisé en ce qu'**aprés la mise en communication de la station avec le dispositif de détection de présence, ledit procédé comprend une étape de téléchargement depuis le dispositif de détection de présence vers la station, de façon sécurisée, d'un identifiant réseau temporaire de la station, et éventuellement d'au moins un attribut associé,
de façon que la station fonctionne, uniquement durant le temps de ladite mise en communication, dans ledit état "station fixe" et avec l'identifiant réseau temporaire téléchargé, et éventuellement ledit au moins un attribut associé.

**67.** Procédé selon l'une quelconque des revendications 1 à 66, **caractérisé en ce que**, durant leur mise en communication, la station et le dispositif de détection de présence constituent ensemble un relais, pour au moins un équipement doté d'une fonction téléphonique et connecté audit dispositif de détection de présence, vers le réseau de radiocommunication auquel est reliée la station.

**68.** Radiotéléphone, aussi appelé station, pouvant faire l'objet d'un usage multiple dans un même réseau de radiocommunication, et du type compris dans un système de radiocommunication,
**caractérisé en ce que** ladite station peut prendre au moins les deux états de fonctionnement suivants, définissant chacun au moins un paramètre d'état distinct, lesdits paramètres d'état distincts, définissant chacun l'un desdits états de fonctionnement, étant des identifiants réseau de ladite station et formant implicitement paramètres de transmission d'état vers un réseau de radiocommunication dudit système de radiocommunication :

- un état dit "station mobile", associé à une situation de mobilité géographique de la station;
- un état dit "station fixe", associé à une situation de fixité géographique de ladite station à l'intérieur d'un lieu fixe prédéterminé, étroitement délimité spatialement ;

la station fonctionnant, quel que soit sont état, au sein dudit réseau de radiocommunication,
et **en ce que** ladite station comprend :

- des moyens de basculement d'état de ladite station, de façon automatique et/ou sur commande d'un usager, en fonction de sa position géographique;
- des moyens de comparaison de la position de ladite station par rapport audit lieu fixe prédéterminé, de façon à déclencher ou valider, en temps réel ou a posteriori, chaque basculement d'état effectué par lesdits moyens de basculement, si ladite station passe effectivement de l'intérieur vers l'extérieur dudit lieu fixe prédéterminé, ou inversement, lesdits moyens de comparaison de la position de ladite station par rapport audit lieu fixe prédéterminé comprenant des moyens de détection de présence de ladite station à l'intérieur dudit lieu fixe prédéterminé, par mise en communication selon une technique de communication avec contact et ayant donc une portée nulle ou sans contact et ayant une portée inférieure à environ 50 m,de ladite station avec au moins un dispositif de détection de présence (DDP) de ladite station (MS) à l'intérieur dudit lieu fixe prédéterminé (LF), alors que la position géographique (C) et l'étendue (E) dudit lieu fixe prédéterminé (LF) sont définies respectivement par:
- la position géographique dudit au moins un dispositif de détection de présence et
- la portée de ladite technique de communication entre ledit au moins un dispositif de détection de présence et ladite station,

tandis que ladite station comprend un terminal et un module d'identification d'abonné de telle manière que ladite mise en communication de ladite station avec ledit dispositif de détection de présence soit réalisée par une mise en communication dudit module d'identification d'abonné avec ledit dispositif de détection de présence, de façon à permettre un dialogue entre ledit dispositif de détection de présence, ledit module d'identification d'abonné et ledit terminal.

**69.** Module d'identification d'abonné, du type destiné à coopérer avec un terminal au sein d'un radiotéléphone, aussi appelé station, pouvant faire l'objet d'un usage multiple dans un même réseau de radiocommunication, ladite station pouvant prendre au moins les deux états de fonctionnement suivants, définissant chacun au moins un paramètre d'état distinct, lesdits paramètres d'état distincts, définissant chacun l'un desdits états de fonctionnement, étant des identifiants réseau de ladite station et formant implicitement paramètres de transmission d'état vers un réseau de radiocommunication dudit système de radiocommunication:

- un état dit "station mobile", associé à une situation de mobilité géographique de la station;
- un état dit "station fixe", associé à une situation de fixité géographique de ladite station à l'intérieur d'un lieu fixe prédéterminé, étroitement délimité spatialement ;
la station fonctionnant, quel que soit sont état, au sein dudit réseau de radiocommunication,

**caractérisé en ce que** ledit module d'identification d'abonné comprend :

- des moyens de basculement d'état de ladite station, de façon automatique et/ou sur commande d'un usager, en fonction de sa position géographique;
- des moyens de comparaison de la position de ladite station par rapport audit lieu fixe prédéterminé, de façon à déclencher ou valider, en temps réel ou a posteriori, chaque basculement d'état effectué par lesdits moyens de basculement, si ladite station passe effectivement de l'intérieur vers l'extérieur dudit lieu fixe prédéterminé, ou inversement, lesdits moyens de comparaison de la position de ladite station par rapport audit lieu fixe prédéterminé comprenant des moyens de détection de présence de ladite station à l'intérieur dudit lieu fixe prédéterminé, par mise en communication selon une technique de communication avec contact et ayant donc une portée nulle ou sans contact et ayant une portée inférieure à environ 50 m, de ladite station avec au moins un dispositif de détection de présence (DDP) de ladite station (MS) à l'intérieur dudit lieu fixe prédéterminé (LF), alors que la position géographique (C) et l'étendue (E) dudit lieu fixe prédéterminé (LF) sont définies respectivement par:

- la position géographique dudit au moins un dispositif de détection de présence et
- la portée de ladite technique de communication entre ledit au moins un dispositif de détection de présence et ladite station,

ladite mise en communication de ladite station avec ledit dispositif de détection de présence étant réalisée par une mise en communication dudit module d'identification d'abonné avec ledit dispositif de détection de présence, de façon à permettre un dialogue entre ledit dispositif de détection de présence, ledit module d'identification d'abonné et ledit terminal.

**Claims**

1. Method enabling multiple use of a cellular phone in one same wireless communication network, said cellular phone also being called a station (MS) of the type included in a wireless communication system, **characterized in that** said station may assume at least the two following operating states, each one defined by at least one distinct state parameter, said distinct state parameters, each defining one of said operating states, being network identifiers of said station and implicitly forming state transmission parameters towards a wireless communication network of said wireless communication system :

- a so-called "mobile station" state, associated with a situation of geographical mobility of said station;
- a so-called "fixed station" state associated with a situation of geographical fixity of said station inside a predetermined fixed location (FL), closely delimited in space;

said station operating, whatever its state, within said wireless communication system, and **in that** said method comprises:

- at least one state switching step of said station, either automatic and/or on user command, in relation to the geographical position of said station;
- at least one comparison step to compare the position of said station relative to the said predetermined fixed location, so as to trigger or validate said at least one state switching step if said station effectively moves from inside to outside said predetermined fixed location, or conversely, said comparison step to compare the position of said station relative to the said predetermined fixed location comprising an operation to detect the presence of said station inside said predetermined fixed location, by the communication, according to a communication technique with contact and therefore having a null range or without contact and having a range lower than 50 m, of said station with at least one presence detection device (PDD) of said station (MS) inside said predetermined fixed location (FL), the geographical position (C) and extent (E) of said predetermined fixed location (FL) being respectively defined by:

- the geographical position of said at least one presence detection device, and
- the range of said communication technique between said at least one presence detection device and said station,

and **in that** said station comprises a terminal and a subscriber identification module so that said communication of said station with said presence detection device is made by a communication between said subscriber identification module and said presence detection device, so as to enable a dialogue between said presence detection device, said subscriber identification module and said terminal.

2. Method according to claim 1, **characterized in that** said predetermined fixed location belongs to the group comprising:

* in the case said communication technique between said at least one presence detection device and said station is with contact :

- precise geographical positions;

* in the case said communication technique between said at least one presence detection device and said station is without contact :

- private homes;
- workplaces;
- temporary places of presence;
- secondary homes;
- retail outlets.

3. Method according to any of claims 1 and 2, **characterized in that** said two distinct state parameters, each defining one of said operating states, are state parameters internal to said station and therefore are not network identifiers of said station, and **in that** said station transmits state transmission parameters to a wireless communication network of said wireless communication system such that said wireless communication network knows the operating state of said station.

4. Method according to either of claims 1 to 3, **characterized in that** said network identifiers of said station belong to the group comprising:

- IMSIs
- mobile numbers (MSISDN);
- fixed numbers;
- "inoperative" state parameters.

5. Method according to any of claims 1 to 4, **characterized in that** said two distinct state parameters, each one defining one of said operating states, form a pair belonging to the group comprising:

- two distinct IMSIs
- two distinct mobile numbers;
- one fixed number and one mobile number
- two distinct fixed numbers;
- two state parameters internal to said station.

6. Method according to any of claims 1 to 5, said station comprising a terminal and a subscriber identification module, **characterized in that** to implement said state switching step at least in part, said terminal and/or said subscriber identification module comprises a selection functionality to select one of said two distinct state parameters, so as to define a current operating state among said "mobile station" and "fixed station" states.

7. Method according to any of claims 1 to 6, **characterized in that** said station comprises a forwarding functionality for incoming calls, consisting of forwarding to the station in its current functioning state any incoming calls intended for said station when it is in one of said operating states which is not said current operating state.

8. Method according to any of claims 1 to 7, **characterized in that** each of said "fixed station" and "mobile station" states, in addition to said at least one distinct state parameter, has at least one own attribute.

9. Method according to any of claims 1 to 8, **characterized in that** said "fixed station" and "mobile station" states have at least one common attribute.

10. Method according to either of claims 8 and 9, **characterized in that** said at least one own attribute and said at least one common attribute belong to the group comprising:

    - invoicing modes for incoming calls;
    - invoicing modes for outgoing calls;
    - telephone numbers;
    - roaming rights;
    - rights to international calls;
    - added value functionalities and/or services (directory, WAP content services, etc..);
    - Internet access functionalities and/or services via the wireless communication network to which the station is linked;
    - functionalities and/or services for access to data and/or fax services;
    - voice mail functionalities and/or services;
    - forwarding functionalities and/or services;
    - address book functionalities and/or services;
    - directory functionalities and/or services.

11. Method according to any of claims 1 to 10, **characterized in that** said station does not change directly from the "fixed station" state to the "mobile station" state, but passes through an intermediate state called "logic fixed station" state in which said station continues to operate until the occurrence of at least one predetermined event, as in said "fixed station" state, even though the conditions for switching from the "fixed station" state to the "mobile station" state have been verified.

12. Method according to claim 11, **characterized in that** said at least one predetermined event is the endpoint of an armed time delay:

    - when communication between the station and the presence detection device ceases; and/or
    - when there is a change in or loss of said locating data derived from said wireless communication system and/or from said external locating system.

13. Method according to claim 12, **characterized in that** said time delay has an initial period which is extended by the duration of any communications established or received by said station during said initial period.

14. Method according to claim 11, **characterized in that** said at least one predetermined event is the occurrence of a network event.

15. Method according to claim 14, **characterized in that** said network event belongs to the group comprising:

    - periodic location updates;
    - handovers;
    - changes in attachment cell;
    - changes in relative position;
    - link loss with one or more neighbouring cells

16. Method according to claim 11, **characterized in that** said at least one predetermined event is voluntary action by the user.

17. Method according to claim 11, **characterized in that** said event is a change in the relative position of said station, estimated differentially by comparing the current position of said station and its last position(s) in communication with said presence detection device.

18. Method according to claim 17, **characterized in that** said comparison between the current position of the station and the last position(s) in communication with said presence detection device is estimated by calculating the position P of said station in the space of cells C1, C2,.., CN perceived by said station, the calculation of said position P being expressed as:

$$P = \lambda\ C1\ +\ \mu C2 +\ ..\ +\ \nu\ CN$$

in which the weights $\lambda$, $\mu$.., $\nu$ represent either the intensity of a signal received by said station, or a function of said intensity, or a time shift in signal propagation to said station, or a function of said time shift, or a combination function of at least two of these representation methods.

19. Method according to claim 17, **characterized in that** said comparison between the current position of the station and the last position(s) in communication with said presence detection device is estimated by determining the displacement of said station by means of a device integrated in said station, and preferably in an identification module contained in said station, said integrated device comprising:

- a position and/or displacement and/or speed and/or acceleration sensor and/or at least one inclinometer,
- a calculation and memorisation unit, separate or not from the standard calculation and memorisation unit of the identification module, and
- if there are two separate calculation and memorisation units, a communication channel between said separate calculation and memorisation units.

20. Method according to any of claims 1 to 19, **characterized in that** said "mobile station" state is deactivated and replaced by an "inoperative station" state so that said station may assume either said "fixed station" state or said "inoperative station" state.

21. Method according to claims 5 and 20, **characterized in that** said group of pairs of separate state parameters also comprises the following pairs:

- a mobile number and an "inoperative" state parameter
- a fixed number and an "inoperative" state parameter
- an IMSI and an 'inoperative" state parameter.

22. Method according to any of claims 1 to 21, **characterized in that** said subscriber identification module and said presence detection device are placed in communication according to a communication technique without contact and having a range lower than 50 m.

23. Method according to claim 22, said subscriber identification module conventionally comprising a first chip, **characterized in that** said subscriber identification module also comprises a second chip containing means for implementing said communication technique without contact, and **in that** said first and second chips may be simultaneously and/or alternately active and dialogue together, and **in that** said first and second chips are contained on one same substrate or contained on different substrates but connected by a communication channel.

24. Method according to claim 23, **characterized in that** said first and second chips are supplied by said terminal.

25. Method according to claim 23, **characterized in that** said second chip draws its energy from a signal derived from said presence detection device.

26. Method according to claim 22, said subscriber identification module conventionally comprising a chip, **characterized in that** said chip contains means for implementing said communication technique without contact.

27. Method according to any of claims 1 to 26, **characterized in that** said dialogue between said terminal, said subscriber identification module and said presence detection device makes it possible to perform:

- said operation detecting the presence of said station inside said predetermined fixed location;
- and in addition at least one additional function.

28. Method according to claim 27, **characterized in that** said at least one additional function belongs to the group comprising:

- identification functions of said subscriber identification module by said presence detection device, and/or vice-versa;
- authentication functions of said subscriber identification module by said presence detection device, and/or vice-versa;
- data exchange functions, irrespective of subject, between:

  * firstly said terminal and/or said subscriber identification module and/or at least one item of equipment or computer application positioned on and/or upstream from the wireless communication network to which said station has access;
  * and, secondly, said presence detection device and/or at least one item of equipment or at least one computer application positioned downstream from said presence detection device.

29. Method according to any of claims 1 to 21, 27 and 28, **characterized in that** said communication technique wit contact belongs to the group comprising:

- communication techniques with electric contacts;
- communication techniques with electronic contacts;
- communication techniques with mechanical contacts;
- a combination of at least two types of above-mentioned communication techniques with contact.

30. Method according to any of claims 1 to 28, **characterized in that** said communication techniques without contact belongs to the group comprising:

- short range communication techniques without contact, from approximately 0.1 cm to 2 m, and medium range, from approximately 0.1 cm to 50 m, by electromagnetic waves of any type;
- short range communication techniques without contact, of approximately 0.5 cm to 2 m, and medium range, of approximately 0.1 cm to 50 m, by sound or ultrasound waves.

31. Method according to any of claims 1 to 28, **characterized in that** said communication technique without contact is made according to "Contactless" technique methods based on adaptation of norms ISO 14443 and 15693 enabling short range communication without contact, by electromagnetic waves.

32. Method according to any of claims 1 to 28, **characterized in that** said communication technique without contact is achieved using the technique of active and/or passive tags enabling short and/or medium range communication without contact, by electromagnetic waves.

33. Method according to any of claims 1 to 28, **characterized in that** said communication technique without contact is achieved using a communication technique via infrared enabling medium range communication without contact, by electromagnetic waves.

34. Method according to any of claims 1 to 28, **characterized in that** said communication technique without contact is achieved using a communications technique of "Bluetooth" type, enabling medium range communication without contact, by electromagnetic waves.

35. Method according to claim 34, **characterized in that** said communications of "Bluetooth" type enabling said communication without contact are implemented by exchange of asynchronous messages between two applications, one performed on the subscriber identification module and the other on the presence detection device, said asynchronous messages being triggered at the initiative of either one of said applications, **in that** the application performed by the subscriber identification module is based on two data messages, send and receive respectively, towards the presence detection device, and **in that** the application performed by the presence detection device is based on two data messages, send and receive respectively, towards the subscriber identification module.

36. Method according to any of claims 1 to 28, **characterized in that** said communication technique without contact is made using the electromagnetic communications technique in the 400 MHz or 900 MHZ bands, enabling medium range communication without contact, by electromagnetic waves.

37. Method according to any of claims 1 to 28, **characterized in that** the presence detection device has a simplified base station emulating function, and is associated with a geographical pseudo-cell having an identifier, and **in that** said communication without contact is made when the station, preferably the subscriber identification module, recognizes said identifier of the geographical pseudo-cell.

38. Method according to any of claims 1 to 28, **characterized in that** said communication without contact is made using the communications technique via wireless local networks, enabling medium range communication without contact, by electromagnetic waves.

39. Method according to any of claims 1 to 38, **characterized in that** it comprises an irreversible fixing step of said presence detection device on a non-removable building support, so as to prohibit any displacement of said presence detection device.

40. Method according to any of claims 1 to 39, **characterized in that** it comprises a limitation step limiting the displacement of said presence detection device, itself comprising the following steps:

   - initialisation of said presence detection device;
   - counting the number N of displacements of said presence detection device by a user, from said predetermined fixed location to another predetermined fixed location;
   - when said number N of displacements becomes greater than a maximum number of displacements $N_{max}$, predetermined or defined in adaptive manner, where $N_{max} \geq 0$, triggering of a procedure prohibiting operation in said "fixed station" state and/or sending of an alert to a management system and/or informing the user of said overstepping.

41. Method according to claim 40, **characterized in that** said prohibited operation of the station in "fixed station" state may be lifted by at least one of the operations belonging to the group comprising:

   - entry of a re-enabling code by the user into said station and/or said presence detection device;
   - sending of a message, by the wireless communication network to which the station has access, to the station and/or the presence detection device via the station.

42. Method according to claim 41, **characterized in that** said re-enabling code varies for each re-enabling and conforms either to a predefined algorithm, or to a predefined list of re-enabling code values, said algorithm and/or said list being different for each presence detection device.

43. Method according to any of claims 40 to 42, **characterized in that** said procedure prohibiting operation in said "fixed station" state consists of applying a first time delay, interdicting changeover of the station to the "fixed station" state for a first predetermined time interval after it has been detected that the number N of displacements has exceeded said maximum number $N_{max}$ of displacements.

44. Method according to claim 43, **characterized in that** the initial duration of the first time delay is approximately 24 hours.

45. Method according to any of claims 40 to 44, **characterized in that** said initialisations are produced:

   - periodic fashion,
   - and/or on receipt of a message from the wireless communication network to which the station has access;
   - and/or according to a predetermined initialisation strategy;
   - and/or after each (re)connection of said presence detection device to the electricity network and/or to the public switched telephone network.

46. Method according to any of claims 40 to 45, **characterized in that** said counting step to count the number N of displacements, after initial connection and associated initialisation, consists of counting the number of reconnections of said presence detection device to an electricity network and/or a telephone network.

47. Method according to any of claims 40 to 45,

characterized in that, when functioning after a given initialisation of said presence detection device, said presence detection device estimates the distance it has covered since said given initialisation,

and **in that** said counting step to count the number N of displacements of said presence detection device consists of counting the number of times said estimated distance exceeds a maximum distance.

48. Method according to claim 47, **characterized in that** said estimate by the presence detection device of the distance it has covered, is made by means of at least one displacement and/or speed and/or acceleration sensor and/or at least one inclinometer.

49. Method according to claim 48, **characterized in that** said estimate by the presence detection device of the distance it has covered is calculated by an elementary event function generated by said at least one displacement and/or speed and/or acceleration sensor and/or at least one inclinometer,

and **in that** the number of displacements is incremented by one unit if the value of said elementary event function exceeds a determined threshold.

50. Method according to claim 49, **characterized in that** said threshold is downloaded by a message sent by the wireless communication network, to which the station has access, towards the presence detection device, via the station.

51. Method according to any of claims 40 to 45, **characterized in that** said presence detection device is connected to the switched telephone network and **in that** at each resetting of said presence detection device, said presence detection device communicates its fixed line identifier via the switched telephone network, either to a first server, or to said station directly or via a second server,

and **in that** said counting step to count the number N of displacements of said presence detection device consists of counting the number of distinct fixed line identifiers used by said presence detection device at the time of successive initialisations.

52. Method according to claim 51, **characterized in that**, at each initialisation of said presence detection device, said presence detection device also communicates its device identifier to said station, via said communication, and said station memorizes the association between said fixed line identifier and said device identifier,

and **in that**, when operating after a given initialisation of said presence detection device, the station receives said device identifier from said presence detection device at each communication, and verifies that it is identical to the memorised device identifier and associated with the fixed line identifier at the time of said given initialisation.

53. Method according to any of claims 40 to 45, **characterized in that**, at each initialisation of said presence detection device, said station locates and memorizes its position in the space of the cells it perceives,

and **in that**, when functioning, after each communication with the said presence detection device, the station calculates the distance between its current position and either its last memorized position, or the barycentre or another function of at least some last positions previously detected and memorized,

and **in that** said counting step to count the number N of displacements of said presence detection device, consists of counting the number of times said distance exceeds a maximum distance.

54. Method according to any of claims 40 to 45, **characterized in that**, during successive communications between said presence detection device and said station, said station detects the identifiers of the cells perceived and/or used by the station for calls,

and **in that** said counting step consists of incrementing by one unit the number N of displacements of said presence detection device if the accumulated number of separate identifiers of cells perceived and/or used by the station during said successive communications exceeds a determined threshold.

55. Method according to claim 54, **characterized in that** said threshold is downloaded by a message sent by the wireless communication network, to which the station has access, towards the presence detection device, via the station.

56. Method according to any of claims 40 to 45, **characterized in that** during successive communications between said presence detection device and said station, said station detects the identifiers of the cells perceived and/or used by the station for calls,

and **in that** said counting step consists of incrementing by one unit the number N of displacements of said presence detection device if the identifiers of the cells perceived and/or used by the station during said successive communications do not belong to a determined list of authorized cells.

57. Method according to any of claims 1 to 56, **characterized in that**, after said communication between said station and said presence detection device, said method comprises the following steps:

- deactivation of at least one functionality of said station, and
- coupling, via said presence detection device, the use of said station with the use of fixed equipment offering at least said at least one deactivated functionality

so that in said "fixed station" state, said station may only be used with said fixed equipment.

58. Method according to claim 57, **characterized in that** said at least one deactivated functionality of the station belongs to the group comprising: the speaker, microphone and call reception means.

59. Method according to any of claims 1 to 58, **characterized in that** a second time delay enables maintained functioning of said presence detection device for a second predetermined time interval after it has been disconnected from an electricity network and/or telephone network, so as to authorize interrupted connections of a duration equivalent to or less than said second time period.

60. Method according to claim 59, **characterized in that** said second duration of said second time delay is approximately 15 minutes.

61. Method according to either or claims 43 and 59, **characterized in that** at least one of said first and second time periods is dynamically adaptable in relation to at least one predetermined adaptation parameter.

62. Method according to either of claims 43 and 59, **characterized in that** said first time delay and/or said second time delay is (are) implemented in the presence detection device.

63. Method according to any of claims 1 to 62, **characterized in that** said presence detection device also assures a charger base function, with which to recharge a battery contained in said station, when said station communicates with said presence detection device.

64. Method according to any of claims 1 to 63, **characterized in that** said at least one presence detection device may be placed in communication, optionally in simultaneous manner, with at least two stations, to allow presence detection of each of said at least two stations inside said predetermined fixed location.

65. Method according to any of claims 1 to 64, **characterized in that** said at least one presence detection device and said station use unilateral or mutual identification and/or authentication mechanisms.

66. Method according to any of claims 1 to 65, **characterized in that** after communication between the station and the presence detection device, said method comprises a downloading step from the presence detection device to the station, in securitized manner, to download a temporary network identifier of the station and optionally at least one associated attribute, so that the station operates solely during the time of said communication, in said "fixed station" state and with the downloaded temporary network identifier, and optionally said at least one associated attribute.

67. Method according to any of claims 1 to 66, **characterized in that**, during their communication, the station and the presence detection device together form a relay, for at least one item of equipment having a telephone function and connected to said presence detection device, towards the wireless communication network to which the station is linked.

68. Cellular phone, also called station, which can form the subject of a multiple use in one same wireless communication network, and of the type included in a wireless communication system, **characterized in that** said station may assume at least the two following operating states, each one defining at least one distinct state parameter, said distinct state parameters, each defining one of said operating states, being network identifiers of said station and implicitly forming state transmission parameters towards a wireless communication network of said wireless communication system:

- a so-called "mobile station" state, associated with a situation of geographical mobility of the station;

- a so-called "fixed station" state, associated with a situation of geographical fixity of said station inside a predetermined fixed location, closely delimited in space;

said station operating, whatever its state, within said wireless communication system, and **in that** said station comprises:

- state switching means for said station, automatic and/or on user command, in relation to its geographical position;
- comparison means to compare the position of said station relative to a predetermined fixed location so as to trigger or validate, in real or delayed time, each state changeover made by said switching means if said station effectively moves from inside to outside said predetermined fixed location, or conversely, said comparison means to compare the position of said station relative to the said predetermined fixed location comprising detection means to detect the presence of said station inside said predetermined fixed location, by the communication, according to a communication technique with contact and therefore having a null range or without contact and having a range lower than 50 m, of said station with at least one presence detection device (PDD) of said station (MS) inside said predetermined fixed location (FL), the geographical position (C) and extent (E) of said predetermined fixed location (FL) being respectively defined by:
- the geographical position of said at least one presence detection device, and
- the range of said communication technique between said at least one presence detection device and said station,

and **in that** said station comprises a terminal and a subscriber identification module so that said communication between said station and said presence detection device is made by a communication between said subscriber identification module and said presence detection device, so as to enable a dialogue between said presence detection device, said subscriber identification module and said terminal.

69. Subscriber identification module, of the type intended to cooperate with a terminal within a cellular phone, also called a station, which can form the subject of a multiple use in one same wireless communication network, said station may assume at least the two following operating states, each one defining at least one distinct state parameter, said distinct state parameters, each defining one of said operating states, being network identifiers of said station and implicitly forming state transmission parameters towards a wireless communication network of said wireless communication system:

- a so-called "mobile station" state, associated with a situation of geographical mobility of the station;
- a so-called "fixed station" state associated with a situation of geographical fixity of said station inside a predetermined fixed location, closely delimited in space;
said station operating, whatever its state, within said wireless communication system,

**characterized in that** said subscriber identification module comprises:

- state switching means for said station, automatic and/or on user command, in relation to its geographical position;
- comparison means to compare the position of said station relative to said predetermined fixed location, so as to trigger or validate, in real or delayed time, each state changeover made by said switching means, if said station effectively moves from inside to outside said predetermined fixed location, or conversely, said comparison means to compare the position of said station relative to the said predetermined fixed location comprising detection means to detect the presence of said station inside said predetermined fixed location, by the communication, according to a communication technique with contact and therefore having a null range or without contact and having a range lower than 50 m, of said station with at least one presence detection device (PDD) of said station (MS) inside said predetermined fixed location (FL), the geographical position (C) and extent (E) of said predetermined fixed location (FL) being respectively defined by:

- the geographical position of said at least one presence detection device, and
- the range of said communication technique between said at least one presence detection device and said station,

said communication of said station with said presence detection device being made by a communication between said subscriber identification module and said presence detection device, so as to enable a dialogue between said presence detection device, said subscriber identification module and said terminal.

**Patentansprüche**

1. Verfahren, das eine mehrfache Verwendung eines Funktelefons innerhalb eines selben Funkkommunikationsnetzes erlaubt, wobei das Funktelefon auch Station (MS) genannt wird und von der Art ist, welches in ein Funkkommunikationssystem eingebettet ist,
**dadurch gekennzeichnet, dass** die Station mindestens die zwei nachfolgenden Funktionszustände annehmen kann, die jeweils durch einen Parameter für einen anderen Zustand definiert sind, wobei diese Parameter für einen anderen Zustand, die jeweils eines der Funktionszustände definieren, Netzidentifizierungskennzeichen der Station sind und implizit Zustandsübertragungsparameter zu einem Funkkommunikationsnetz des besagten Funkkommunikationssystem bilden:

   - ein "mobile Station" genannter Zustand, der mit einer geographischen Mobilitätssituation der Station zusammenhängt;
   - ein "feste Station" genannter Zustand, der mit einer Situation der Station zusammenhängt, bei der diese geographisch innerhalb eines festen, vorgegebenen, räumlich eng eingeschränkten Ortes (LF) unbeweglich ist;

   wobei die Station unabhängig von ihrem Zustand innerhalb des Funkkommunikationsnetzes arbeitet, und
   wobei das Verfahren folgendes umfasst:

   - mindestens einen Schritt für das Ändern des Zustandes der Station, entweder automatisch und/oder auf Befehl eines Benutzers, als Funktion der geographischen Lage der Station;
   - mindestens einen Schritt zum Vergleichen der Position der Station im Verhältnis zu dem besagten festen, vorgegebenen Ort, um den mindestens einen Schritt zum Ändern des Zustandes einzuleiten oder zu validieren, wenn sich die Station tatsächlich von innerhalb nach außen des festen, vorgegebenen Ortes bewegt, oder wenn umgekehrt der Schritt zum Vergleichen der Position der Station im Verhältnis zum festen, vorgegebenen Ort eine Operation zum Erfassen der Anwesenheit der Station im Inneren des festen, vorgegebenen Ortes umfasst, durch Verbindung der Station mit mindestens einer Vorrichtung zum Erfassen der Anwesenheit (DDP) der Station (MS) innerhalb des festen, vorgegebenen Ortes (LF), nach einer Kommunikationstechnik mit Kontakt, die demnach eine Reichweite von Null aufweist oder ohne Kontakt, wobei die Reichweite kleiner als ca. 50 m ist, wobei die geographische Lage (C) und die Flächenausdehnung (E) des festen, vorgegebenen Ortes (LF) jeweils definiert werden durch:

      - die geographische Lage der mindestens einen Vorrichtung zum Erfassen der Anwesenheit und
      - die Reichweite der besagten Kommunikationstechnik zwischen der mindestens einen Vorrichtung zum Erfassen der Anwesenheit und der Station,

   während die Station ein Terminal und ein Teilnehmeridentifizierungsmodul aufweist, so dass die besagte Verbindung der Station mit der Vorrichtung zum Erfassen der Anwesenheit durch Verbindung des Teilnehmeridentifizierungsmoduls mit der besagten Vorrichtung zum Erfassen der Anwesenheit erfolgt, so dass ein Dialog zwischen der Vorrichtung zum Erfassen der Anwesenheit, dem Teilnehmeridentifizierungsmodul und dem Terminal ermöglicht wird.

2. Verfahren nach Anspruch 1, **dadurch gekennzeichnet, dass** der feste, vorgegebene Ort der folgendes umfassenden Gruppe gehört:

   * für den Fall, dass die besagte Kommunikationstechnik zwischen der mindestens einen Vorrichtung zum Erfassen der Anwesenheit und der Station von der Art mit Kontakt ist:

      - genaue geographische Lagen;

   * für den Fall, dass die besagte Kommunikationstechnik zwischen der mindestens einen Vorrichtung zum Erfassen der Anwesenheit und der Station von der Art ohne Kontakt ist:

      - Privatwohnungen;
      - Arbeitsstellen;

- vorläufige Aufenthaltsorte;
- Zweitwohnungen;
- Einzelhandelsgeschäfte.

**3.** Verfahren nach einem der Ansprüche 1 oder 2, **dadurch gekennzeichnet, dass** die zwei Parameter für verschiedene Zustände, die jeweils einen der erwähnten Arbeitszustände definieren, innere Zustandsparameter der Station und somit keine Netzidentifizierer der Station sind, und
dass die Station Zustandsübertragungsparameter derart zu einem Funkkommunikationsnetz des besagten Funkkommunikationssystems sendet, dass dieses Funkkommunikationsnetz den Funktionszustand der Station kennt.

**4.** Verfahren nach einem der Ansprüche 1 bis 3, **dadurch gekennzeichnet, dass** die Netzidentifizierer der Station zu der folgendes umfassenden Gruppe gehören:

- IMSIs (International Mobile Subscriber Identity - Internationale Teilnehmeridentität im Mobilfunk);
- Mobilnummern (MSISDN);
- feste Nummern;
- "außer Dienst" Zustandsparameter.

**5.** Verfahren nach einem der Ansprüche 1 bis 4, **dadurch gekennzeichnet, dass** die erwähnten zwei Parameter für verschiedene Zustände, die jeweils einen der Funktionszustände beschreiben, ein Paar bilden, das zu der folgendes umfassenden Gruppe gehört:

- zwei verschiedene IMSI;
- zwei verschiedene Mobilnummern;
- eine feste Nummer und eine Mobilnummer;
- zwei verschiedene feste Nummern;
- zwei stationsinterne Zustandsparameter.

**6.** Verfahren nach einem der Ansprüche 1 bis 5, wobei die Station ein Terminal und ein Teilnehmeridentifizierungsmodul umfasst,
**dadurch gekennzeichnet, dass** um den Schritt für das Ändern des Zustandes zumindest teilweise einzusetzen, das Terminal und/oder das Teilnehmeridentifizierungsmodul eine Wahlfunktion eines der zwei Parameter für verschiedene Zustände umfasst, um einen laufenden Funktionszustand unter den Zuständen für "mobile Station" und für "feste Station" zu definieren.

**7.** Verfahren nach einem der Ansprüche 1 bis 6, **dadurch gekennzeichnet, dass** die Station über eine Funktion zum Rückleiten eingehender Anrufe verfügt, die darin besteht, eingehende Anrufe, die für die Station bestimmt sind, wenn sich diese in einem Funktionszustand befindet, der nicht der übliche Funktionszustand ist, dann an die Station zurückzuleiten, wenn sich diese im üblichen Funktionszustand befindet.

**8.** Verfahren nach einem der Ansprüche 1 bis 7, **dadurch gekennzeichnet, dass** jeder der so genannten "feste Station" und "mobile Station" Zustände neben dem mindestens einen Parameter für einen anderen Zustand auch mindestens ein eigenes Attribut aufweist.

**9.** Verfahren nach einem der Ansprüche 1 bis 8, **dadurch gekennzeichnet, dass** diese "feste Station" und "mobile Station" Zustände mindestens ein gemeinsames Attribut aufweisen.

**10.** Verfahren nach einem der Ansprüche 8 oder 9, **dadurch gekennzeichnet, dass** das mindestens eine eigene Attribut und das mindestens eine gemeinsame Attribut zu der Folgendes umfassenden Gruppe gehört:

- Methoden zum in Rechnung stellen eingehender Anrufe;
- Methoden zum in Rechnung stellen ausgehender Anrufe;
- Telefonnummer;
- Roamingrechte;
- Rechte auf internationale Anrufe;
- Funktionen und/oder Dienste mit Mehrwert (Telefonbuch, WAP Inhaltsdienste usw.);
- Funktionen und/oder Zugangsdienste für das Internet über das Funkkommunikationsnetz, mit dem die Station verbunden ist;

- Funktionen und/oder Zugangsdienste für gegebene Dienstleistungen und/oder Faxdienstleistungen;
- sprechende Mailboxfunktionen und/oder -dienstleistungen;
- Rücksendungsfunktionen und/oder -dienstleistungen;
- Verzeichnisfunktionen und/oder -dienstleistungen;
- Teilnehmerverzeichnisfunktionen und/oder -dienstleistungen.

11. Verfahren nach einem der Ansprüche 1 bis 10, **dadurch gekennzeichnet, dass** die besagte Station nicht direkt vom "feste Station" Zustand zum "mobile Station" Zustand übergeht, sondern über einen "feste logische Station" genannten Zwischenzustand geht, in dem diese Station weiter funktioniert, bis zur Realisierung von mindestens einem vorgegebenen Ereignis, wie im Zustand "feste Station", obwohl der Nachweis für das Vorhandensein von Bedingungen für das Ändern des Zustandes "feste Station" in den Zustand "bewegliche Station" erbracht ist.

12. Verfahren nach Anspruch 11, **dadurch gekennzeichnet, dass** das mindestens eine vorgegebene Ereignis der Ablauf einer angesetzten Verzögerung ist:

   - beim Abbruch der Verbindung der Station mit der Vorrichtung zum Erfassen der Anwesenheit und/oder,
   - bei Änderung oder Verlust der aus dem Funkkommunikationssystem und/oder dem externen Ortungssystem kommenden Ortungsinformationen.

13. Verfahren nach Anspruch 12, **dadurch gekennzeichnet, dass** die Verzögerung eine anfängliche Dauer aufweist, die um die Dauer einer (mehrerer) eventuell von der Station während der besagten anfänglichen Dauer aufgestellten oder empfangenen Verbindung (aufgestellte oder empfangene Verbindungen) verlängert wird.

14. Verfahren nach Anspruch 11, **dadurch gekennzeichnet, dass** das mindestens eine vorgegebene Ereignis die Realisierung eines Netzereignisses ist.

15. Verfahren nach Anspruch 14, **dadurch gekennzeichnet, dass** das besagte Netzereignis zu der folgendes umfassenden Gruppe gehört:

   - die periodischen Aktualisierungen der Ortung ("periodic location update");
   - "handovers";
   - Änderungen der Anschlusszelle;
   - relative Positionsänderungen;
   - Verluste einer Verbindung mit einer oder mehreren Nachbarzelle(n).

16. Verfahren nach Anspruch 11, **dadurch gekennzeichnet, dass** das mindestens eine vorgegebene Ereignis eine freiwillige Aktion eines Teilnehmers ist.

17. Verfahren nach Anspruch 11, **dadurch gekennzeichnet, dass** das besagte Ereignis eine relative Positionsänderung der Station ist, die durch Vergleich der derzeitigen Position der Station mit ihrer (ihren) letzten Position(en) während der Verbindung mit der Vorrichtung zum Erfassen der Anwesenheit, differentiell geschätzt wird.

18. Verfahren nach Anspruch 17, **dadurch gekennzeichnet, dass** der Vergleich zwischen der derzeitigen Position der Station und der letzten Position oder die letzten Positionen während der Verbindung mit der Vorrichtung zum Erfassen der Anwesenheit geschätzt wird, indem die Position P der besagten Station im Raum der von der Station wahrgenommenen Zellen C1, C2, ...; CN berechnet wird, wobei die Berechnung dieser Position P wie folgt ausgedrückt wird:

$$P = \lambda C1 + \mu C2 + ... + \nu CN$$

wobei die Gewichte $\lambda$, $\mu$, ..., $\nu$ entweder die Intensität eines von der Station empfangenen Signals, eine Funktion dieser Intensität, eine zeitliche Verschiebung der Ausbreitung des Signals bis zur besagten Station, eine Funktion der besagten zeitlichen Verschiebung oder eine Funktion darstellen, die eine Kombination von mindestens zwei dieser Darstellungsmethoden ist.

19. Verfahren nach Anspruch 17, **dadurch gekennzeichnet, dass** der Vergleich zwischen der aktuellen Position der Station und der (den) letzten Position(en) in Verbindung mit der Vorrichtung zum Erfassen der Anwesenheit geschätzt wird, indem die Bewegung der Station mit Hilfe einer in der Station eingebauten Vorrichtung, bevorzugterweise in einem in der Station eingebauten Identifizierungsmodul, bestimmt wird, wobei diese eingebaute Vorrichtung folgendes umfasst:

- eine Erfassungseinheit für die Position und/oder die Bewegung und/oder die Geschwindigkeit und/oder die Beschleunigung, und/oder mindestens einen Neigungsmesser;
- eine Rechen- und Speichereinheit, die der Standardrechen- und Speichereinheit des Identifizierungsmodul gleich sein kann oder nicht, und
- falls es zwei verschiedene Rechen- und Speichereinheiten gibt, einen Verbindungskanal zwischen diesen zwei verschiedenen Rechen- und Speichereinheiten.

20. Verfahren nach einem der Ansprüche 1 bis 19, **dadurch gekennzeichnet, dass** der "mobile Station" Zustand deaktiviert wird und durch einen "Station außer Dienst" Zustand ersetzt wird, so dass die Station entweder den Zustand "feste Station" oder den Zustand "Station außer Dienst" einnehmen kann.

21. Verfahren nach einem der Ansprüche 5 oder 20, **dadurch gekennzeichnet, dass** die Gruppe von Parameterpaaren für verschiedene Zustände ferner die folgenden Paare aufweist:

- eine mobile Nummer und einen "außer Dienst" Zustandsparameter;
- eine feste Nummer und einen "außer Dienst" Zustandsparameter;
- eine IMSI und einen "außer Dienst" Zustandsparameter.

22. Verfahren nach einem der Ansprüche 1 bis 21, **dadurch gekennzeichnet, dass** das Teilnehmeridentifizierungsmodul und die Vorrichtung zum Erfassen der Anwesenheit nach einer kontaktlosen Kommunikationstechnik, die eine Reichweite von weniger als etwa 50 m aufweist, miteinander verbunden werden.

23. Verfahren nach Anspruch 22, wobei das Teilnehmeridentifizierungsmodul in klassischer Weise einen ersten Chip umfasst, **dadurch gekennzeichnet, dass** das Teilnehmeridentifizierungsmodul darüber hinaus einen zweiten Chip umfasst, welcher Mittel zum Einsetzen der erwähnten kontaktlosen Kommunikationstechnik aufweist, und

dass der besagte erste und der besagte zweite Chip gleichzeitig und/oder alternativ aktiv sein und miteinander in den Dialog treten können, und

dass der besagte erste und der besagte zweite Chip auf einem ersten Substrat oder auf verschiedene Substrate angebracht sind, wobei diese dann über einen Verbindungskanal miteinander verbunden sind.

24. Verfahren nach Anspruch 23, **dadurch gekennzeichnet, dass** der erwähnte erste und zweite Chip vom Terminal versorgt werden.

25. Verfahren nach Anspruch 23, **dadurch gekennzeichnet, dass** der erwähnte zweite Chip seine Energie aus einem von der Vorrichtung zum Erfassen der Anwesenheit kommenden Signal bezieht.

26. Verfahren nach Anspruch 22, wobei das Teilnehmeridentifizierungsmodul in klassischer Weise einen Chip umfasst, **dadurch gekennzeichnet, dass** dieser Chip über Mittel zum Einsatz der kontaktlosen Kommunikationstechnik verfügt.

27. Verfahren nach einem der Ansprüche 1 bis 26, **dadurch gekennzeichnet, dass** der Dialog zwischen dem Terminal, dem Teilnehmeridentifizierungsmodul und der Vorrichtung zum Erfassen der Anwesenheit folgendes ermöglicht:

- das Durchführen der Erfassung der Anwesenheit der Station innerhalb des vorgegebenen festen Ortes, und
- darüber hinaus mindestens eine zusätzliche Funktion.

28. Verfahren nach Anspruch 27, **dadurch gekennzeichnet, dass** die besagte mindestens eine zusätzliche Funktion zu der folgendes umfassenden Gruppe gehört:

- Identifizierungsfunktionen des besagten Teilnehmeridentifizierungsmoduls durch die Vorrichtung zum Erfassen der Anwesenheit und/oder umgekehrt;
- Funktionen zum Authentifizieren des Teilnehmeridentifizierungsmoduls durch die Vorrichtung zum Erfassen der Anwesenheit und/oder umgekehrt;
- Datenaustauschfunktionen, unabhängig vom Zweck, zwischen:

* einerseits dem Terminal und/oder dem Teilnehmeridentifizierungsmodul und/oder mindestens einer EDV-Ausrüstung oder einer EDV-Anwendung, die sich innerhalb und/oder vor dem Funkkommunikationsnetz befindet, zu dem die Station Zugang hat, und
* andererseits der Vorrichtung zum Erfassen der Anwesenheit und/oder mindestens einer EDV-Ausrüstung oder einer EDV-Anwendung, die nach der Vorrichtung zum Erfassen der Anwesenheit angebracht ist.

29. Verfahren nach einem der Ansprüche 1 bis 21, 27 oder 28, **dadurch gekennzeichnet, dass** die Kommunikationstechnik mit Kontakt zu der folgendes umfassenden Gruppe gehört:

- Kommunikationstechniken mit elektrischem Kontakt;
- Kommunikationstechniken mit elektronischem Kontakt;
- Kommunikationstechniken mit mechanischem Kontakt;
- eine Kombination von mindestens zwei Typen von Kommunikationstechniken mit einem der oben erwähnten Kontaktarten.

30. Verfahren nach einem der Ansprüche 1 bis 28, **dadurch gekennzeichnet, dass** die erwähnte kontaktlose Kommunikationstechnik zu der folgendes umfassenden Gruppe gehört:

- kontaktlose Kommunikationstechnik über kurze Entfernungen, zwischen etwa 0,5 cm und ca. 2 m sowie über mittlere Entfernungen zwischen etwa 0,1 cm und ca. 50 m, mittels elektromagnetischer Wellen jeder Art;
- kontaktlose Kommunikationstechnik über kurze Entfernungen, zwischen etwa 0,1 cm und ca. 2 m sowie über mittlere Entfernungen zwischen etwa 0,1 cm und ca. 50 m, mittels Schall- oder Ultraschallwellen.

31. Verfahren nach einem der Ansprüche 1 bis 28, **dadurch gekennzeichnet, dass** die kontaktlose Kommunikationstechnik nach der Technik der auf einer Anpassung der Normen ISO 14443 und 15693 basierenden "Contactless"-Verfahren ausgeführt wird und die eine kontaktlose Kommunikation über kurze Entfernungen mittels elektromagnetischer Wellen ermöglicht.

32. Verfahren nach einem der Ansprüche 1 bis 28, **dadurch gekennzeichnet, dass** die kontaktlose Kommunikationstechnik nach der Technik der auf aktiven und/oder passiven Etiketten basierenden Verfahren ausgeführt wird, welche eine kontaktlose Kommunikation über kurze und/oder mittlere Entfernungen mittels elektromagnetischer Wellen ermöglicht.

33. Verfahren nach einem der Ansprüche 1 bis 28, **dadurch gekennzeichnet, dass** die kontaktlose Kommunikationstechnik nach der Infrarot-Kommunikationstechnik ausgeführt wird, die eine kontaktlose Kommunikation über mittlere Entfernungen mittels elektromagnetischer Wellen ermöglicht.

34. Verfahren nach einem der Ansprüche 1 bis 28, **dadurch gekennzeichnet, dass** die kontaktlose Kommunikationstechnik nach der "Bluetooth" Kommunikationstechnik ausgeführt wird, die eine kontaktlose Kommunikation über mittlere Entfernungen mittels elektromagnetischer Wellen ermöglicht.

35. Verfahren nach Anspruch 34, **dadurch gekennzeichnet, dass** die erwähnten "Bluetooth" Kommunikationen, welche die kontaktlose Kommunikationsverbindung ermöglichen, durch Austausch asynchroner Meldungen zwischen zwei Anwendungen zum Einsatz kommen, wobei eine dieser Anwendungen auf das Teilnehmeridentifizierungsmodul und die andere auf die Vorrichtung zur Erfassung der Anwesenheit ausgeführt wird, wobei die asynchronen Meldungen auf Initiative der einen oder der anderen der erwähnten Anwendungen ausgelöst werden, dass die vom Teilnehmeridentifizierungsmodul ausgeführte Anwendung sich auf zwei Meldungen stützt, die für das Senden bzw. für den Empfang von Daten an die Vorrichtung zum Erfassen der Anwesenheit zuständig sind, und dass die von der Vorrichtung zum Erfassen der Anwesenheit ausgeführte Anwendung sich auf zwei Meldungen stützt, die für das Senden bzw. für den Empfang von Daten an das Teilnehmeridentifizierungsmodul zuständig sind.

36. Verfahren nach einem der Ansprüche 1 bis 28, **dadurch gekennzeichnet, dass** die kontaktlose Kommunikationstechnik nach der Kommunikationstechnik über Funkverbindung innerhalb des 400 MHz- oder des 900 MHz-Bandes erfolgt, die eine kontaktlose Kommunikation über mittlere Entfernungen mittels elektromagnetischer Wellen ermöglicht.

37. Verfahren nach einem der Ansprüche 1 bis 28, **dadurch gekennzeichnet, dass** die Vorrichtung zum Erfassen der Anwesenheit eine vereinfachte Funktion zum Emulieren der Basisstation umfasst und mit einer geographischen Pseudozelle assoziiert ist, die ein Identifizierungskennzeichen besitzt, und

dass die Verbindung mittels kontaktloser Kommunikation dann erfolgt, wenn die Station, und bevorzugterweise das Teilnehmeridentifizierungsmodul, das erwähnte identifizierende Kennzeichen der geographischen Pseudozelle erkennt.

38. Verfahren nach einem der Ansprüche 1 bis 28, **dadurch gekennzeichnet, dass** die Verbindung mittels kontaktloser Kommunikation nach der Kommunikationstechnik über lokale Funknetze erfolgt, die eine kontaktlose Kommunikation über mittlere Entfernungen mittels elektromagnetischer Wellen ermöglicht.

39. Verfahren nach einem der Ansprüche 1 bis 38, **dadurch gekennzeichnet, dass** es einen unumkehrbaren Schritt zum Feststellen der Vorrichtung zum Erfassen der Anwesenheit auf einer unbeweglichen und nicht versetzbaren Auflage aufweist, um ein Verrücken der Vorrichtung zum Erfassen der Anwesenheit auf jeden Fall zu verhindern.

40. Verfahren nach einem der Ansprüche 1 bis 38, **dadurch gekennzeichnet, dass** es einen Schritt zum Begrenzen der Bewegungen der Vorrichtung zum Erfassen der Anwesenheit aufweist, der selbst die folgenden Schritte umfasst:

    - Initialisierung der besagten Vorrichtung zum Erfassen der Anwesenheit;
    - Zählen der Zahl N von Bewegungen der besagten Vorrichtung zum Erfassen der Anwesenheit von dem vorgegebenen festen Ort zu einem anderen vorgegebenen festen Ort durch einen Benutzer;
    - wenn die Zahl der Bewegungen N größer als eine vorgegebene oder adaptiv bestimmte maximale Zahl von Bewegungen $N_{max}$ wird, wobei $N_{max} \geq 0$ einen Vorgang auslöst, der das Funktionieren im so genannten "feste Station" Zustand untersagt und/oder einen Alarm an ein Verwaltungssystem sendet und/oder dem Benutzer die besagte Überschreitung meldet.

41. Verfahren nach Anspruch 40, **dadurch gekennzeichnet, dass** das Funktionsverbot für die Station im "feste Station" Zustand durch mindestens eine der Operationen der folgenden Gruppe aufgehoben werden kann:

    - Einführung eines Freigabecodes in der Station und/oder in der Vorrichtung zum Erfassen der Anwesenheit durch den Benutzer;
    - Senden durch das Funkkommunikationsnetz, zu welchem die Station den Zugang hat, einer Meldung an die Station und/oder an die Vorrichtung zum Erfassen der Anwesenheit über die Station.

42. Verfahren nach Anspruch 41, **dadurch gekennzeichnet, dass** der Freigabecode bei jeder Freigabe variiert und sich entweder einem vorgegebenen Algorithmus oder einer vorgegebenen Liste von Freigabecodewerten anpasst, wobei der besagte Algorithmus und/oder die besagte Liste für jede Vorrichtung zum Erfassen der Anwesenheit verschieden ist.

43. Verfahren nach einem der Ansprüche 40 bis 42, **dadurch gekennzeichnet, dass** das besagte Vorgehen, welches die Funktion im so genannten "feste Station" Zustand untersagt, darin besteht, eine erste Verzögerung einzusetzen, die den Übergang der Station in den Zustand "feste Station" während einer ersten vorgegebenen Zeitdauer untersagt, nach dem Erfassen der Tatsache, dass die Zahl N von Bewegungen größer als die maximale Zahl von Bewegungen $N_{max}$ geworden ist.

44. Verfahren nach Anspruch 43, **dadurch gekennzeichnet, dass** die erste Dauer der ersten Verzögerung in etwa 24 Stunden beträgt.

45. Verfahren nach einem der Ansprüche 40 bis 44, **dadurch gekennzeichnet, dass** die erwähnten Initialisierungen folgendermaßen ablaufen:

    - periodisch
    - und/oder beim Empfang einer Meldung aus dem Funkkommunikationsnetz, zu dem die Station den Zugang hat
    - und/oder nach einer vorgegebenen Initialisierungsstrategie
    - und/oder nach jedem (erneuten) Anschluss der Vorrichtung zum Erfassen der Anwesenheit an das Stromnetz und/oder an das Telefonwählnetz.

46. Verfahren nach einem der Ansprüche 40 bis 45, **dadurch gekennzeichnet, dass** der Schritt zum Zählen der Bewegungszahl N darin besteht, nach einem ersten Anschluss und einer assoziierten Initialisierung die Wiederanschlusszahl der besagten Vorrichtung zum Erfassen der Anwesenheit an das Stromnetz und/oder an das Telefonnetz zu zählen.

47. Verfahren nach einem der Ansprüche 40 bis 45, **dadurch gekennzeichnet, dass** beim Funktionieren nach einer gegebenen Initialisierung der Vorrichtung zum Erfassen der Anwesenheit diese Vorrichtung die Entfernung schätzt, die sie seit der gegebenen Initialisierung zurückgelegt hat, und

dass der Schritt zum Zählen der Bewegungszahl N der Vorrichtung zum Erfassen der Anwesenheit darin besteht zu zählen, wie oft die geschätzte Entfernung eine maximale Entfernung überschritten hat.

48. Verfahren nach Anspruch 47, **dadurch gekennzeichnet, dass** die Schätzung der durch sie zurückgelegten Entfernung durch die Vorrichtung zum Erfassen der Anwesenheit mit Hilfe von mindestens einem Bewegungsfühler und/oder Geschwindigkeitsfühler und/oder Beschleunigungsfühler und/oder mindestens einem Neigungsmesser erfolgt.

49. Verfahren nach Anspruch 48, **dadurch gekennzeichnet, dass** die Schätzung der durch sie zurückgelegten Entfernung durch die Vorrichtung zum Erfassen der Anwesenheit mittels einer Funktion elementarer Ereignisse berechnet wird, die von dem mindestens einen Bewegungs- und/oder Geschwindigkeits- und/oder Beschleunigungsfühler und/oder dem mindestens einen Neigungsmesser erzeugt wird, und

**dadurch**, dass die Zahl der Bewegungen um eine Einheit erhöht wird, wenn der Wert der Funktion elementarer Ereignisse einen vorgegebenen Schwellenwert übersteigt.

50. Verfahren nach Anspruch 49, **dadurch gekennzeichnet, dass** das Herunterladen des Schwellenwertes durch Senden über die Station einer Meldung an die Vorrichtung zum Erfassen der Anwesenheit durch das Funkkommunikationsnetz, zu dem die Station den Zugang hat, erfolgt.

51. Verfahren nach einem der Ansprüche 40 bis 45, **dadurch gekennzeichnet, dass** die Vorrichtung zum Erfassen der Anwesenheit an das Telefonwählnetz angeschlossen ist, und

**dadurch**, dass bei jeder Initialisierung der besagten Vorrichtung zum Erfassen der Anwesenheit diese Vorrichtung ihr Identifizierungskennzeichen für die feste Leitung über das Telefonwählnetz entweder an einen ersten Server oder an die Station, direkt oder über einen zweiten Server, mitteilt, und

**dadurch**, dass der Schritt zum Zählen der Zahl N der Bewegungen der Vorrichtung zum Erfassen der Anwesenheit darin besteht, die Zahl der verschiedenen von der Vorrichtung zum Erfassen der Anwesenheit benutzten Identifizierungskennzeichen für die feste Leitung bei den aufeinander folgenden Initialisierungen zu zählen.

52. Verfahren nach Anspruch 51, **dadurch gekennzeichnet, dass** bei jeder Initialisierung der Vorrichtung zum Erfassen der Anwesenheit diese Vorrichtung darüber hinaus ihr Vorrichtungs-Identifizierungskennzeichen an die Station über die besagte Verbindung mitteilt, wobei die Station die Assoziierung zwischen diesem Identifizierungskennzeichen für die feste Leitung und dem Vorrichtungs-Identifizierungskennzeichen speichert, und

**dadurch**, dass beim Funktionieren nach einer gegebenen Initialisierung der Vorrichtung zum Erfassen der Anwesenheit bei jedem Verbindungsaufbau die Station von der besagten Vorrichtung zum Erfassen der Anwesenheit das Vorrichtungs-Identifizierungskennzeichen erhält, und dass sie prüft, dass es mit dem bei der gegebenen Initialisierung gespeicherten und mit dem Leitungsidentifizierungskennzeichen assoziierten Vorrichtungs-Identifizierungskennzeichen identisch ist.

53. Verfahren nach einem der Ansprüche 40 bis 45, **dadurch gekennzeichnet, dass** bei jeder Initialisierung der Vorrichtung zum Erfassen der Anwesenheit die Station ihre Position in dem von ihr erfassten Zellenraum erfasst und speichert, und

**dadurch**, dass beim Betrieb die Station nach jedem Aufbau einer Verbindung zu der Vorrichtung zum Erfassen der Anwesenheit die Entfernung zwischen ihrer aktuellen Position und entweder ihrer letzten gespeicherten Position oder dem Baryzentrum oder einer anderen Funktion von mindestens einigen vorher erfassten und gespeicherten letzten Positionen, berechnet, und

**dadurch**, dass der Schritt zum Zählen der Zahl N von Bewegungen der Vorrichtung zum Erfassen der Anwesenheit darin besteht zu zählen, wie oft die besagte Entfernung eine maximale Entfernung überschreitet.

54. Verfahren nach einem der Ansprüche 40 bis 45, **dadurch gekennzeichnet, dass** bei den aufeinander folgenden Verbindungsaufbauvorgängen zwischen der Vorrichtung zum Erfassen der Anwesenheit und der Station die Station die festgestellten und/oder von der Station für die Anrufe genutzten Zellenidentifizierungskennzeichen erfasst, und

**dadurch**, dass der Zählschritt darin besteht, die Zahl N der Bewegungen der Vorrichtung zum Erfassen der Anwesenheit um eine Einheit zu erhöhen, wenn die kumulierte Zahl verschiedener Identifizierungskennzeichen der von der Station während der aufeinander folgenden Kommunikationsaufbauvorgänge festgestellten und/oder benutzten Zellen einen vorgegebenen Schwellenwert überschreitet.

55. Verfahren nach Anspruch 54, **dadurch gekennzeichnet, dass** das Herunterladen des Schwellenwertes durch Senden über die Station einer Meldung an die Vorrichtung zum Erfassen der Anwesenheit durch das Funkkommunikationsnetz, zu dem die Station den Zugang hat, erfolgt.

56. Verfahren nach einem der Ansprüche 40 bis 45, **dadurch gekennzeichnet, dass** bei den aufeinander folgenden Verbindungsaufbauvorgängen zwischen der Vorrichtung zum Erfassen der Anwesenheit und der Station die Station die festgestellten und/oder von der Station für die Anrufe genutzten Zellenidentifizierungskennzeichen erfasst, und **dadurch**, dass der Zählschritt darin besteht, die Zahl N der Bewegungen der Vorrichtung zum Erfassen der Anwesenheit um eine Einheit zu erhöhen, wenn die Identifizierungskennzeichen der von der Station während der aufeinander folgenden Kommunikationsaufbauvorgänge festgestellten und/oder benutzten Zellen nicht zu einer vorgegebenen Liste zugelassener Zellen gehören.

57. Verfahren nach einem der Ansprüche 1 bis 56, **dadurch gekennzeichnet, dass** nach dem besagten Verbindungsaufbau zwischen der Station mit der Vorrichtung zum Erfassen der Anwesenheit das Verfahren die folgenden Schritte umfasst:

- Deaktivierung von mindestens einer Funktion der Station, und
- Kopplung über die Vorrichtung zum Erfassen der Anwesenheit der Station mit der Benutzung einer festen Ausrüstung, die wenigstens die besagte mindestens eine deaktivierte Funktion bietet,

so dass in dem "feste Station" Zustand, die Station nur mit der besagten festen Ausrüstung benutzt werden kann.

58. Verfahren nach Anspruch 57, **dadurch gekennzeichnet, dass** die wenigstens eine deaktivierte Funktion der Station zu der folgendes umfassenden Gruppe gehört: der Lautsprecher, das Mikrophon sowie die Empfangsmittel für die Anrufe.

59. Verfahren nach einem der Ansprüche 1 bis 58, **dadurch gekennzeichnet, dass** eine zweite Verzögerung das Aufrechterhalten des Betriebes der Vorrichtung zum Erfassen der Anwesenheit während einer zweiten vorgegebenen Zeitdauer ermöglicht, nachdem sie vom Stromnetz und/oder von einem Telefonnetz getrennt wurde, um Anschlussunterbrechungen zuzulassen, deren Dauer kleiner oder gleich dieser besagten zweiten Zeitdauer ist.

60. Verfahren nach Anspruch 59, **dadurch gekennzeichnet, dass** die erwähnte zweite Zeitdauer der zweiten Verzögerung in etwa 15 Minuten beträgt.

61. Verfahren nach einem der Ansprüche 43 oder 59, **dadurch gekennzeichnet, dass** zumindest eine der erwähnten ersten und zweiten Zeitdauer sich dynamisch anpassen lässt als Funktion von mindestens einem vorgegebenen Anpassungsparameter.

62. Verfahren nach einem der Ansprüche 43 oder 59, **dadurch gekennzeichnet, dass** die erwähnte erste Verzögerung und/oder die erwähnte zweite Verzögerung in der Vorrichtung zum Erfassen der Anwesenheit eingesetzt wird (werden).

63. Verfahren nach einem der Ansprüche 1 bis 62, **dadurch gekennzeichnet, dass** die Vorrichtung zum Erfassen der Anwesenheit ferner die Funktion eines Ladesockels übernimmt, der das Aufladen der in der Station befindlichen Batterie ermöglicht, wenn die Station mit dieser Vorrichtung zum Erfassen der Anwesenheit verbunden wird.

64. Verfahren nach einem der Ansprüche 1 bis 63, **dadurch gekennzeichnet, dass** die mindestens eine Vorrichtung zum Erfassen der Anwesenheit eventuell gleichzeitig mit mindestens zwei Stationen verbunden werden kann (können), um das Erfassen der Anwesenheit einer jeden dieser mindestens zwei Stationen innerhalb des gegebenen festen Ortes zu ermöglichen.

65. Verfahren nach einem der Ansprüche 1 bis 64, **dadurch gekennzeichnet, dass** die mindestens eine Vorrichtung zum Erfassen der Anwesenheit und die Station einseitige oder gegenseitige Identifizierungs- und/oder Authentifizierungsmechanismen einsetzen.

**66.** Verfahren nach einem der Ansprüche 1 bis 65, **dadurch gekennzeichnet, dass** nach der Verbindung der Station mit der Vorrichtung zum Erfassen der Anwesenheit das Verfahren einen Schritt zum gesicherten Herunterladen einer vorübergehenden Netzidentifizierung der Station sowie zum eventuellen Herunterladen mindestens eines assoziierten Attributs von der Vorrichtung zum Erfassen der Anwesenheit zur Station aufweist,

so dass die Station ausschließlich während der Dauer dieser Verbindung in dem so genannten "feste Station" Zustand und mit der heruntergeladenen vorübergehenden Netzidentifizierung und eventuell mit dem mindestens einen assoziierten Attribut funktioniert.

**67.** Verfahren nach einem der Ansprüche 1 bis 66, **dadurch gekennzeichnet, dass** während ihrer Verbindung die Station und die Vorrichtung zum Erfassen der Anwesenheit zusammen gegenüber dem Funkkommunikationsnetz, mit dem die Station verbunden ist, ein Relais für mindestens eine mit einer Telefonfunktion ausgestattete Ausrüstung bilden, die mit der Vorrichtung zum Erfassen der Anwesenheit verbunden ist.

**68.** Funktelefon, das auch Station genannt wird und eine Mehrzahl von Verwendungsmöglichkeiten innerhalb eines selben Funkkommunikationsnetzes bietet, von der Art, wie man sie in einem Funkkommunikationssystem findet, **dadurch gekennzeichnet, dass** die Station mindestens die zwei nachfolgenden Funktionszustände annehmen kann, die jeweils einen Parameter für einen anderen Zustand definieren, wobei diese Parameter für einen anderen Zustand, die jeweils eines der Funktionszustände definieren, Netzidentifizierungskennzeichen der Station sind und implizit Zustandsübertragungsparameter zu einem Funkkommunikationsnetz des besagten Funkkommunikationssystems bilden:

- ein "mobile Station" genannter Zustand, der mit einer geographischen Mobilitätssituation der Station zusammenhängt;
- ein "feste Station" genannter Zustand, der mit einer Situation der Station zusammenhängt, bei der diese geographisch innerhalb eines festen, vorgegebenen, räumlich eng eingeschränkten Ortes unbeweglich ist;

wobei die Station unabhängig von ihrem Zustand innerhalb des Funkkommunikationsnetzes arbeitet, und dass die Station folgendes umfasst:

- Mittel zum Ändern des Zustandes der Station, entweder automatisch und/oder auf Befehl eines Benutzers, als Funktion der geographischen Lage der Station;
- Mittel zum Vergleichen der Position der Station im Verhältnis zu dem besagten festen, vorgegebenen Ort, um jeden von den Mitteln zum Ändern ausgeführten Änderungsvorgang eines Zustandes in Realzeit oder im Nachhinein auszulösen oder zu validieren, wenn sich die Station tatsächlich von innerhalb nach außerhalb des festen, vorgegebenen Ortes bewegt, oder wenn umgekehrt die Mittel zum Vergleichen der Position der Station im Verhältnis zum festen, vorgegebenen Ort, über Mittel zum Erfassen der Anwesenheit der Station im Inneren des festen, vorgegebenen Ortes verfügen, durch Verbindung der Station mit mindestens einer Vorrichtung zum Erfassen der Anwesenheit (DDP) der Station (MS) innerhalb des festen, vorgegebenen Ortes (LF), nach einer Kommunikationstechnik mit Kontakt, die demnach eine Reichweite von Null aufweist oder ohne Kontakt, wobei die Reichweite kleiner als ca. 50 m ist, wobei die geographische Lage (C) und die Flächenausdehnung (E) des festen, vorgegebenen Ortes (LF) jeweils definiert werden durch:

- die geographische Lage der mindestens einen Vorrichtung zum Erfassen der Anwesenheit und
- die Reichweite der besagten Kommunikationstechnik zwischen der mindestens einen Vorrichtung zum Erfassen der Anwesenheit und der Station,
während die Station ein Terminal und ein Teilnehmeridentifizierungsmodul aufweist, so dass die besagte Verbindung der Station mit der Vorrichtung zum Erfassen der Anwesenheit durch Verbindung des Teilnehmeridentifizierungsmoduls mit der besagten Vorrichtung zum Erfassen der Anwesenheit erfolgt, so dass ein Dialog zwischen der Vorrichtung zum Erfassen der Anwesenheit, dem Teilnehmeridentifizierungsmodul und dem Terminal ermöglicht wird.

**69.** Teilnehmeridentifizierungsmodul, von der Art, die mit einem Terminal innerhalb eines auch Station genanten Funktelefons zusammenwirken soll, das eine Mehrzahl von Verwendungsmöglichkeiten innerhalb eines selben Funkkommunikationsnetzes bietet, wobei die Station mindestens die zwei nachfolgenden Funktionszustände annehmen kann, die jeweils einen Parameter für einen anderen Zustand definieren, wobei diese Parameter für einen anderen Zustand, die jeweils einen der Funktionszustände definieren, Netzidentifizierungskennzeichen der Station sind und implizit Zustandsübertragungsparameter zu einem Funkkommunikationsnetz des besagten Funkkommunikationssystem bilden:

- ein "mobile Station" genannter Zustand, der mit einer geographischen Mobilitätssituation der Station zusammenhängt;
- ein "feste Station" genannter Zustand, der mit einer Situation der Station zusammenhängt, bei der diese geographisch innerhalb eines festen, vorgegebenen, räumlich eng eingeschränkten Ortes unbeweglich ist;

wobei die Station unabhängig von ihrem Zustand innerhalb des Funkkommunikationsnetzes arbeitet,
**dadurch gekennzeichnet, dass** das Teilnehmeridentifizierungsmodul folgendes umfasst:

- Mittel zum Ändern des Zustandes der Station, entweder automatisch und/oder auf Befehl eines Benutzers, als Funktion der geographischen Lage der Station;
- Mittel zum Vergleichen der Position der Station im Verhältnis zu dem besagten festen, vorgegebenen Ort, um jedes von den Mitteln zum Ändern ausgeführte Ändern eines Zustandes in Realzeit oder im Nachhinein auszulösen oder zu validieren, wenn sich die Station tatsächlich von innerhalb nach außen des festen, vorgegebenen Ortes bewegt oder wenn umgekehrt die Mittel zum Vergleichen der Position der Station im Verhältnis zum festen, vorgegebenen Ort über Mittel zum Erfassen der Anwesenheit der Station im Inneren des festen, vorgegebenen Ortes verfügen, durch Verbindung der Station mit mindestens einer Vorrichtung zum Erfassen der Anwesenheit (DDP) der Station (MS) innerhalb des festen, vorgegebenen Ortes (LF), nach einer Kommunikationstechnik mit Kontakt, die demnach eine Reichweite von Null aufweist oder ohne Kontakt, wobei die Reichweite kleiner als ca. 50 m ist, wobei die geographische Lage (C) und die Flächenausdehnung (E) des festen, vorgegebenen Ortes (LF) jeweils definiert werden durch:

- die geographische Lage der mindestens einen Vorrichtung zum Erfassen der Anwesenheit und
- die Reichweite der besagten Kommunikationstechnik zwischen der mindestens einen Vorrichtung zum Erfassen der Anwesenheit und der Station,

wobei die Verbindung der Station mit der Vorrichtung zum Erfassen der Anwesenheit durch Verbindung des besagten Teilnehmeridentifizierungsmoduls mit der besagten Vorrichtung zum Erfassen der Anwesenheit erfolgt, so dass ein Dialog zwischen der Vorrichtung zum Erfassen der Anwesenheit, dem Teilnehmeridentifizierungsmodul und dem Terminal ermöglicht wird.

Fig. 1

Fig. 2

Etat "station fixe"

MS (re)passe
à l'interieur
du lieu fixe

MS sort du
lieu fixe

Etat "station mobile"

Fig. 3

Etat "station fixe"

Mise en contact ou
quasi-contact de la
MS avec le DDP

Nouvelle mise
en contact ou
quasi-contact
de la MS
avec le DDP

Perte du contact ou
quasi-contact entre
la MS et le DDP

Etat "station mobile"

Etat "station fixe
logique"

Réalisation d'un
évènement prédéterminé

Fig. 4

Fig. 5

Fig. 6

Fig. 7

DDP

SIM

TERMINAL

Fig. 8

DDP

SIM

TERMINAL

Fig. 9

*Application* — DDP — QC — MS — SIM — *Terminal* — Réseau radiomobile — *Application*

(dialogue)

Fig. 10

Fig. 11

Poste fixe

DDP

Interface ligne

Voix entrante

Voix sortante

Terminal

Haut-parleur

Microphone

*Contact actif*

Fig. 12

MS₂

MS₁

MS₃

DDP

E'

Fig. 13

Immobilisé (DDP)

Immobilisateur    161     162     164

Détecteur de déplacement ↔ Mémoire ←→ Interface mémoire-puce ←→ Puce

160      163     **Fig. 14**

Immobilisé (DDP)

Immobilisateur    171     174     172

Détecteur d'évènements élémentaires ↔ Puce ↔ Mémoire d'évènements élémentaires

Immobilisé

170      173     **Fig. 15**

EXEMPLE AVEC PILE

Diagramme d'état de l'immobilisé

Immobilisé débranché

Immobilisé branché . fonctionnement normal

Pile présente . fonctionnement normal du dispositif (immobilisateur + puce )

Pile absente . puce bloquée

**Fig. 16**